(19) **Europäisches Patentamt / European Patent Office / Office européen des brevets**

(11) **EP 2 073 587 B1**

(12) **EUROPEAN PATENT SPECIFICATION**

(45) Date of publication and mention
of the grant of the patent:
**22.05.2013 Bulletin 2013/21**

(51) Int Cl.:
*H04W 16/10* (2009.01)　　　*H04W 16/14* (2009.01)

(21) Application number: **08171684.7**

(22) Date of filing: **15.12.2008**

(54) **Spectrum allocation in wireless communication systems**

Spektrumszuweisung in drahtlosen Kommunikationssystemen

Attribution de spectre dans des systèmes de communications sans fil

(84) Designated Contracting States:
**DE FR GB**

(30) Priority: **21.12.2007 GB 0725052**

(43) Date of publication of application:
**24.06.2009 Bulletin 2009/26**

(73) Proprietor: **Fujitsu Limited**
**Kawasaki-shi, Kanagawa 211-8588 (JP)**

(72) Inventor: **Abedi, Saied**
**Reading, Berkshire RG1 4LY (GB)**

(74) Representative: **Lewin, David Nicholas**
**Haseltine Lake LLP**
**Lincoln House, 5th Floor**
**300 High Holborn**
**London WC1V 7JH (GB)**

(56) References cited:
**EP-A- 1 257 092**　　　**EP-A- 1 732 338**
**WO-A-2007/005181**

- **LILI CAO ET AL: "Distributed spectrum allocation via local bargaining" SENSOR AND AD HOC COMMUNICATIONS AND NETWORKS, 2005. IEEE SECON 2005. 2005 SECOND ANNUAL IEEE COMMUNICATIONS SOCIETY CONFERENCE ON SANTA CLARA, CA, USA 26-29 SEPT., 2005, PISCATAWAY, NJ, USA,IEEE, 26 September 2005 (2005-09-26), pages 475-486, XP010862024 ISBN: 978-0-7803-9011-9**
- **J-P KERMOAL ET AL: "Spectrum Sharing for WINNER Radio Access Networks" COGNITIVE RADIO ORIENTED WIRELESS NETWORKS AND COMMUNICATIONS, 2006. 1 ST INTERNATIONAL CONFERENCE ON, IEEE, PI, 1 June 2006 (2006-06-01), pages 1-5, XP031091953 ISBN: 978-1-4244-0380-6**
- **JANE Y YU AND PETER H J CHONG: "A Survey of Clustering Schemes for Mobile Ad Hoc Networks", IEEE COMMUNICATIONS SURVEYS, IEEE, NEW YORK, NY, US, vol. 7, no. 1, 1 March 2005 (2005-03-01), pages 32-48, XP002535914, ISSN: 1553-877X, DOI: DOI:10.1109/COMST. 2005.1423333**

**Description**

The present invention relates to spectrum assignment, in particular to spectrum-assignment methods for use in wireless communication systems. Wireless communication systems typically comprise communication apparatuses operable to communicate (at the same time) using assigned portions of communication spectrum, the communication spectrum effectively being shared between the apparatuses. The present invention therefore extends to spectrum-assignment methods and to systems and communication apparatuses adapted to carry out part or all of such methods.

Taking radio communication systems as a specific example, communication apparatuses of the system generally communicate (with one another, and/or with other communication apparatuses) using radio transmissions that share the same transmission medium (commonly, the surrounding atmosphere). Although such radio transmissions are normally configured to occupy allocated or assigned frequency bands (or chunks, or blocks), the radio-frequency spectrum is nevertheless shared by such transmissions.

Radio transmissions occupying the same frequency allocations (i.e. the same parts of the shared communication spectrum) can interfere with one another. The level of interference will depend on a number of factors, for example on the power levels of the respective transmissions, and on the relative locations of the transmitters. In fact, many factors have impact on interference.

Considering a mobile telecommunications system comprising base stations (BSs) as an example, these factors include antenna orientation in the BSs, transmission schemes employed (say FDD or TDD) by the BSs, the nature of sectorisation within the cells of the BSs, the power control schemes employed, the handover schemes employed, the nature of traffic being handled by the BSs at each point in time, and the number of active subscribers (e.g. mobile stations, or MSs) assigned to each BS at each point in time. The smart antenna scheme employed in the BSs may also affect interference. Considering the impact of transmission power on interference, it is possible that a BS may be assigned a number of separate spectrum sub-chunks or sub-bands and that it may use different transmission power levels per sub-chunk.

These different power levels can affect interference. Another important factor is the interference leakage between two adjacent sub-bands. Although in telecommunications systems the practical solution is to introduce guard bands to reduce such leakage, the arrangements of sub-bands assigned to a BS can nevertheless affect interference. Other important factors regarding interference may be, for example, surrounding atmospheric conditions and the presence or absence of obstructions to signal propagation. The effect of interference can be signal degradation and an overall drop in system performance as a whole, as compared to that in an "interference-free" system. It is therefore desirable to manage resource allocation or assignment in wireless communication systems.

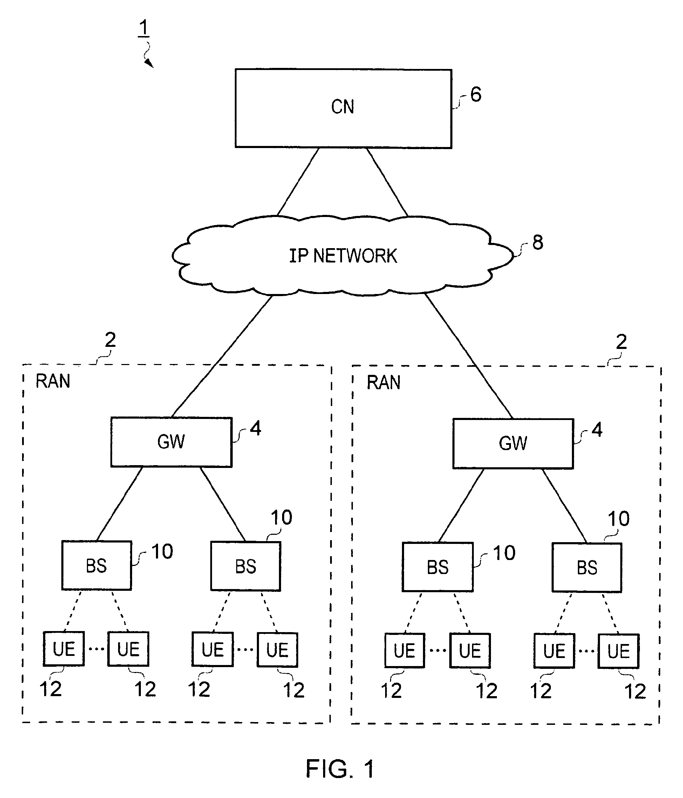

Typically, mobile communication systems, being a type of radio communication system, are implemented as a hierarchical network of apparatuses for the benefit of efficient and scalable system organisation. Figure 1 is a schematic diagram of an example mobile communication system or mobile communication network 1 useful for appreciating one type of system in which the present invention may be implemented. The network 1 is divided into a number of Radio Access Networks (RANs) 2 which each comprise a Gateway (GW) 4 for the purpose of accessing the RAN 2 from a higher Core Network (CN) 6, typically via an IP network 8. Each RAN 2 typically comprises one or more Base Stations (BSs) 10 connected to the GW 4. Each such BS 10 may transmit (and receive) radio signals to (and from) one or more User Equipments (UEs), within its geographical area of coverage (often referred to as a "cell"). UEs may be referred to as user terminals (UTs), terminal equipments (TEs) or Mobile Stations (MSs).

Communications between the CN 6, GWs 4 and BSs 10 may be across wired communication links (e.g. via fiber-optic links) or across wireless communication links (e.g. across radio or microwave links). Communications between the BSs 10 and the UEs 12 are typically across wireless links, generally employing radio transmissions.

The CN 6 may be distributed, for example across the IP network 8. The IP network 8 may, for example, include the Internet. Although only two RANs 2 are shown in Figure 1, the network 1 may include any number of such RANs 2. Similarly, each RAN may have any number of GWs 4, BSs 10 and UEs 12. The UEs 12 may be mobile and move from the cell of one BS 10 to that of another BS 10, and even from one RAN 2 to another RAN 2. The BSs 10 may be dedicated to a particular RAN 2, or may be shared between RANs 2 on a temporary or non-temporary basis. One BS 10 may for example serve two RANs 2 at the same time. Although the RANs 2 in Figure 1 are made up of the same component apparatuses, they may of course be different from one another. Typically, different RANs 2 may be operated by different mobile-network operators. Different RANs 2 and BSs 10 may have separate geographical areas of coverage, or may have partially or fully-overlapping areas of coverage. For example, one RAN 2 may effectively be co-located with another RAN 2.

The sharing of radio frequency spectrum in such networks is of particular concern, given the intense proliferation of UE usage in recent years, and the expected increase in the number of UEs in circulation in the near future. In this respect, the requirements of radio systems are changing. While some systems and mobile operators are starving for more spectrum resources, most of the existing radio spectrum resources remain under-utilised or unused most of the time. In the design of wireless radio infrastructure, it is therefore desirable to attempt to share the already existing spectrum in a way which would ultimately lead to better utilisation, thereby solving the problem of poor utilisation of spectrum in the presence of an increasing demand for wireless connectivity.

LILI CAO ET AL: "Distributed spectrum allocation via local bargaining" SENSOR AND AD HOC COMMUNICATIONS AND NETWORKS, 2005. IEEE SECON 2005. 2005 SECOND ANNUAL IEEE COMMUNICATIONS SOCIETY CONFERENCE ON SANTA CLARA, CA, USA 26-29 SEPT., 2005, PISCATAWAY, NJ, USA, IEEE, 26 September 2005 (2005-09-26), pages 475-486, XP010862024, ISBN: 978-0-7803-9011-9 discloses an adaptive and distributed approach to spectrum allocation in mobile and ad-hoc networks. A local bargaining approach is proposed where users affected by a mobility event self-organise into bargaining groups and adapt their spectrum assignment to a approximate a new optimal assignment.

European patent publication EP1732338A1 discloses a frequency channel assignment system which enables adaptive overlapping use of the same frequency band in a plurality of radio communications systems. The frequency channel assignment system disclosed therein includes radio communications systems which use a common frequency band, and controllers.

European patent publication EP1257092A1 proposes an enhancement to the traditional dynamic frequency selection (DFS) algorithms used in wireless LANs by adding a channel swapping mechanism. In the addition described, two access points can decide to swap channels instead of one access point switching to another channel. A requesting access point sends swap requests to other access points to sense the willingness of other access points to swap channels.

According to a first aspect of the present invention, there is provided a spectrum-assignment method for use in a wireless communication system, wherein the system comprises at least a group of communication apparatuses, and wherein each such communication apparatus has a portion of communication spectrum pre-assigned to it for communication, and wherein one of the communication apparatuses of the group is a temporary leader of the group, according to the subject-matter of claim 1.

According to invention embodiments, spectrum reassignment is carried out dynamically and in dependence upon both spectrum requirements of the communication apparatuses and under control of the leader of a group of the communication apparatuses. Such reassignment is well adapted to modern system requirements and provides a simple framework for practical spectrum reassignment.

The term dynamic implies at the very least that the method is carried out during run-time of a system and without manual system resetting. The method can take place automatically at appropriate time intervals. More preferably, the method takes place as needed rather than at predetermined or fixed intervals. In either case, the usual time scale for the re-assignment control can be short term, for example every few seconds. However, it may also be long term, for example every couple of minutes, if this time interval for reassessment is suitable for the system in question.

The term "pre-assigned" includes a situation in which the communication apparatus to which spectrum has been pre-assigned is licensed for operation within that spectrum band.

By "spectrum" there may be meant radio frequencies or any other range of frequencies of electromagnetic radiation suitable for communication. For example, the wireless communication system may be a radio access network (RAN) operating within the radio frequency range of the electromagnetic spectrum. Additionally or alternatively, the wireless communications systems may operate within a microwave frequency range, for example.

The term "wireless communication system" may relate to a wireless access network, for example a radio access network (RAN), including all of the elements of the network, for example base stations. It may relate to an RFID tag reader, or to a group of such readers forming a network, possibly including other equipment, e.g. control circuitry.

Controlling the re-assignment may include any suitable control steps and preferably comprises at least determining the allowability of such reassignments.

It may be advantageous if the leader is a permanent leader of the group and thus predetermined. Alternatively, the leader may be a temporary leader and the method may then comprise selecting one of the communication apparatuses of the group to be that temporary leader.

In such a cases the method may further comprise changing the leader of the group from time to time.

To provide a suitable process, the reassignments may be ordered in a series of reassignments, each such reassignment being between the leader of the group and another communication apparatus of the group.

It may be that all the communication apparatuses of the group take part in spectrum assignment. If only a subset take part, a method may comprise deciding which communication apparatus is desired to take part in the reassignments. Such a decision can be based on many factors such as on workload of and/or interference suffered by the apparatuses concerned.

The decision as to which communication apparatuses take part may be taken within the leader of the group or elsewhere. For simple control of the method, it can be advantageous if the decision is taken within the leader.

The series of reassignments may be controlled in a predetermined order, for example based on historic reassignments (for instance to avoid the same communication apparatus being last in the series of reassignments too often). As will be appreciated, if the reassignments are in a series and each reassignment is between the leader of the group and another communication apparatus, the communication apparatuses lower down in the series benefit from much less flexibility in terms of reassignment possibilities. Moreover, the leader is likely to gain the greatest benefit from the reassignments. Hence, if there is no predetermined leader, it can be advantageous for the leadership to be moved around to avoid benefiting one communication apparatus over the others.

In preferred embodiments, the reassignments can be controlled in dependence upon at least one indicator indicative of interference expected to result from such reassignments.

In preferred embodiments, reassignment is carried out between a first communication apparatus and a second communication apparatus, one of these being the leader and control is carried out exclusively within the leader. Alternatively, control can be carried out collectively between the first and second apparatuses concerned if this is appropriate for the system in question.

In either case, the control can be carried out based on negotiations between first and second communication apparatuses.

Various indicators indicative of expected interference resulting from re-assignments (and optionally of current interference where necessary) can be appropriate. For example, one said indicator can be based on interference expected to be suffered by one or both of the first and second communication apparatuses. Another such indicator can reflect inflicted interference. Which indicator or indicators to select can depend on the ultimate goal of the re-assignment method, for example whether the goal is maximisation of the benefits for one of the apparatuses or the best situation for both apparatuses.

In preferred embodiments, the method can include, for each reassignment, selecting a spectrum configuration to be adopted in dependence upon the or at least one said indicator.

In preferred embodiments, the method includes identifying a plurality of candidate configurations for such selection, and selecting the configuration to be adopted from the plurality of candidate configurations. Identifying this plurality of candidate configurations allows simplification of the selection process from a large number of alternative configurations. For example candidate configurations may be limited to those that are feasible for the system or deemed appropriate for the system.

The candidate configurations can be found by identifying the plurality of candidate configurations by identifying a first such candidate configuration and identifying the further candidate configuration(s) by carrying out an iterative process on the first candidate configuration.

Selecting can select the first best candidate configuration or consider all of the candidate configurations and selecting the overall best configuration.

Selection of the candidate configuration may be carried out in the first and/or the second communication apparatus, and in the assignee and/or the assignor of the spectrum.

The selection can be based on the expected change in bandwidth for the assignee as well as the interference expected to be suffered by the assignee and or inflicted by the assignee. In a practical realisation of this preferred embodiment, the interference expected to be suffered and inflicted is with respect to the assignor.

Further, the selection can additionally or alternatively be based on the effective change in bandwidth for the assignor and/or the interference expected to be suffered and/or inflicted by the assignor. Again these measures can be implemented practically speaking with respect to the assignee.

Advantageously, the re-assignments are initially prospective assignments and the control includes considering these re-assignments and deciding whether or not they should be approved. For example, for each prospective re-assignment the method can comprise selecting a spectrum configuration to be adopted and deciding whether or not to adopt it. This is likely to be in dependence upon the at least one said indicator and/or by determining whether the selected configuration meets a predetermined requirement.

This decision can be carried out in the assignee of spectrum or in the assignor of spectrum for that re-assignment. This approval decision can be based on the same decision factors for those listed for the candidate configuration selection, but it may be that they are rated differently if the approval decision is on behalf of a different apparatus than the apparatus carrying out candidate configuration selection.

As mentioned above, the spectrum assignment can be at appropriate, fixed or predetermined time intervals or occur as required. In preferred embodiments, the spectrum assignment is carried out in response to a trigger, for example to a request for spectrum from one of the communication apparatuses or an offer of spectrum. In other cases the trigger may be an overload in data or an excessive interference level.

The interference indicator mentioned previously may be obtained by carrying out a measurement or an estimation between the first and second communication apparatuses or by any other suitable means. The indicator may be obtained during a configuration phase or during an operation phase. Where candidate spectrum configurations are considered, the method can comprise obtaining the indicators in respect of each said candidate spectrum configuration. In this case, one interference indicator might be obtained by measurement and the others by estimation based on the initial measurement.

The system can comprise one or more groups. In preferred embodiments, the system comprises at least two groups and the method comprises carrying out the control for one group at a time in a predetermined order.

The reassignments in any of the invention embodiments can comprise external reassignments between the leader of the group and another communication apparatus which is not part of the group. Alternatively, the assignments may be external, between the leader and a communication apparatus within the group.

Where the system comprises at least two groups, and there are two external reassignments, the method can comprise carrying out the control in respect of different leaders in a particular sequence. The order followed within the sequence can depend for example on a history of at least one previous such sequence for reasons already highlighted above.

The spectrum assignment method of invention embodiments can comprise recognising a requirement for such external reassignments and initiating such a sequence. Here, there can be a check for whether one of the external reassignment is appropriate in the leader of the group concerned and a decision as to whether or not there should be approval of that reassignment. Such a decision can be taken on the basis of any suitable factors, preferably taking into account the expected effect of the re-assignment in the communication apparatuses of the group, such as measurements regarding the external reassignment from each of the other communication apparatuses of the group concerned.

In a second aspect of the present invention there is provided a wireless communication system according to the subject-matter of independent claim 9.

The control means defined in the second aspect may be configured as control circuitry. Such circuitry can include one or more processors, memories and BUS lines.

The system and apparatus of the second aspects may comprise equivalents of any of the method features of the first aspect.

Reference will now be made, by way of example, to the accompanying drawings, of which:

Figure 1 is a schematic diagram of an example mobile communication system or mobile communication network;
Figure 2 is a schematic diagram of a simplistic network architecture useful for understanding the concept of spectrum sharing;
Figure 3 is a schematic diagram showing a spectrum-sharing scenario;
Figure 4 is a schematic diagram of geographical areas of RAN coverage, known as cells;
Figure 5 is a schematic diagram of long-term spectrum assignment;
Figure 6 shows a geographical arrangement of three wide-area deployments or cells (WA 1, WA 2 and WA 3) and a metropolitan area deployment or cell (MA);
Figure 7A is a schematic diagram representing spectrum allocation between BSs;
Figure 7B is a schematic diagram representing spectrum allocation between UEs;
Figure 8 summarizes the four stages of spectrum assignment, in terms of their hierarchical interrelationship;
Figure 9 is a schematic diagram of a communication system embodying the present invention, together with alternative bandwidth-assignment diagrams;
Figure 10 is a flowchart illustrating a method embodying the present invention;
Figure 11A is a schematic diagram of a wireless communication system embodying the present invention;
Figure 11B is a schematic diagram of a wireless communication system embodying the present invention, organised in a different way from Figure 11A.
Figure 12 is a schematic diagram of a scenario in which negotiations for communication spectrum are carried out between primary and secondary systems;
Figure 13 is a schematic diagram representing a method embodying the present invention (method 1);
Figure 14 is a schematic diagram of a method embodying the present invention (method 2);
Figure 15 is a schematic diagram of a method embodying the present invention (method 3);
Figure 16 is a schematic diagram of a method embodying the present invention (method 4);
Figure 17 is a schematic diagram useful for understanding the overall approach of methods 1 to 4;
Figure 18 is a schematic diagram showing the main areas of impact of embodiments of the present invention in overall spectrum control systems;
Figure 19 is a schematic diagram showing one way of determining possible spectrum configurations for Bsi;
Figure 20 is a schematic diagram representing a method embodying the present invention (method A);
Figure 21 is a flow diagram of a spectrum selection method according to invention embodiments;
Figure 22 is a flow diagram of an alternative spectrum selection according to invention embodiments;
Figure 23 is a flow diagram of a further method of spectrum selection according to invention embodiments;
Figure 24 is yet further a flow diagram of a further method of spectrum selection according to invention embodiments;
Figure 25 is a flow diagram of a method of spectrum evaluation operation;
Figure 26 is a schematic diagram representing method B which embodies the present invention;
Figure 27 is a schematic diagram representing method C which embodies the present invention;
Figure 28 is a flow diagram of a spectrum selection operation suitable for use in method C;
Figure 29 is a flow diagram of an alternative spectrum selection operation suitable for use in method C;

Figure 30 is a flow diagram of a further spectrum selection operation suitable for use in method C;

Figure 31 is a flow diagram of a still further spectrum selection operation suitable for use in method C;

Figure 32 shows an example of a spectrum-evaluation operation suitable for method C.

Figure 33 is a schematic diagram showing communications in a set up protocol for interference measurements (method D);

Figure 34 is a schematic diagram showing communications in another set up protocol for interference measurements;

Figure 35 is a schematic diagram showing communications in a further set up protocol for interference measurements;

Figure 36 is a schematic diagram showing communications in a still further set up protocol for interference measurements;

Figure 37 is a schematic diagram showing communications in yet another set up protocol for interference measurements;

Figure 38 is a schematic diagram showing communications in a further set up protocol for interference measurements;

Figure 39 is a schematic diagram showing a geographical layout with wireless communications implementing an approach for obtaining interference measurements;

Figure 40 is a schematic diagram showing a geographical layout with wireless communications implementing an approach for obtaining interference measurements;

Figure 41 illustrates the next steps in the Figure 40 scenario;

Figure 42 is a schematic diagram showing a geographical layout with wireless communications implementing an approach for obtaining interference measurements;

Figure 43 is a schematic diagram showing a geographical layout with wireless communications implementing an approach for obtaining interference measurements;

Figure 44 illustrates the next steps in the Figure 43 scenario;

Figure 45 is a schematic diagram useful for summarising the possible communications between BSs and actions at the different BSs;

Figure 46 is a schematic diagram representing one possible accounting process that may be employed by embodiments of the present invention

Figure 47 and Figure 48 are schematic diagrams useful for understanding a few ways that BS's communicate;

Figure 49A is a schematic diagram showing simulation results before reassignment;

Figure 49B is a schematic diagram showing simulation results of the Figure 49A example after reassignment;

Figure 50A is a schematic diagram showing simulation results before reassignment;

Figure 50B is a schematic diagram showing simulation results of the Figure 50A example after reassignment;

Figure 51A is a schematic diagram showing simulation results before reassignment;

Figure 51B is a schematic diagram showing simulation results of the Figure 51A example after reassignment;

Figure 52 is a schematic diagram showing a scenario where BS1 from RAN1, BS2 from RAN2 and BS3 from RAN3 are engaged in short term spectrum negotiations;

Figures 53A and 53B are schematic diagrams indicating conflicting interests of spectrum assignment;

Figures 54 to 59 are schematic diagrams showing triggers for spectrum negotiation;

Figure 60 is a schematic diagram showing signalling between BSs in spectrum negotiation;

Figure 61 is a schematic diagram showing further signalling between the BSs following that of Figure 60;

Figures 62 to 64 show subsequent steps of the signalling shown in Figures 60 and 61;

Figure 65 is a schematic diagram showing a different signalling scenario and

Figure 66 shows a following step;

Figure 67 is a schematic diagram showing a different signalling operation and

Figures 68 to 71 show subsequent signalling;

Figure 72A is a schematic diagram showing simulation results before reassignment;

Figure 72B is a schematic diagram showing simulation results of the Figure 72A example after reassignment;

Figure 73A is a schematic diagram showing simulation results before reassignment; and

Figure 73B is a schematic diagram showing simulation results of the Figure 73A example after reassignment.

A system for spectrum sharing and coexistence of system apparatuses, including the possibility of spectrum exchange between two or more RANs has been considered, for the purposes of attaining better utilisation of spectrum for wireless mobile networks.

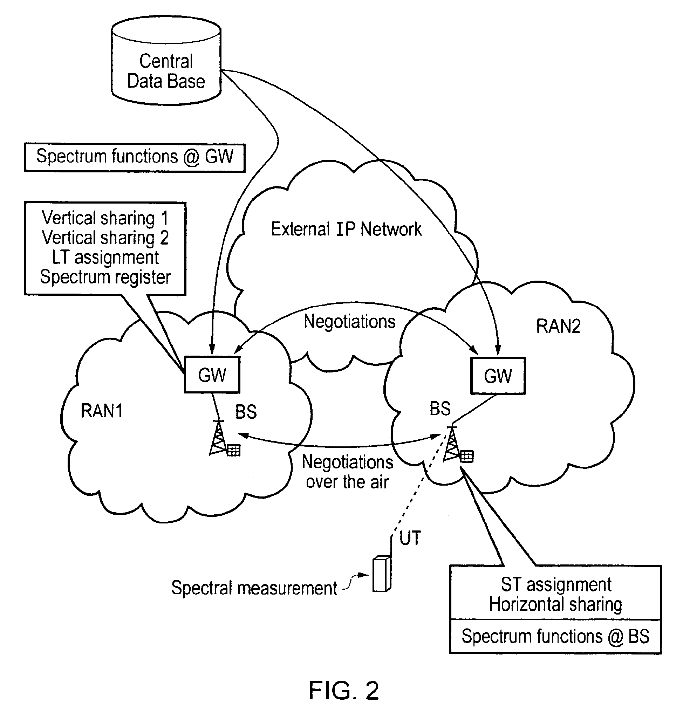

Figure 2 is a schematic diagram of simplistic network architecture useful for understanding the concept of spectrum sharing. The network of Figure 2 may to some extent be compared to the schematic diagram of Figure 1. The basic idea is to enable independent RANs (Radio Access Networks) to use each other's spectrum when it is not needed. Negotiations between different RANs may be carried out by communications between the gateways of those RANs.

In Figure 2, two RANs are shown, namely RAN 1 and RAN 2, each having a GW and a BS. Communications are possible between the two GWs, either directly or indirectly. Both of the GWs have access to a central database, which may for example have a controlling functionality. As indicated in Figure 2, spectrum sharing is envisaged at the gateway level and/or at the base-station level. Depending on rules governing the sharing of different frequency bands, different approaches to spectrum sharing are envisaged. One such approach is referred to as horizontal sharing. So-called horizontal sharing may be carried out between systems or communication apparatuses of equal status, i.e. where no system has priority over the other system(s). Such horizontal sharing could be performed with or without coordination. Coordination may require capabilities for signalling or at least detection of other systems, and may involve coordination based on a predefined set of rules or "spectrum etiquette".

Another approach to spectrum sharing is referred to as "vertical sharing". So-called vertical sharing may be carried out between systems or communication apparatuses in which there are clearly established priorities. For example, there may be primary systems that have preference in accessing the spectrum and secondary systems that may only use the spectrum providing they do not cause harmful interference towards the primary system(s). It is envisaged that spectrum-sharing enabled systems could be either primary or secondary systems as compared to legacy (non-spectrum-sharing enabled) systems. This leads to two types of vertical sharing, the first type ("Vertical Sharing 1" in Figure 2) having the spectrum-sharing enabled system as the primary system, and the second type ("Vertical Sharing 2" in Figure 2) having the legacy system as the primary system.

Also indicated in Figure 2, is the possibility of storing a spectrum register at gateway level. In this way, a record can be kept of the sharing of spectrum between systems, for example between RANs or BSs. User Terminals (UTs) may also be used to make spectral measurements to assist the spectrum-sharing process.

Figure 2 indicates that both long-term spectrum assignment (LT assignment) and short-term spectrum assignment (ST assignment) may be carried out. These different functionalities may be understood as follows. Spectrum sharing may be used to periodically reassign a portion of the available spectral resources between different RANs. In contrast to fixed-spectrum assignment, spectrum sharing can enable dynamic balancing of spectral resources between networks. As a result, the spectral scalability of systems can be increased, and spectral resources available for a network can be adjusted according to changes in requirements. Such requirements may be financial/commercial requirements, for example relating to a network operator's customer base or market share. Such requirements may also be operational requirements, for example relating to loads on the respective networks. It will be appreciated that spectrum sharing may facilitate focused operation of communication networks resulting in limiting overall need for spectral resources. In addition, spectral resources may be re-assigned according to variations in the aggregate loads on respective networks, thereby enhancing the overall use of spectrum over a number of networks.

It is desirable that a spectrum-sharing functionality provides a communication system with stable, predictable and reliable access to the spectrum, whilst also reacting quickly to changing spectrum requirements between different networks of the system. By dividing spectrum sharing into LT spectrum assignment (providing slowly varying, stable spectrum assignments for large geographical areas) and ST spectrum assignment (providing short-term variations to the large-scale solution), the stability and predictability required can be achieved with reasonable complexity.

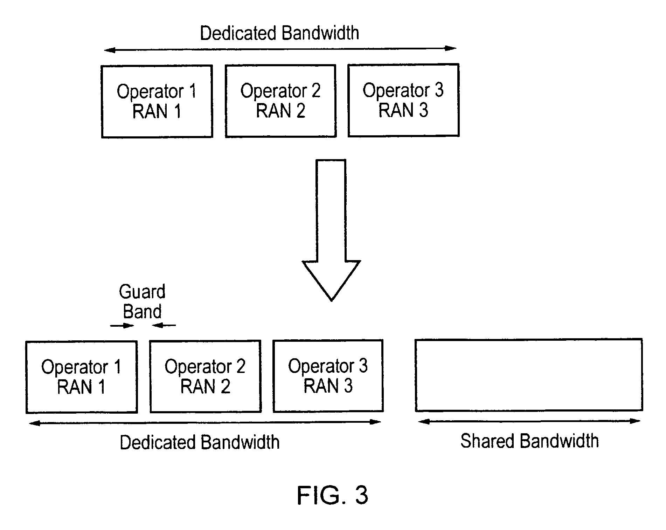

Based on the above, four stages for spectrum negotiations and management have been proposed. The first stage may be referred to as "spectrum co-existence and sharing". In this first stage, under a spectrum co-existence and sharing scenario, RANs (for example belonging to different operators) may decide upon an amount of shared spectrum that is to be made available to one of those RANs beyond its existing dedicated spectrum band. A typical scenario is shown in Figure 3. Three operators (Operator 1, Operator 2, and Operator 3) each have their own RAN (RAN 1, RAN 2, and RAN 3 respectively). Each such RAN has its own dedicated spectrum band separated from adjacent bands by means of a guard band. In addition, a shared spectrum band also exists, which can be made available to any of the RANs in addition to its dedicated spectrum band.

The decision regarding the precise final boundaries of spectrum may be location dependent, depending for example on the nature of the area (e.g. metropolitan area, or local area) and on the coordinates of the area. A trade-off between spatial separation and frequency separation may also affect the precise final boundaries of assigned spectrum.

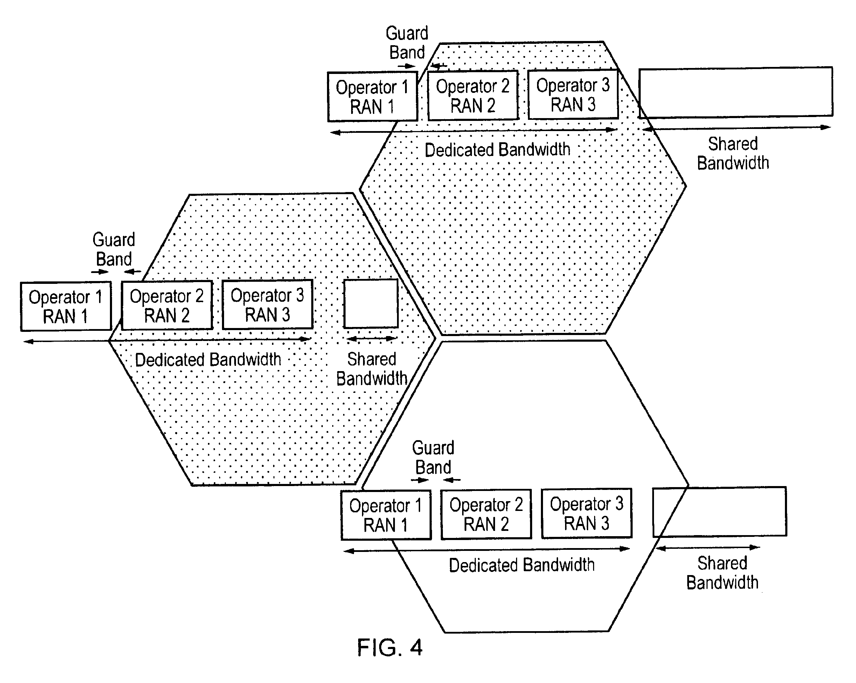

This location dependency can be appreciated by reference to Figure 4. In Figure 4, three geographical areas of coverage, known as cells, are shown. The three RANs of the three operators have a presence in each of the cells, however there are differences between the dedicated and shared spectrum allocations for the three RANs that move from cell to cell. That is, the initial boundaries of available spectrum (assuming that some spectrum sharing or re-assignment will take place) are different from cell to cell.

The second stage may be referred to as long-term (LT) spectrum assignment. After making decisions about spectrum boundaries in stage 1, negotiations can occur between the GWs of different RANs (for example, belonging to different operators) on a regular or semi-regular basis, for example every couple of minutes. Such negotiations can serve to rearrange (re-allocate, or re-assign) the available spectrum to ideally maximize spectrum utilization between the different RANs, for example between a primary and secondary RAN. In this way, one mobile operator can trade in unused spectrum to maximize revenue from its own unused spectrum and improve QoS (Quality of Service) by obtaining unused spectrum from other operators. It will of course be appreciated though that such spectrum sharing need not be influenced by financial factors, and may instead only be influenced by technical factors, for example by a desire to maximize spectrum utilization across several RANs.

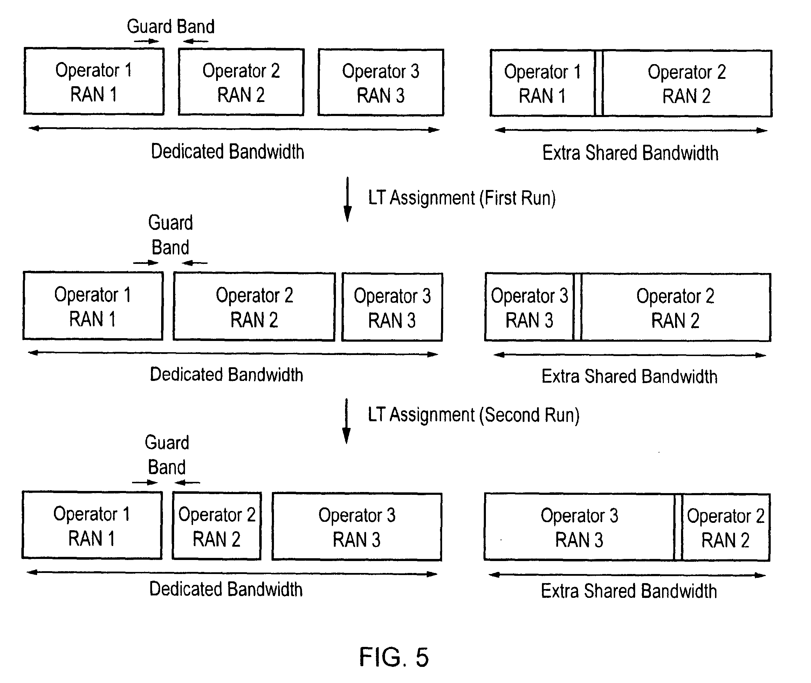

By way of example, Figure 5 indicates how spectrum may be transferred/re-assigned/re-allocated as part of the second stage. In Figure 5, this second stage is performed twice by way of a first run and a second run. Before the first run, it can be seen that RANs 1 to 3 have a substantially equal dedicated bandwidth, and that RANs 1 and 2 share the extra shared bandwidth, albeit with RAN 2 having the larger such share. Following the first run, it can be seen that RAN 2 has increased the size (or frequency range) of its dedicated spectrum allocation by obtaining spectrum from RAN 3. Also, following the first run, RANs 3 and 2 share the extra shared bandwidth (RAN 1 no longer occupying any of the extra shared bandwidth). Following the second run, RAN 3 has increased the size of its dedicated spectrum allocation by obtaining spectrum from RAN 2. Also, following the second run, RANs 3 and 2 still share the extra shared bandwidth, but with RAN 3 (rather than RAN 2) having the larger such share. Accordingly, it can be appreciated from Figure 5 that both dedicated and additional spectrum assignments may be changed from one run to the next.

The third stage may be referred to as short-term (ST) spectrum assignment. After making decisions about spectrum-allocation boundaries in stage 2, negotiations can occur locally between BSs on a short-term regular or semi-regular basis, for example every few seconds. It will be appreciated that the purpose of such short-term assignment in stage 3 is to augment the scheduled long-term assignment of stage 2 by allowing for faster spectrum assignments and, thus, increasing overall flexibility. Such short-term assignment can operate with the spatial granularity of a cell, and can be triggered in various ways as will become apparent.

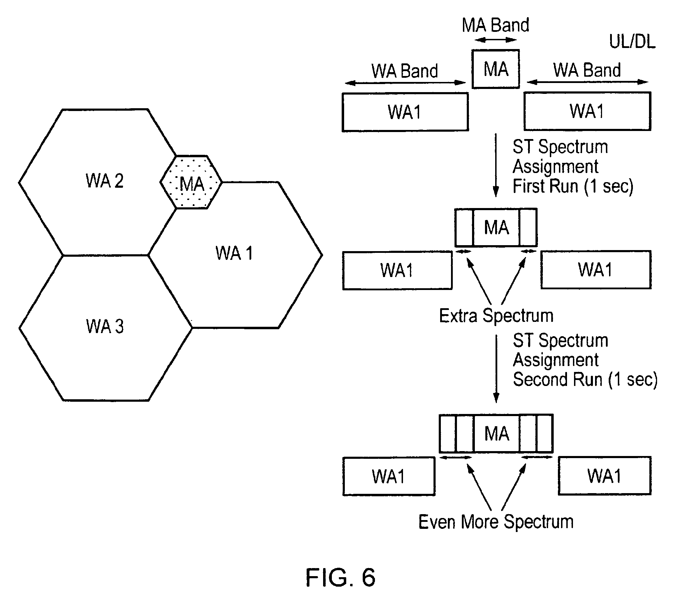

A possible scenario for the third stage is shown in Figure 6. The left hand part of Figure 6 shows a geographical arrangement of three wide-area deployments or cells (WA 1, WA 2 and WA 3) and a metropolitan area deployment or cell (MA). In the right hand part of Figure 6, the effect of two runs of this third stage can be seen. Before the first run, the MA occupies a relatively small spectrum portion between portions of spectrum allocated or pre-assigned to WA 1. By means of the first and second runs, it can be seen that the MA progressively negotiates to obtain spectrum from WA 1.

The fourth stage may be referred to as channel allocation/radio-resource partitioning. At both the physical layer and the network layer, radio specifications can be changed in order to provide an acceptable performance level, for example an acceptable BER (bit error rate). At the network level, interference can be minimized by applying channel allocation/radio resource partitioning (i.e. by suitable selection of channel frequencies).

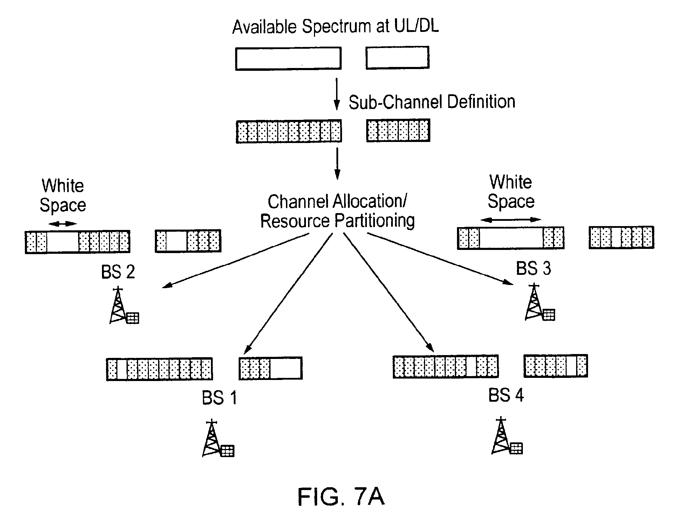

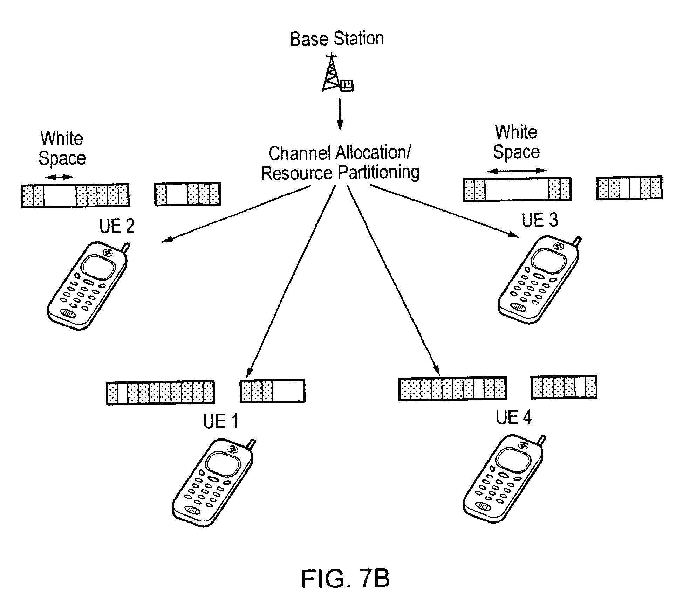

After a decision is reached in the third stage (i.e. on a short-term (ST) basis), decisions can be made to allocate suitable sub-channels to each cell or base station on an extremely short-term basis, for example every couple of tens of milliseconds. This is depicted in Figure 7A for allocation amongst BSs, and in Figure 7B for allocation amongst UEs (perhaps as part of another smaller sub-channel arrangement) served by a BS.

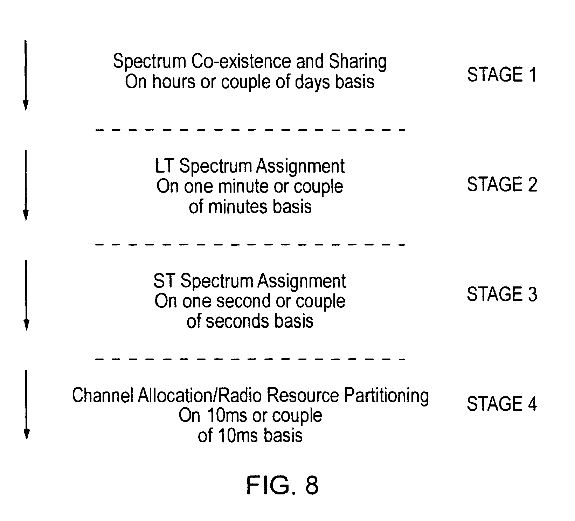

Figure 8 summarizes the four stages mentioned above, in terms of their hierarchical interrelationship. Not all four stages need be performed, and any combination of those stages may be performed concurrently or in an ordered fashion.

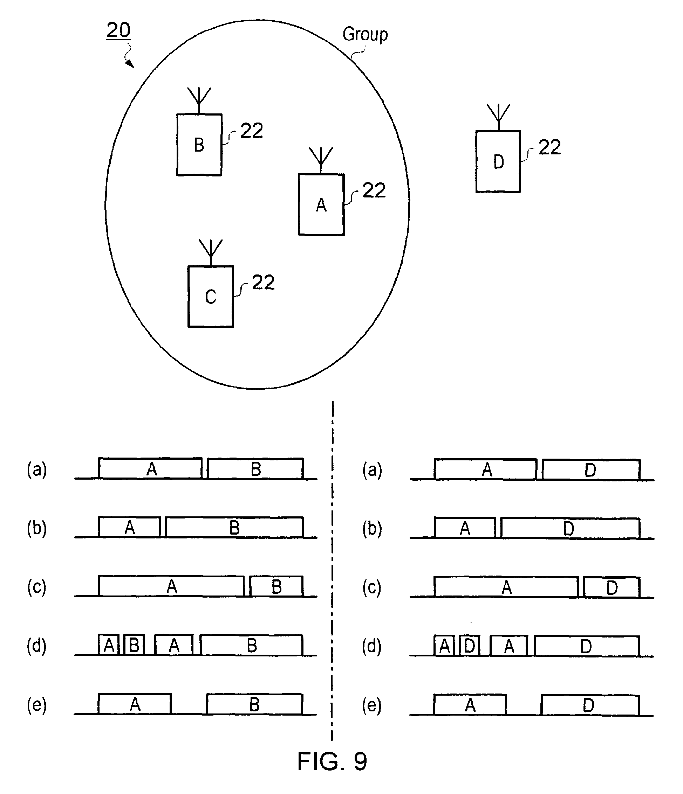

Figure 9 is a schematic diagram of a communication system 20 embodying the present invention, together with bandwidth-assignment diagrams useful for appreciating the purpose and benefits of the present invention.

Communication system 20 is a wireless communication system and comprises at least a group of communication apparatuses 22. In the present embodiment, the communication system 20 comprises a group of communication apparatuses 22 labeled as communication apparatuses A, B and C, and a further communication apparatus labeled as communication apparatus D. As will become apparent, embodiments of the present invention focus on the group of communication apparatuses, and in particular on interactions between members of the group and interactions between a member of the group and a further communication apparatus (communication apparatus D).

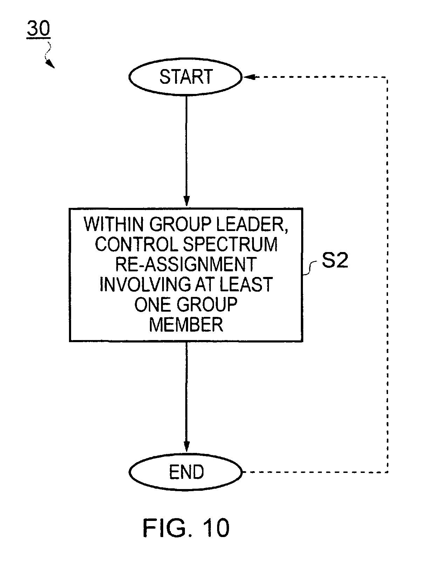

One of the communication apparatuses 22 of the group, for example communication apparatus A, is considered to be the leader of the group. The leader of the group may be permanently leader of the group, or may only be temporarily the leader of the group. That is, the communication apparatus 22 of the group designated as being the leader may change from time to time. In fact, the group itself may only be formed temporarily. The leader comprises control means operable to enable the system 20 to carry out a spectrum re-assignment method embodying the present invention. Such a method is considered below, in reference to Figure 10. For simplicity, such control means are not explicitly shown in Figure 9. Communication apparatuses 22 may, for example, be base stations (BSs) of a radio access network such as a mobile communication network.

The communication apparatuses 22 are all operable to communicate (with one another and/or with other communication apparatuses not shown in Figure 9) wirelessly, for example using radio transmissions. For the purpose of such communications, communication apparatuses A to D are each pre-assigned a portion of available communication frequency spectrum. In the lower portion of Figure 9, possible such pre-assignments are shown in the two bandwidth-assignment diagrams labelled (a).

It is possible that, from time to time, one or more of the communication apparatuses 22 of the system may have a sub-optimal allocation of spectrum for one reason or another, and therefore wish to change its allocation through spectrum assignment. For example, one such apparatus 22 may have a relatively high communication load (e.g. amount of data for transmission) at a certain time, and therefore require extra bandwidth or spectrum to support that load. In that situation, it may be beneficial for that communication apparatus 22 to acquire extra spectrum from another communication apparatus 22, if possible. Conversely, one communication apparatus 22 may have a relatively low load at a certain time and have a portion of its spectrum unused or under-used at that time. In a similar way, it may be beneficial for that communication apparatus 22 to allow another communication apparatus 22 to make use of such under-used or excess spectrum. These possibilities can lead to an overall improved utilisation of spectrum within the system 20.

If the communication apparatuses 22 are operated by different operators (or owners), spectrum re-assignment can enable those operators to trade in spectrum. In system 20 of Figure 9, the group of communication apparatuses 22 (communication apparatuses A to C) may for example belong to the same RAN and therefore to the same operator, and communication apparatus D may belong to a different RAN and therefore to a different operator. In that scenario, re-assignments of spectrum between members of the group may not benefit the operator for that group in the sense of trade, because that operator essentially "owns" the spectrum assigned to each of the communication apparatuses 22 of the group. However, re-assignments of spectrum between a communication apparatus 22 of the group and communication apparatus D may lead to benefits in terms of trade for both the operator of the group and the operator of communication apparatus D.

The two sets of bandwidth-assignment diagrams (a) to (e) in Figure 9 are intended to provide examples of possible re-assignments of spectrum that could occur in the system 20. The left hand set of bandwidth-assignment diagrams represent re-assignments of spectrum that could occur between members of the group, in this case between communication apparatus A and communication apparatus B, and the righthand set of bandwidth-assignment diagrams represent re-assignments that could occur between a member of the group (in this case communication apparatus A) and communication apparatus D (not being a member of the group).

Referring now to both sets of bandwidth-assignment diagrams in Figure 9, the different spectrum layouts are intended to provide examples of possible-reassignments of spectrum that could occur in the sequential progression as shown (i.e. (a) to (e)), or in any order, between the two communication apparatuses 22 concerned. As can be seen from diagrams (b) and (c), it is possible for either of the communication apparatuses 22 concerned to extend its spectrum allocation into the frequency spectrum previously assigned to the other of those apparatuses. As can be seen from diagram (d), it is not necessary for the allocations or assignments of spectrum for the communication apparatuses 22 to be single continuous allocations. One of the communication apparatuses 22 may be re-assigned a portion of spectrum contained within a larger portion of spectrum previously assigned to the other communication apparatus 22. In fact, the spectrum allocations of the two communication apparatuses may be significantly more complex than that shown in diagram (d), for example with the apparatuses having many different and separated (interspersed) portions each having their own power levels and modulation schemes. As can be seen from diagram (e), it is not necessary for all of the spectrum allocated or assigned to the communication apparatuses 22 concerned at one time to be allocated to them (in the same way or in some other way) at another time. For example, if at one time neither of the communication apparatuses 22 concerned desires a certain portion of spectrum, it may be more efficient for neither of them to be assigned it. One advantage may be that lower interference is suffered at the other frequencies, and another possible advantage may be that another communication apparatus (e.g. a communication apparatus not shown in Figure 9) could utilise that portion of spectrum thereby leading to possible increased revenue for operators of the communication apparatuses concerned. In this way, improved utilisation of spectrum can be achieved not only between the communication apparatuses 22 carrying out the re-assignment in question, but over a communication system larger than those communication apparatuses alone (for example over the entire communication system 20, or over a communication system larger than a communication system 20. Finally, although not shown in Figure 9 for simplicity, it is possible for the spectrum allocations of the apparatuses to overlap in frequency and/or time with one another.

As will be appreciated from the above, embodiments of the present invention focus on involving a leader of a group of communication apparatuses 22 in controlling re-assignments of spectrum. In particular, embodiments of the present invention use such a leader to control re-assignments that involve a member of the group. In Figure 9, communication apparatus A may be considered to be the (temporary or permanent) leader of the group, and therefore communication apparatus A is shown to be involved in the re-assignments of both sets of bandwidth-assignment diagrams. Although in Figure 9 the controlling leader (communication apparatus A) is shown actually taking part in the re-assignments itself (i.e. such that its spectrum assignment is changing), the leader could of course control re-assignments affecting its group whilst not actually re-assigning its own spectrum. For example, the leader (communication apparatus A) could control re-assignments between communication apparatus B and communication apparatus C, or re-assignments between communication apparatus B and communication apparatus D. This may advantageously enable a degree of central control (and therefore common interests) to be maintained for all re-assignments involving the group (or cluster).

Figure 10 is a flow diagram representing a Method 30 embodying the present invention. Method 30 comprises step S2, and may be carried out in system 20.

Taking system 20 as an example system, method 30 is carried out when system 20 is in use, i.e. on a dynamic basis. It will become apparent that method 30 may be initiated in a number of different ways, however for the present purposes it will be assumed that, following initiation, step S2 is carried out and then the method is terminated. Of course, it is advantageous to carry out method 30 more than once, for example on a regular basis or based upon a trigger, as indicated by the dashed line in Figure 10. By carrying out method 30 more than once, it is possible to control a plurality or series of re-assignments. Such a series of re-assignments may involve the same communication apparatuses 22 or may involve different sets of communication apparatuses 22. In this way, it is possible to allow the system 20 to effectively "track" changing states or requirements of the system 20 as a whole, or of one or more parts of such a system.

In step S2, within the group leader, a spectrum re-assignment involving at least one group member is controlled.

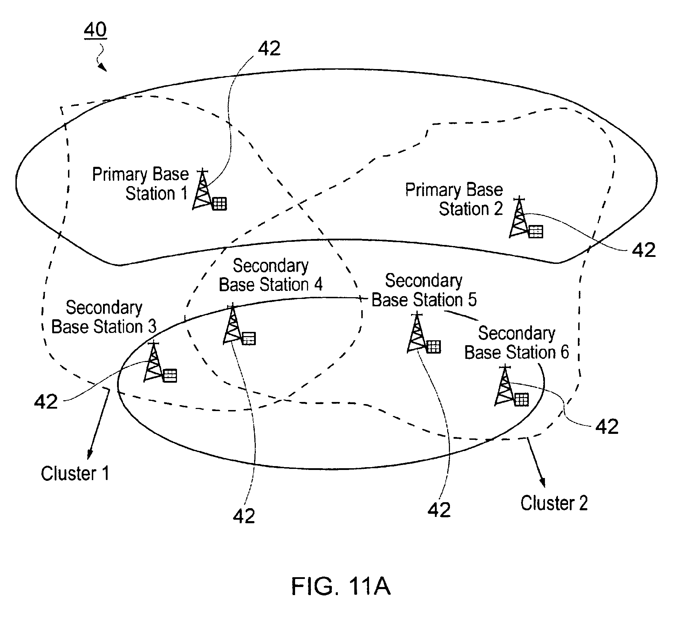

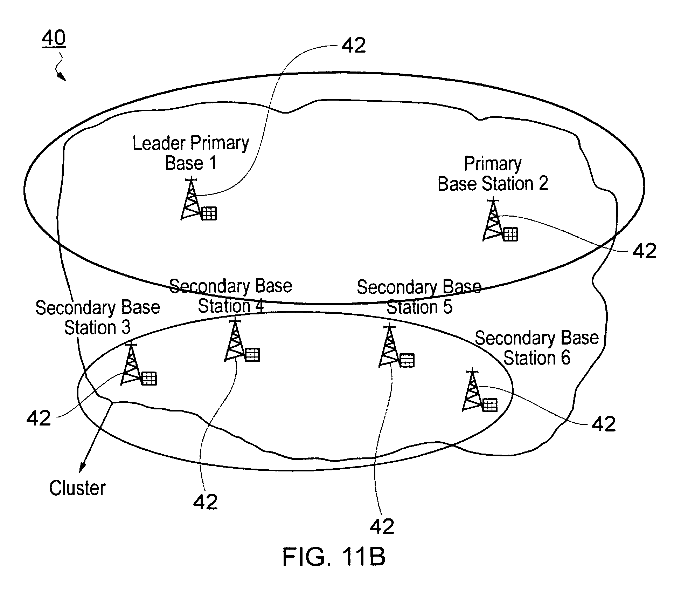

For a better understanding of the present invention, preferred embodiments will now be considered with reference to Figures 11A and 11B. Figures 11A and 11B are schematic diagrams of a wireless communication system 40 embodying the present invention, organised in two different ways. Communication system 40 comprises six base stations 42, namely BS1 to BS6.

In Figure 11A, the BSs 42 are organised into two different clusters or groups, labelled as cluster 1 and cluster 2. BS1, BS3 and BS4 are part of cluster 1, and BS2, BS4, BS5 and BS6 are part of cluster 2. It is to be noted that BS4 is part of cluster 1 and is also part of cluster 2. Looking back to Figure 1, the BSs 42 in the same cluster may also be in the same RAN, however it will be appreciated that the division of the BSs 42 into clusters and the division of the BSs 42 into RANs may be different.

In Figure 11B, the BSs 42 are organised into a single cluster. Although BS1 to BS6 are therefore all in the same cluster, it is of course possible that those BSs 42 may be part of different RANs. BSs 42 of communication system 40 may be considered to be components of a mobile communication system such as communication network 1 of Figure 1. That is, as well as BS1 to BS6, the communication system 40 may comprise a number of GWs, a number of BSs and a number of UEs. Communication system may further comprise an IP network and a CN.

BS1 to BS6 are therefore capable of transmitting and receiving radio signals, for example to and from UEs, using allocated or assigned frequency spectrum. The present embodiments concern BS-to-BS fast spectrum assignment and negotiation mechanisms. At the physical layer, it is assumed that power control can be employed to reduce interference, and in this way it is possible to satisfy the Signal-To-Interference Ratio (SIR) targets for radio transceivers of the system (e.g. BSs and UEs).

As will be appreciated from Figures 11A and 11B, a number of the BSs 42 are shown as being primary BSs, and the remaining BSs are shown as being secondary BSs. As mentioned above, the control of spectrum re-assignment in systems having a primary part and a secondary part is considered important.

In Figures 11A and 11B, the primary BSs may be considered to form a primary system and the secondary BSs may be considered to form a secondary system. Generally, a primary system (e.g. a RAN being owned by a mobile operator) has full control over its radio spectrum resources, and if it so wishes, may negotiate spectrum sharing and the grant of access to its spectrum to a secondary system.

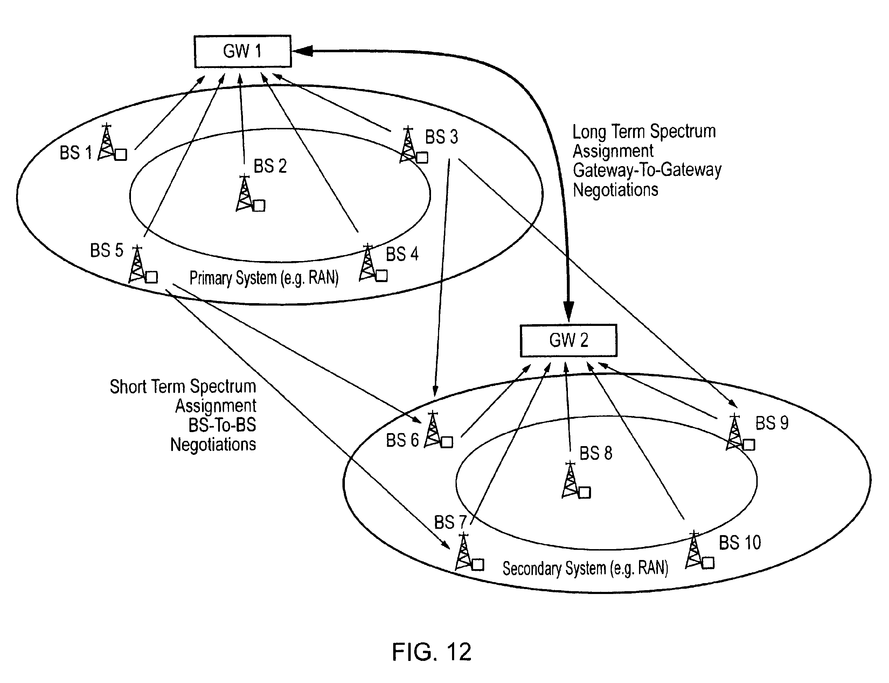

Figure 12 is a schematic diagram representative of a scenario in which negotiations for communication spectrum may be carried out between primary and secondary systems. In Figure 12, one RAN is a primary system and comprises BS1 to BS5 and GW1, and another RAN is a secondary system and comprises BS6 to BS10 and GW2. As indicated in Figure 12, LT spectrum assignment is possible by means of GW-to-GW negotiations.

Although the RANs may be engaged in LT spectrum negotiations through the GWs, it is envisaged that ST negotiations regarding allocation or sharing of radio spectrum might happen between one or more of the BSs of the primary system and one or more of the BSs of the secondary system. Due to transmission power and relative location of the BSs, it is not always possible to perform isolated and exclusive negotiations (and/or take account of the direction of antennas employed) to control access to spectrum on an exclusive basis between two BSs, because their decisions on spectrum assignment might affect other BSs, and the decisions of those other BSs regarding other spectrum assignments. Similarly, there may often be more than two interested parties involved in any one spectrum negotiation. As will be appreciated from Figures 11A and 11B, embodiments of the present invention focus on spectrum negotiations and re-assignment of spectrum based on clusters (groups) of BSs comprising primary and secondary BSs, where each cluster (or group) of BSs includes those BSs having the highest impact on each other.

On the one hand, the possibility of centralized negotiations (for example between GWs as indicated in Figure 12) regarding spectrum re-assignments may bring with it drawbacks relating to signalling overhead and complexity of information gathering from the BSs concerned. On the other hand, although distributed negotiations between the involved BSs themselves may provide a lower signalling overhead, such decisions may result in a collision of interests as decisions between BSs may be locally made without being aware of the impact of those decisions on other spectrum users. Embodiments of the present invention aim to address these issues by providing semi-centralized cluster-wide spectrum negotiations and re-assignment of spectrum for clusters (or groups) of primary and secondary BSs, thereby tending to take advantage of both centralized and distributed approaches to spectrum re-assignment (whilst trying to avoid the drawbacks of those individual approaches).

LT spectrum assignment (for example as shown in Figures 5 and 12) is a non-localised process (i.e. a centralized process) involving multiple RANs from multiple networks, whilst ST spectrum assignment is a more localized process generally involving multiple BSs directly. Accordingly, the potential benefits of LT and ST assignment are different and substantially independent from one another. LT spectrum assignment may be considered to be similar to a slow Radio Resource Management (RRM) process in a traditional radio network, whilst ST spectrum assignment may be considered to be similar to a fast packet-scheduling and fast RRM process, for example as may be performed by an HSDPA system. In the same way that slow RRM and fast RRM processes may be considered to complement one another, LT and ST spectrum assignment processes may also be considered to complement one another. LT spectrum assignment may, for example, exploit the availability of white spectrum space every couple of minutes and on a "RAN-network wide" basis whereas ST spectrum assignments may be considered to exploit the availability of spectrum on a second by second and "localized" basis (e.g. BS-to-BS basis).

A number of different techniques for re-assigning spectrum between BSs of system 40 will now be considered, such different techniques embodying the present invention. Those techniques involve efficient ST (short-term) negotiations between BSs of the system, assuming the arrangements of clusters shown in Figures 11A and 11B. As will become apparent, each negotiation comprises a series of component negotiations, and it is assumed that each component negotiation involves only two BSs effectively on a localized basis. It is also assumed that it has been pre-agreed to have only one overall negotiation (and only one component negotiation) happening at any one time. The component negotiations are effectively considered to be exclusive and one-to-one negotiations, and the overall negotiations (i.e. the sets of component negotiations, or simply sets of negotiations) take into account the cluster organisations of the BSs 42.

It is assumed that the BSs 42 of the system 40 are able to communication with one another in order to perform control functions for the re-assignment of spectrum. This communication may comprise wireless communications (e.g. Over The Air (OTA) communications) and/or wired communications (for example over a wired IP link). Although not shown in Figure 1, such control communications may occur directly between the BSs (for example via a dedicated OTA channel such as a microwave link). Alternatively, or additionally, such control communications may be routed via a GW, via the IP network, and even via the CN, following links similar to those shown in Figure 1. However, for the purpose of the present embodiments, it is assumed that those communications originate from and are controlled by the BSs themselves.

For the benefit of further explanation, it is assumed that system 40 is a radio network comprising N transmitter-receiver nodes (i.e. BSs 42). These BSs include BS1 to BS6 and are fixed in location and distributed uniformly in a square geographical region of dimension L x L. It is also assumed for the following that the BS have the capability to measure/predict/estimate the interference that they inflict on other BSs (and/or generally on the cells of those BSs) for each possible spectrum assignment, and are also capable of determining/measuring/estimating (or obtaining relevant information regarding) the interference received from such other BSs (and/or from the cells of those other BSs) for each such spectrum assignment.

To exemplify the above-mentioned techniques, four possible methods (Methods 1, 2, 3 and 4) for conducting spectrum sharing, or spectrum exchange, between the BSs of system 40 will now be described as examples of how the present invention may be put into effect. Although these methods relate to ST spectrum assignment between the BSs of the system, the methods could of course be used on any timescale. In each of Methods 1 to 4, a BS in the or each cluster is considered to be a leader of that cluster.

For consistency with the primary/secondary relationship between the BSs of system 40, it is assumed that one primary BS acts as a leader of each cluster, and that each cluster comprises that leader primary BS and a number of engaged and interested BSs from the secondary system or RAN. Accordingly, in the present example, it will be noted that either BS1 or BS2, or both of them, are considered to be leaders of their respective clusters. In the case of Figure 11B, in which there is only one cluster, BS1 1 is considered to be the leader of the cluster for the following explanation, although it will be appreciated that BS2 could alternatively be the leader of that cluster. In fact, BS1 could be considered to be the leader of that cluster for some of the time, and BS2 could be considered to be the leader for the rest of the time. That is, the leader of a cluster may only be a temporary leader of that cluster. Of course, the primary/secondary relationships in system 40 need not exist, i.e. the BSs 42 may have equal status. In that case, the leader(s) may be selected based on other criteria, for example to enable the BSs to be leaders one by one.

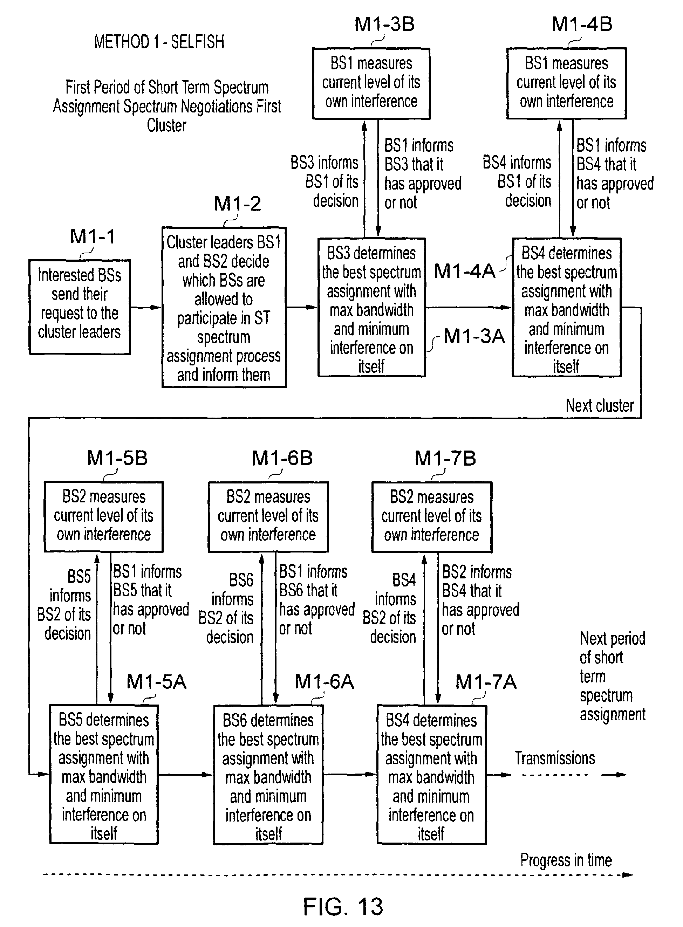

Figure 13 is a schematic diagram representing Method 1, which embodies the present invention. Figure 13 indicates the communications between the BSs of system 40, and the actions performed at those BSs, assuming that system 40 is arranged as shown in Figure 11A. That is, for Method 1, it is assumed that two clusters exist. Method 1 comprises steps 1 to 7, labelled with the prefix "M1" identifying that those steps are part of Method 1.

Method 1, Selfish Approach

Looking at Figure 13, it will be appreciated that Method 1 essentially comprises a series of negotiations, which can be repeated. That is, steps M1-1 to M1-7 may be repeated any number of times, each such repetition representing a cycle or series of spectrum re-assignment negotiations. The description that follows represents a single such cycle or series.

The steps of Method 1 are divided into two generally distinct sections. Steps M1-1 and M1-2 constitute the first such section, and involve deciding which BSs 42 of system 40 will carry out spectrum re-assignment negotiations in the present series of negotiations. For simplicity, it will be assumed that it is decided that all BSs of system 40 should carry out such negotiations, however it is not necessary for all of the BSs to take part in each series of negotiations. Steps M1-3 to M1-7 represent the second section of Method 1, and represent the individual negotiations that make up the series.

In more detail, in step M1-1, BSs of system 40 decide whether they are interested in taking part in spectrum re-assignment negotiations. Those BSs that are interested in joining the negotiations send a request to their respective cluster leaders. In the present case, as shown in Figure 11A, it is assumed that two clusters exist and that BS1 is the cluster leader of the first such cluster and that BS2 is the leader of the second such cluster. In step M1-2, cluster leaders BS1 and BS2 determine which BSs that have requested to take part in the spectrum re-assignment negotiations are permitted to join the negotiations. For simplicity, it is assumed that not only do all of the BSs (BS3, BS4, BS5 and BS6) wish to take part in the negotiations, but all of them are also permitted to take part in those negotiations. It may, however, be determined that some interested BSs are not permitted to take part in the negotiations. Possible reasons for determining whether or not BSs are either interested in joining the negotiations or permitted to join the negotiations are described below in more detail.

Following steps M1-1 and M1-2, negotiations for each of the interested BSs (namely BS3, BS4, BS5 and BS6) are carried out in a pre-determined order by way of steps M1-3 to M1-7. It will be appreciated that the particular order in which the negotiations are carried out may be dependent on requirements of the system, and that the order shown in Figure 13 is one preferred way of ordering those negotiations. In Method 1, the negotiations are carried out cluster by cluster, in this case by carrying out the negotiations for cluster 1 (having BS1 as the cluster leader) first, and then carrying out the negotiations for cluster 2 (having BS2 as the cluster leader) second. Where there is more than one interested BS per cluster (as is true in the present example), it will also be understood that the particular order in which those interested BSs carry out their negotiations may be dependent on requirements of the system and that the particular order shown in Figure 13 is merely one preferred way of ordering the negotiations. Each BS could for example be assigned its own identification number, and the negotiations could be carried out in identification-number order.

Also as shown in Figure 13, it will be appreciated that each negotiation comprises two main stages, the first stage having the suffix "A" (for example method step M1-3A) and the second such stage having the suffix "B" (for example, method step M1-3B). In the first such stage, the interested BS concerned (e.g. BS3 in step M1-3) determines the spectrum configuration (i.e. allocation of spectrum, and optionally power levels, modulation and coding schemes, etc.) that it desires to adopt as a result of the proposed re-assignment of spectrum. That interested BS then informs its cluster leader of its desired spectrum configuration. In the second stage, the cluster leader concerned (being BS1 in method step M1-3) determines whether to allow the proposed spectrum re-assignment desired by the interested BS and informs that interested BS whether or not it has approved the proposed re-assignment. The cluster leader may for example determine whether or not to approve the proposed re-assignment in dependence upon an interference measurement/estimation (an interference indicator).

In Method 1, therefore, BS3 negotiates with BS1 in step M1-3, BS4 negotiates with BS1 in step M1-4, BS5 negotiates with BS2 in step M1-5, BS6 negotiates with BS2 in step M1-6, and BS4 negotiates with BS2 in step M1-7. BS4 carries out two negotiations in Method 1, because it is part of both cluster 1 and cluster 2.

Looking in more detail at the actions carried out at the so-called "interested" and "engaged" BSs (BS3, BS4, BS5 and BS6), it will be noticed that those BSs determine their desired spectrum configuration based on the interference that they expect to suffer as a result of the proposed re-assignments. Particularly, it will be noted that those interested BSs do not take account of interference that is expected to be inflicted on other BSs as a result of the proposed re-assignments. Accordingly, Method 1 may be referred to as a "selfish" method, because the interested BSs effectively only consider what is best for themselves. Although the interested BSs effectively consider what is best for themselves, some overall control over the re-assignments is achieved because the re-assignments for each cluster are controlled by the cluster leader for the cluster concerned. In a sense, the cluster leader can influence the re-assignments for its cluster, by disapproving those re-assignments that do not appear to be acceptable for one reason or another. It is noted, however, that being a "selfish" method, the cluster leaders of Method 1 consider only their own interference when deciding whether to approve or disapprove prospective re-assignments.

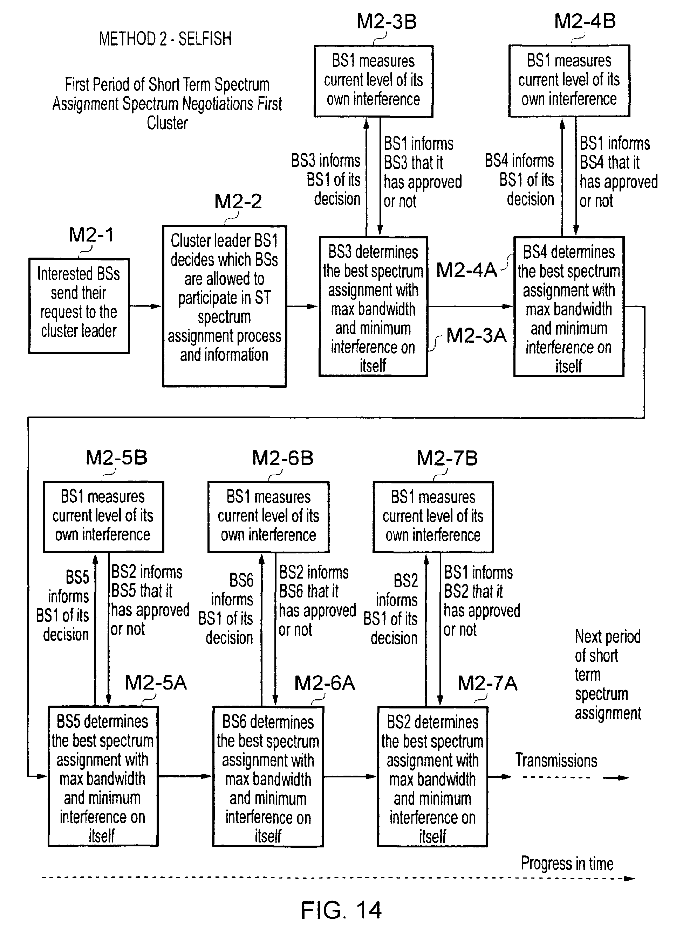

The particular method steps shown at each step of Figure 13 are provided mainly to give a general understanding of the series-of-negotiations nature of Method 1. Figures 14 to 16, which are described immediately below and which present Methods 2 to 4, are also provided mainly to give a general understanding of the series-of-negotiations nature of those Methods. In particular, detailed examples of methods that could be carried out in each of the steps of Methods 1 to 4 are not shown in Figures 13 to 16, but will be presented in detail later.

Figure 14 is a schematic diagram representing Method 2, which embodies the present invention. Figure 14 indicates the communications between the BSs of system 40 and the actions performed at those BSs, assuming that system 40 is arranged as shown in Figure 11B. That is, for Method 2, it is assumed that one cluster exists.

Method 2, Selfish Approach

Method 2, similarly to Method 1, comprises steps 1 to 7, having the prefix "M2" indicating that those steps are steps of Method 2. Comparing Figure 14 with Figure 13, it will be appreciated that the general arrangement of Method 2 is closely similar to that of Method 1, and accordingly the following description of Method 2 will focus mainly on differences between Method 2 and Method 1.

The main difference between Method 2 and Method 1 is that Method 2 relates to system 40 when arranged as shown in Figure 11B (i.e. having one cluster) rather than as in Figure 11A (i.e. having two clusters). As in Method 1, in Method 2 all of the possible interested BSs are considered to be interested in the present series of negotiations and are also considered to be permitted to engage in those negotiations. Because only one cluster is present, it is assumed that BS1 is the cluster leader for that cluster. Accordingly, BS1 is the BS that decides whether the interested BSs are permitted to engage in the negotiations. Additionally, BS1 is the BS that considers whether or not to permit the prospective re-assignment subsection to be carried out in each of steps M2-3 to M2-7.

Like Method 1, Method 2 is a "selfish" method. That is, both the interested BSs (BS2, BS3, BS4, BS5, and BS6) and the cluster leader (BS1) consider only what is best for themselves when engaging in the spectrum negotiations. Again, the order in which the negotiations are carried out between the interested BSs shown in Figure 14 is only one possible order, and it will be appreciated that any order may be employed.

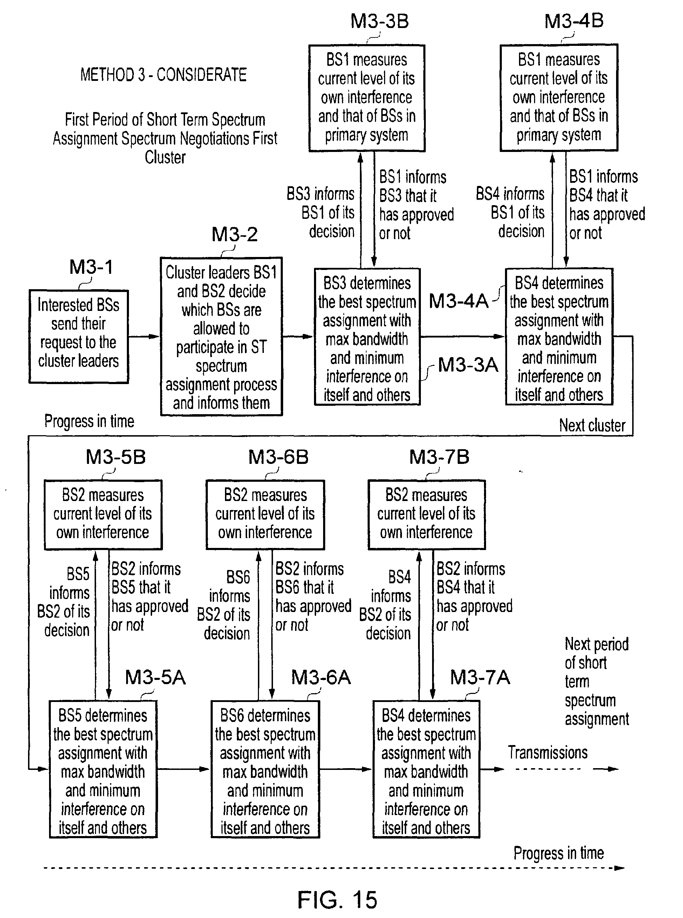

Figure 15 is a schematic diagram representing Method 3, which embodies the present invention. Figure 15 indicates the communications between the BSs of system 40 and the actions performed at those BSs, assuming that system 40 is arranged as shown in Figure 11A. That is, for Method 3, it is assumed that two clusters exist.

Method 3, Considerate Approach

Method 3 comprises steps 1 to 7, having the prefix "M3" indicating that those steps are steps of Method 3. Comparing Figure 15 with Figure 13, it will be appreciated that Method 3 is closely similar to Method 1. The following description of Method 3 will therefore concentrate of differences between Methods 1 and 3.

For both Methods 1 and 3, the system 40 is arranged as shown in Figure 11A, i.e. such that it has two clusters. The main actions, and the order of those actions, are therefore the same in Methods 1 and 3. The main difference between Method 3 and Method 1 is that Method 3 is a "considerate" method, whereas Method 1 is a "selfish" method. In particular, in Method 3 the interested BSs (BS3, BS4, BS5, and BS6) consider not only the interference they expect to suffer as a result of the proposed re-assignments, but also the interference that they expect to inflict on other BSs as a result of the proposed re-assignments. Similarly, the cluster leaders (BS1 and BS2) consider not only interferences that affect themselves, but also interferences that affect other primary BSs.

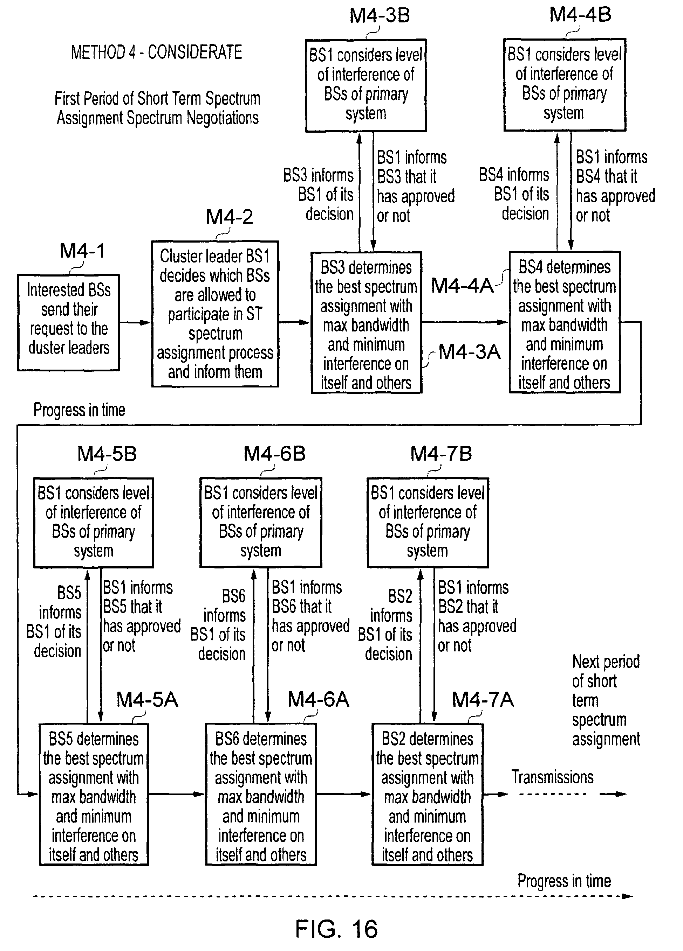

Figure 16 is a schematic diagram representing Method 4, which embodies the present invention. Figure 14 indicates the communications between the BSs of system 40, and the actions performed at those BSs, assuming that system 40 is arranged as shown in Figure 11B. That is, for Method 4, it is assumed that only one cluster exists.

Method 4, Considerate Approach

Method 4 comprises steps 1 to 7, having the prefix "M4", indicating that those steps are steps of Method 4. Comparing Figure 16 with Figure 14, it will be appreciated that Methods 2 and 4 are closely similar to one another. The following description will therefore concentrate mainly on the differences between Methods 2 and 4.

For both Method 2 and Method 4, the system 40 is arranged as shown in Figure 11B, i.e. to have only one cluster. Therefore, the general arrangement and order of negotiations in Methods 2 and 4 are the same. The main difference between Method 4 and Method 2 is that Method 4 is a "considerate" method, whereas Method 2 is a "selfish" method. Therefore, in Method 4 (similarly to Method 3), the interested BSs consider not only the interference that they expect to suffer as a result of the proposed re-assignments but also the interference that they expect to inflict on other BSs as a result of the proposed re-assignments. In a similar way, the cluster leader (BS1) considers not only interferences that affect itself but also interferences that affect other BSs of the primary system. The assumption is that each BS is responsible for its own cluster members and itself. Here, BS2 is a primary BS being let by BS1. BS1 assumes that BS2 is taking care of its own needs and does not require assistance.

In some instances of Methods 1 to 4, a cluster of BSs may not overlap with other clusters in terms of location.

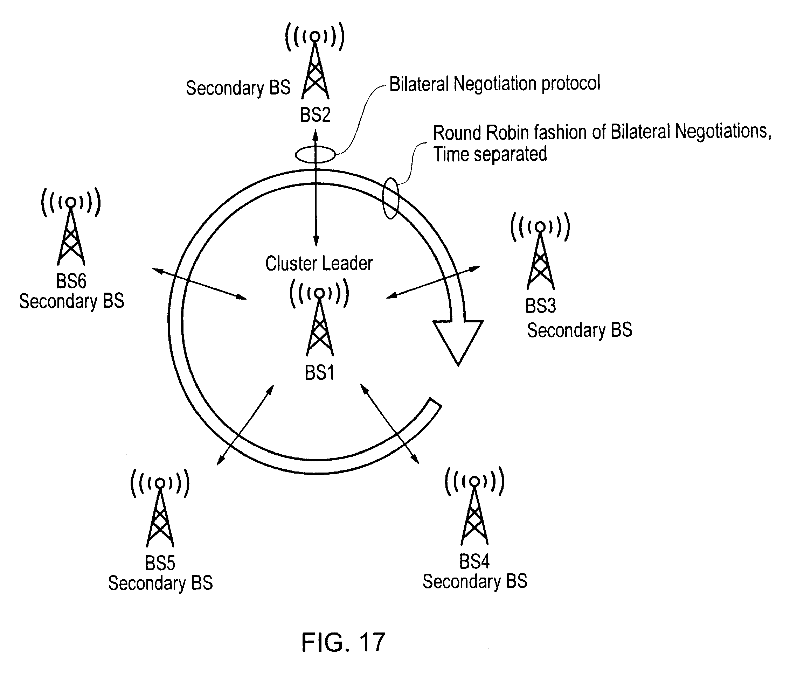

Figure 17 is a schematic diagram useful for understanding the overall approach of Methods 1 to 4. Figure 17 particularly relates to Methods 2 and 4, in which there is a single cluster, however it will be appreciated that Figure 17 could be adapted to represent Methods 1 and 3, in which two clusters are present.

Essentially, Figure 17 demonstrates the round-robin arrangement of sets of bilateral negotiations that occur in Methods 2 and 4. Each interested and engaged secondary BS (BS2, BS3, BS4, BS5, or BS6) takes its turn to negotiate with the cluster leader (BS1). After a full series of negotiations, a further series can occur, a so on and so forth. The order of the negotiations, and the involved BSs, may change from series to series. BS2 is shown as a secondary BS, but may also be a primary BS as shown in earlier figures. For example, the situation might be similar to Figure 11B, where BS2 can be a primary BS being lead by BS1.

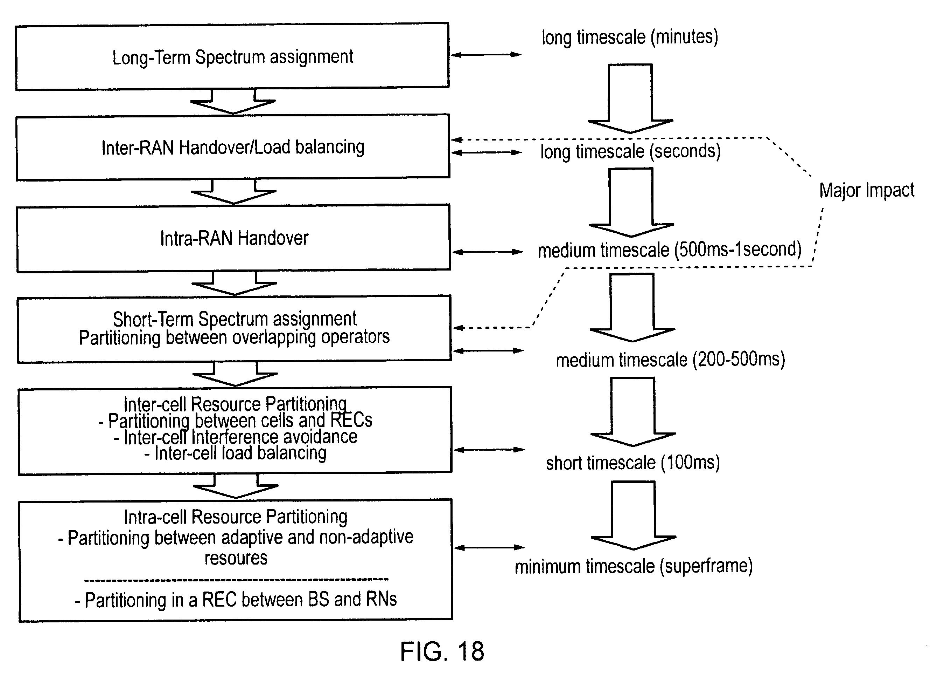

Figure 18 is a schematic diagram for understanding the main areas of impact that embodiments of the present invention may have in an overall spectrum control system, for example as explained with reference to Figures 3 to 8. In particular, embodiments of the present invention mainly impact "Inter-RAN Handover/Load balancing" and "ST Spectrum Assignment" operations.

In order to consider detailed examples of methods that may be carried out as part of the various steps of Methods 1 to 4, a number of assumptions will be considered. It is assumed that communications between the BSs happen either Over the Air (OTA) or over an IP link connecting them to each other. Each BS is considered to be a transmitter-receiver radio node. System 40 is considered to be a radio network, having of N transmitter-receiver nodes (BSs). As already mentioned, these BSs are assumed to be fixed and distributed uniformly in a square region of dimension L x L.

It is also assumed that the BSs have the capability to measure/estimate/look-up the interference inflicted on other BSs in each of a number of possible spectrum configurations which are introduced below. It is also assumed that those BSs have the capability to measure/estimate/look-up the interference received from other cells (other BSs) in each of those spectrum configurations.

It is assumed that each of the base stations has a number of different possible spectrum configurations (i.e. each defining an allocation of frequency bandwidth and optionally additionally the power levels/modulation and coding schemes to employ) that it may have assigned to it at any one time. By changing from one configuration to another, a BS's amount of assigned spectrum will change representative of an assignment of spectrum to or from another BS. Such possible configurations may be defined as a set:

$$C_i = [c_{1i} \quad c_{2i} \quad \cdots \quad c_{M_i i}], \quad i = 1,2 \qquad (1)$$

where $C_{ni}$ is the $n^{th}$ possible configuration of the spectrum for BS i (i.e. transmitter-receiver i), and $M_i$ is the total number of potential and possible such spectrum configurations for BS i. The variables m or p are used in place of the variable n in later description, however in each case the value of variable indicates which of the possible configurations is being referred to.

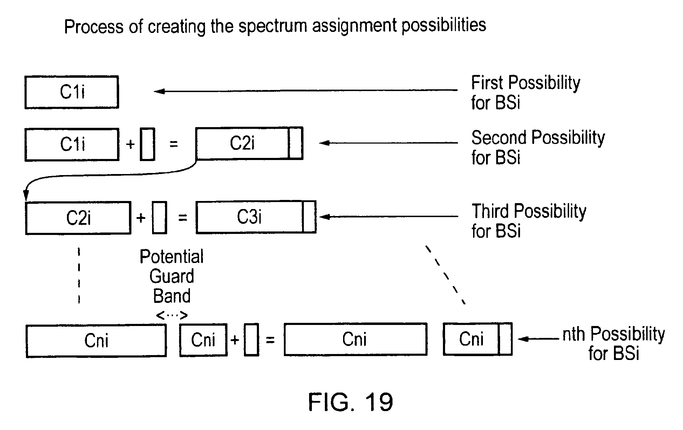

Figure 19 is a schematic diagram useful for understanding one possible way of determining the possible spectrum configurations for BS i. It will be appreciated that the process shown in Figure 19 is one simple and efficient way of determining a number of possible such configurations, however a number of possible configurations could of course be determined in another way. In particular, the process of Figure 19 does not generate every possible configuration of spectrum assignable to BS i, but instead determines a reasonable number of different configurations with a reasonable spread with reasonable complexity. Figure 19 may, of course, be adapted to generate every possible spectrum configuration that a BS may adopt, for example including complex assignments of spectrum in separated sub-chunks.

In Figure 19, the first possible configuration $C_{1i}$ is considered to be the minimum spectrum chunk for assignment, and the second and further possible configurations are generated in an iterative manner by adding one or two sub-chunks to the preceding possibility. In this way, n different possible configurations are generated, where n = M. Each such chunk and sub-chunk may be made up of a number of pre-defined sub-channels or channels.

It is also assumed that $B_i$ is the total bandwidth associated with each spectrum configuration for assignment, so that:

$$B_i = [B_{1i} \quad B_{2i} \quad \cdots \quad B_{M_i i}]$$
$$= [BW(c_{1i}) \quad BW(c_{2i}) \quad \cdots \quad BW(c_{M_i i})], \quad i = 1,2 \qquad (2)$$

where function BW(.) represents the allocated bandwidth of each such spectrum configuration.

The interference expected to be inflicted by BS i on the BS j (BS j being a BS other than BS i) relating to particular spectrum configurations can be expressed as:

$$I_{ij} = \begin{cases} f(c_{ni}, c_{pj}, \eta_{ij}, p_i) & if \quad c_{ni} \quad and \quad c_{pj} \quad Overlap \\ 0 & otherwise \end{cases} \quad (3)$$

where $C_{ni}$ is the $n^{th}$ possible configuration of the spectrum for BS i, where $C_{pj}$ is the $p^{th}$ possible configuration of the spectrum for BS j, where $p_i$ is the transmission power associated with BS i (i.e. transmitter-receiver i), and where $\eta_{ij}$ is the overall transmission gain associated with the wireless communication link between BS i and BS j. Essentially, the greater the overlap (or interspersal) between two possible spectrum configurations, the greater the amount of interference expected.

In a similar way, the interference expected to be inflicted on BS i associated with BS j relating to particular spectrum configurations can be expressed as:

$$I_{ji} = \begin{cases} f(c_{pj}, c_{ni}, \eta_{ji}, p_j) & if \quad c_{ni} \quad and \quad c_{pj} \quad Overlap \\ 0 & otherwise \end{cases} \quad (4)$$

The overall interference $\gamma_i$ expected to be received at BS i (or, say, cell i) from all the other base stations relating to particular spectrum configurations can therefore be determined as

$$\gamma_i = \sum_{j=1, j \neq i}^{N} I_{ji} \quad (5)$$

The overall interference $\beta_i$ expected to be inflicted by BS *i* on the other base stations relating to particular spectrum configurations can therefore be determined as

$$\beta_i = \sum_{j=1, i \neq j}^{N} I_{ij} \quad (6)$$

In order to have a fair comparison on received SIR in each base station, it is assumed that the received signal power in each *BS i* is expected to be $S_i$, so that:

$$S_i, \quad i = 1,2 \quad (7)$$

and
$$SIR_i = \frac{S_i}{\gamma_i} \quad (8)$$

It is finally assumed that total traffic loads handled at the beginning of a spectrum negotiation (e.g. before a prospective re-assignment of spectrum) by a BS i is:

$$T_i = \sum_{k=1}^{K} d_{ki} \qquad\qquad (9)$$

where $d_{ki}$ is the amount of data currently residing in the k th buffer of the i th base station.

For the benefit of further explanation, each BS is assigned with three thresholds. The first threshold $R_i$ indicates the maximum amount of received interference tolerable by BS i from other cells (BSs). The second threshold $I_i$ indicates the maximum amount of interference that may be inflicted by BS i on other cells (BSs). The third threshold $D_i$ indicates the maximum amount of data that may sit in the buffer(s) of BS i waiting for transmission.

With the above in mind, a number of possible detailed methods relating to the steps 1 to 7 of Methods 1 to 4 described above will now be considered.

Firstly, regarding step 1 of Methods 1 to 4 (e.g. for Method 1, step M1-1), the following example options are envisaged for making a decision at the interested BS as to whether to get engaged in ST spectrum assignment or not.

Option 1: It is considered that the interested BS concerned is BS i, and that it is capable of knowing the interference it receives from other BSs. In this scenario, BS i would be interested in taking part in the spectrum negotiations and would send a request to its cluster leader BS if:

$$\gamma_i > R_i \text{ and } T_i > D_i$$

Option 2: Again, it is considered that the interested BS concerned is BS i, and that it is capable of knowing the interference it receives from other BSs and the total interference it inflicts on the others BSs. In this scenario, BS i would be interested in taking part in the spectrum negotiations and would send a request to its cluster leader BS if:

$$\gamma_i > R_i \text{ and } T_i > D_i \text{ and } \beta_i > I_i$$

Secondly, regarding step 2 of Methods 1 to 4 (e.g. for Method 1, step M1-2), the following example options are envisaged for the leader of the cluster concerned to qualify and decide on the BSs that are going to be permitted to participate in the series of negotiations.

Option 1: The cluster leader BS accepts the request of all the requesting BSs.

Option 2: The cluster leader BS considers all the requests but only allows those BSs that did not participate in the previous series of negotiations to participate in the present series of negotiations.

Thirdly, regarding part A of steps 3 to 7 of Methods 1 to 4 (e.g. for Method 1, step M1-3A), the following example options are envisaged for the interested BS engaged in the negotiations to select a desired spectrum configuration to be adopted as the result of a prospective re-assignment.

Option 1: Each interested (i.e. non-leader) BS in turn is capable of knowing the interference it expects to receive from other BSs as a result of the proposed re-assignment. Each BS accordingly considers the range of available spectrum configurations $C_i = [c_{1i}\, c_{2i} \cdots c_{M_i i}]$, $i = 1 \cdots N$, and chooses the spectrum assignment $c_{gi} \in C_i$ with the highest possible bandwidth and the lowest possible level for $\gamma_i$. This may be considered to amount to a so-called "selfish" approach, and therefore be most appropriate for Methods 1 and 2.

Option 2: Each interested (i.e. non-leader) BS in turn is capable of knowing the interference it expects to receive from other BSs as a result of the proposed re-assignment and the total interference it expects to inflict on other BSs. Each BS accordingly considers the range of available spectrum configurations $C_i = [c_{1i}\, c_{2i} \cdots c_{M_i i}]$, $i = 1 \cdots N$, and chooses the spectrum assignment $c_{gi} \in C_i$ with the highest possible bandwidth and the lowest possible level for $\gamma_i$ and $\beta_i$. This may be considered to amount to a so-called "considerate" approach, and therefore be most appropriate for Methods 3 and 4.

Fourthly, regarding part B of steps 3 to 7 of Methods 1 to 4 (e.g. for Method 1, step M1-3B), the following example options are envisaged for cluster leader BSs concerned to make the decision to accept or reject the suggested spectrum configuration in the negotiation concerned.

Option 1: The cluster leader concerned, BS j, is capable of knowing the interference it is expected to suffer as a result of the suggested re-assignment. If this expected interference is below a threshold, the cluster leader accepts/ approves the suggested re-assignment. This may be considered to amount to a so-called "selfish" approach, and therefore be most appropriate for Methods 1 and 2.

Option 2: The cluster leader concerned, BS j, is capable of knowing the interference expected to be inflicted by the negotiating BS on the other secondary BSs (i.e. the other interested and engaged BSs) of the system (or of the cluster concerned) as a result of the suggested re-assignment. If this expected interference is below a threshold, the cluster leader accepts/approves the suggested re-assignment. This may be considered to amount to a so-called "considerate" approach, and therefore be most appropriate for Methods 3 and 4.

Option 3: The cluster leader concerned, BS j, is capable of knowing the interference expected to be suffered by the negotiating BS from the other secondary BSs (i.e. the other interested and engaged BSs) of the system (or of the cluster concerned) as a result of the suggested re-assignment. If this expected interference is below a threshold, the cluster leader accepts/approves the suggested re-assignment. This may be considered to amount to a so-called "selfish" approach, and therefore be most appropriate for Methods 1 and 2.

Option 4: The cluster leader concerned, BS j, is capable of knowing the interference expected to be suffered by the negotiating BS from the other secondary BSs (i.e. the other interested and engaged BSs) of the system (or of the cluster concerned), and inflicted by the negotiating BS on those other secondary BSs, as a result of the suggested re-assignment. If this expected interference (i.e. some combination of these two types of interference) is below a threshold, the cluster leader accepts/approves the suggested re-assignment. This may be considered to amount to a so-called "considerate" approach, and therefore be most appropriate for Methods 3 and 4.

Option 5: The cluster leader concerned, BS j, is capable of knowing the interference expected to be suffered by the negotiating BS from the other secondary BSs (i.e. the other interested and engaged BSs) of the system (or of the cluster concerned), and inflicted by the negotiating BS on those other secondary BSs, as well as the interference it itself is expected to suffer from the negotiating BS as a result of the suggested re-assignment. If this expected interference (i.e. some combination of these types of interference) is below a threshold, the cluster leader accepts/approves the suggested re-assignment. This may be considered to amount to a so-called "considerate" approach, and therefore be most appropriate for Methods 3 and 4.

Option 6: The cluster leader concerned, BS j, is capable of knowing the traffic load being handled by the negotiating secondary BS and the interference it is expected to suffer from the negotiating BS as a result of the suggested re-assignment. If the traffic load is above a critical threshold, the cluster leader accepts/approves the suggested re-assignment even if the interference is above a threshold.

Option 7: The cluster leader concerned, BS j, is capable of knowing the traffic load being handled by the negotiating secondary BS and of knowing the interference expected to be inflicted by the negotiating secondary BS on other secondary BSs in the system (or in the cluster concerned) as a result of the suggested re-assignment. If the interference is below an interference threshold, the cluster leader accepts/approves the suggested re-assignment. If the traffic load is above a traffic threshold, the cluster leader accepts/approves the suggested re-assignment, even if the interference is above the interference threshold (or another such threshold).

Option 8: The cluster leader concerned, BS j, is capable of knowing the traffic load being handled by the negotiating secondary BS and of knowing the interference expected to be suffered by the negotiating secondary BS from other secondary BSs in the system (or in the cluster concerned) as a result of the suggested re-assignment. If the traffic load is above a critical threshold, the cluster leader accepts/approves the suggested re-assignment even if the interference is above a threshold.

Option 9: The cluster leader concerned, BS j, is capable of knowing the traffic load being handled by the negotiating secondary BS, and of knowing the interference expected to be suffered by the negotiating secondary BS from other secondary BSs in the system (or in the cluster concerned), as well as the interference expected to be inflicted by the negotiating secondary BS on those others BSs as a result of the suggested re-assignment. If the traffic load is above a critical threshold, the cluster leader accepts/approves the suggested re-assignment even if this interference (i.e. some combination of these two types of interference) is above a threshold.

Option 10: The cluster leader concerned, BS j, is capable of knowing the traffic load being handled by the negotiating secondary BS. Additionally, the cluster leader is capable of knowing the interference expected to be suffered by the negotiating secondary BS from other secondary BSs in the system (or in the cluster concerned), the interference expected to be inflicted by the negotiating secondary BS on those others BSs, and the interference it expects to suffer itself from the negotiating secondary BS, as a result of the suggested re-assignment. If the traffic load is above a critical threshold, the cluster leader accepts/approves the suggested re-assignment even if this interference (i.e. some combination of these types of interference) is above a threshold.

Of course, the above "Options" may be used as alternatives to one another, or may be combined in any combination. The combination of "Options" used may change from time to time, for example in response to changing system requirements or in response to a trigger.

Fifthly, further possible ways to carry out the negotiations between the two BSs involved in each of steps 3 to 7 in Methods 1 to 4 will be considered. For simplicity, one such negotiation will be considered in isolation, i.e. by considering parts A and B of one of steps 3 to 7 in those Methods (e.g. for Method 1, component steps M1-3A and M1-3B), as an example negotiation. The further methods of negotiation may then be applied to any of the negotiations in Methods 1 to 4 by analogy.

17

In Methods 1 to 4, the two BSs in each negotiation are a cluster leader BS (e.g. BS1) and an interested and engaged BS (e.g. BS3). For the benefit of further explanation, the numbering of the BSs in system 40 will be abandoned and instead the two concerned BSs will be considered generically to be BS1 and BS2.

Four possible methods (Methods A, B, C and D) for negotiation (conducting spectrum sharing, or spectrum exchange) between the two involved BSs (BS1 and BS2) will now be described, as further examples of how the present invention may be put into effect. These methods relate to short-term spectrum assignment between the two involved bases stations, but could of course be used on any timescale. As mentioned above, the negotiations described in respect of Methods A to D may be substituted for any of the negotiations in Methods 1 to 4.

In each of Methods A to D, it is assumed that BS1 is a potential assignor of spectrum to BS2, with BS2 thus being a potential assignee of such spectrum. Moreover, in each of Methods A to D, the BS to decide whether or not to approve the proposed re-assignment is BS1. Accordingly, in respect of Methods A to D, BS1 may be considered to be equivalent to the cluster leader, and BS2 may be considered therefore to be the corresponding interested and engaged BS. Of course, equivalent methods to Methods A to D could be implemented in which BS1 is the potential assignee rather than the potential assignor. However, detailed discussion of such equivalent methods is omitted to avoid duplication of description.

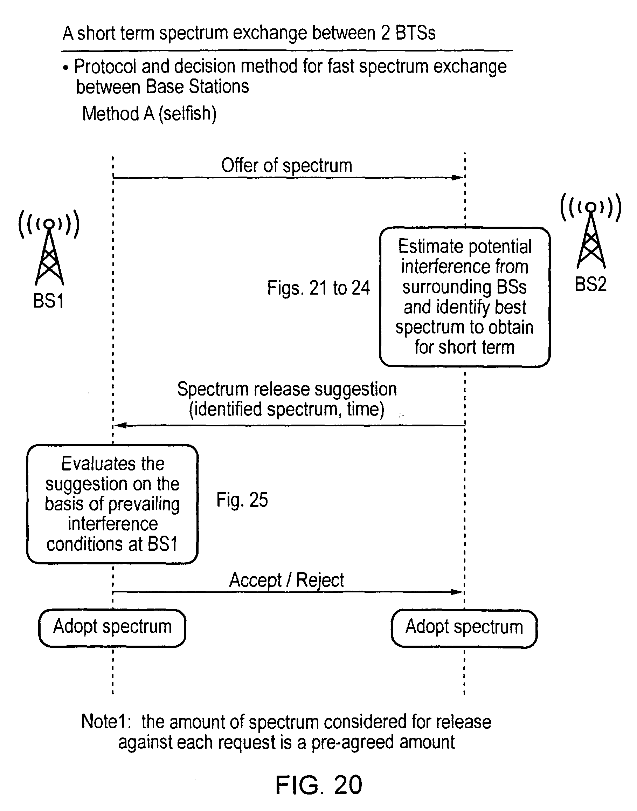

Figure 20 is a schematic diagram representing Method A, which may form part of an embodiment of the present invention. Figure 20 indicates the communications between BS1 and BS2, and the actions performed at those BSs during operation of Method A.

Method A, Selfish Approach

In Method A, BS1 informs BS2 that it has a portion of spectrum that is available for re-assignment. For example, BS1 may not have enough traffic load at that time, or may not be expecting enough traffic load at the time of the proposed re-assignment, to justify retaining all of its currently assigned spectrum. Effectively, BS1 may temporarily have, or be expecting to have, available redundant spectrum.

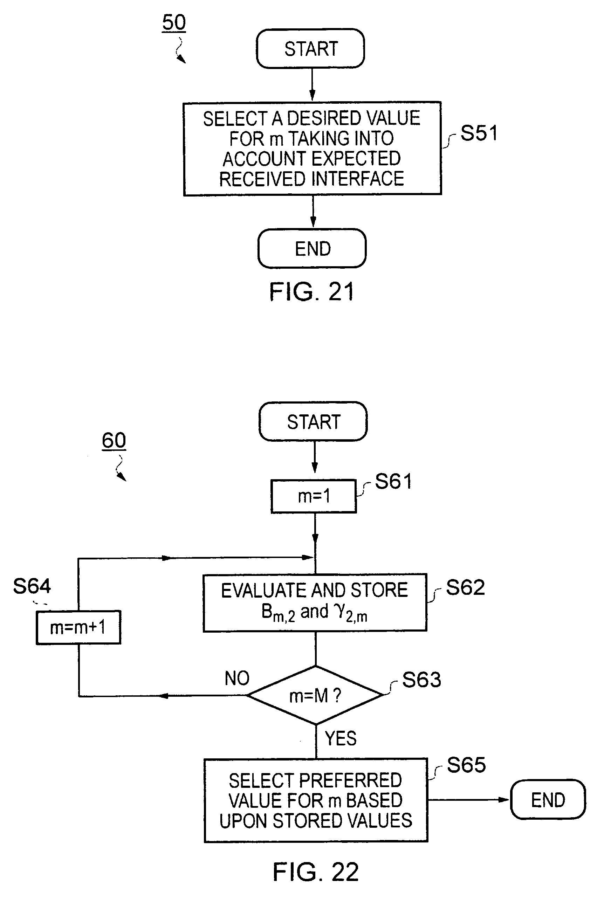

In response, BS2 performs a spectrum-selection operation to identify a spectrum configuration that it would like to adopt. Examples of such an operation will be described later with reference to Figures 21 to 24. As a result of the spectrum-selection operation, BS2 then informs BS1 of its suggestion of the desired spectrum configuration.

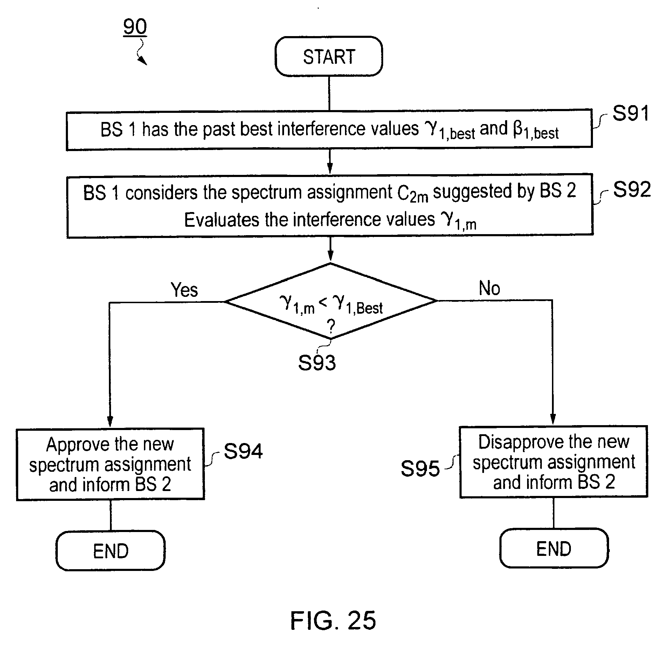

BS1 then performs a spectrum-evaluation operation to evaluate the suggested spectrum configuration and decide whether or not to approve the re-assignment. Such an operation will be described later with reference to Figure 25. Following the spectrum-evaluation operation, BS1 then informs BS2 of whether or not it has approved the suggested spectrum re-assignment.

If BS1 approves the suggested re-assignment, that re-assignment occurs and BS1 and BS2 adopt their respective spectra taking account of the re-assignment. That is, BS2 adopts its desired spectrum configuration and BS1 adopts a new configuration corresponding to the configuration adopted by BS2. Such re-assignment may occur at a pre-determined time negotiated between BS1 and BS2. Alternatively, it may be that BS1 and BS2 are configured to carry out re-assignments on a regular or semi-regular basis, in which case the approved re-assignment may take effect at the next planned re-assignment time. Such re-assignments may take effect for a predetermined amount of time, or for an amount of time negotiated between the two BSs. An external apparatus may control the timings of such re-assignments and/or the amount of time for which such re-assignments have effect. A trigger may control the timings of the re-assignments. If BS1 does not approve the suggested re-assignment, that re-assignment does not occur and BS1 and BS2 adopt their existing respective spectra.

Figure 21 is a flow diagram of a method 50, being an example of a spectrum-selection operation as mentioned above. Method 50 comprises step S51, in which BS2 selects a desired value of m taking into account expected received interference. As described above with reference to Figure 19, each value of m represents a different spectrum configuration, and therefore the selecting of a value of m is equivalent to the selecting a spectrum configuration desired (to be the adopted spectrum configuration following the re-assignment), referred to herein as the spectrum configuration desired for re-assignment. Each different configuration will likely lead to a different amount of expected received interference for BS2. Therefore, by taking into account such expected received interference, BS2 can select a desired spectrum configuration for suggestion to BS1 as in Figure 20.

One way for BS2 to select a desired portion of spectrum is to assess the full range of values of m, i.e. from 1 to M, and then pick the value of m that provides, for example, the least expected received interference. This could be considered to be a way of picking the "best" value of m. Alternatively, BS2 could assess values of m in an order, and pick the first value of m that provides, for example, an expected received interference value below a threshold. This could be considered to be a way of picking the "first acceptable" value of m. It will be appreciated that a desired value of m could be chosen in many other ways, for example taking into account a history of previously-selected such values.

Figure 22 is a flow diagram of a method 60, being another example of a spectrum-selection operation. Method 60 is one way of picking the "best" value of m, and comprises steps S61 to S65. As well as considering expected received interference, this method also considers bandwidth associated with the different configurations m. As can be seen from Figure 22, this method sets m=1 in step S61, and then evaluates and stores in step S62 values of $B_{m,2}$ (bandwidth) and $\gamma_{2,m}$ (expected received interference) for each value of m, based upon steps S63 and S64. Then, the preferred value for m is chosen in step S65 based on the stored values. In this way, it is possible to choose the so-called "best" value of m, which may be the one giving the lowest expected received interference or the highest bandwidth, or the one best satisfying some other requirement.

In a simple system, BS2 may assess the configurations with a higher amount of bandwidth than it currently has allocated to have higher interference values (which increase with increasing bandwidth). However many parameters have an impact in interference, as set out in more detail below.

In a more realistic situation, in particular when the BSs are not well separated in the frequency domain, increasing the bandwidth allocated to a BS can also reduces the received interference.

In real-life situations, interference does not necessarily increase with bandwidth. Many parameters have an impact on interference, depending on the system, its control and the demands on the system, amongst others. Relevant parameters include antenna orientation in the BS, the transmission scheme (say FDD or TDD) in the BS, the nature of sectorization within the cell, the power control scheme proposed, the handover scheme proposed in the cell, the nature of traffic being handled by BS at each point of time and the number of active subscribers assigned to each BS at each point of time. It also depends on the smart antenna scheme employed in the BS.

Perhaps the most important additional parameter to be taken into consideration is the transmission power (say for example BS2 transmits currently in each of its spectrum sub-chunks with different powers). Another important parameter is the interference leakage between two adjacent sub-bands allocated to different BSs. In telecom systems one practical solution is to introduce a guard band to prevent leakage, but this is not entirely effective. If a current spectrum configuration for one BS is sandwiched between two sub-chunks of another, an alternative configuration may allocate a larger amount of spectrum, but also have lower potential interference (less potential leakage). This is of course true particularly if the power profiles, the antenna orientation and sectorization and the outcome of the smart antenna solution are all in favour of a low interference for a new assignment in which overall separation distance between the two BSs is higher than before.

However, it is worth noting that depending on the parameters mentioned above, it is also possible to envisage the opposite potential scenario in which the sandwiched configuration is actually preferred to the other configuration, especially if a smart antenna solution is used.

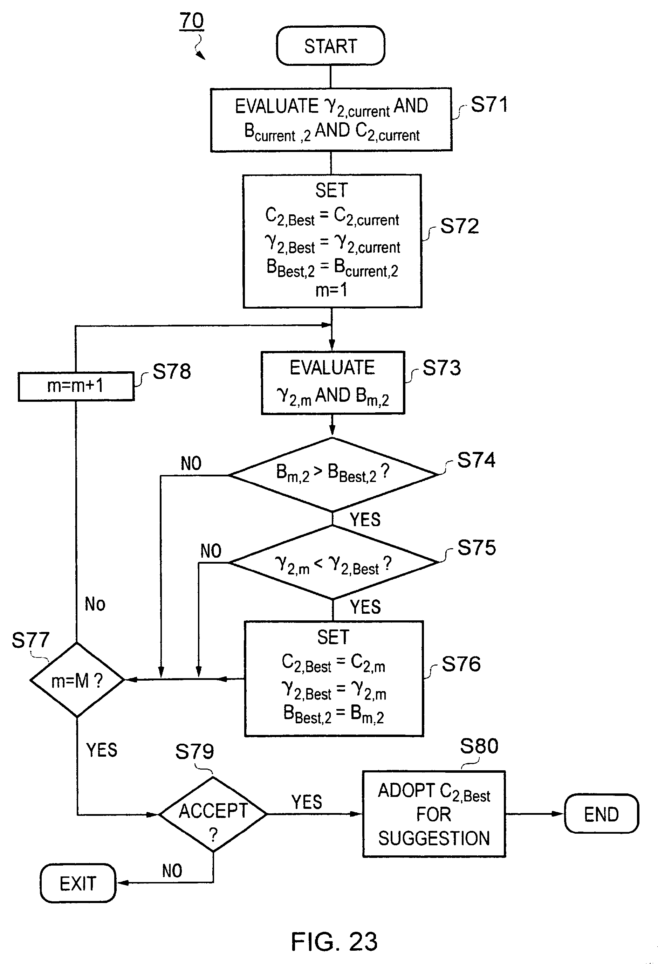

Figure 23 is a flow diagram of a method 70, being yet another example of a spectrum-selection operation. Method 70 comprises steps S71 to S80.

Method 70 takes account of the current state of BS2, in order to try to improve that state by means of the proposed spectrum re-assignment. In step S71, the current values of received interference, bandwidth and spectrum configuration are therefore evaluated. In step S72, those evaluated values are stored as "best" values, so that any other values can be compared against those "best" values to check that an improvement in conditions is likely to occur. Also in step S72, a variable m is preset to m=1.

In step S73, the expected received interference and bandwidth are evaluated for the current value of m, i.e. for the spectrum configuration with that value of m. In step S74, the bandwidth evaluated in step S73 is compared against the corresponding "best" value. If the evaluated bandwidth is not greater than the corresponding "best" value, the method proceeds to step S77. If the evaluated bandwidth is greater than the corresponding "best" value, the method proceeds to step S75 in which the expected interference evaluated in step S73 is compared against the corresponding "best" value. Similarly, if the evaluated expected interference is not less than the corresponding "best" value, the method proceeds to step S77. If, however, the evaluated expected interference is less than the corresponding "best" value, the method proceeds to step S76.

In step S76, it is considered that the values evaluated in step S73 are better than the "best " values stored in step S72. Therefore, the values evaluated in step S73 are set as the new "best" values. The method then proceeds to step S77.

In step S77 it is determined whether the current value of the variable m is the maximum value M. If this is not the case, the value of m is incremented in step S78 and then the method returns to step S73. In this way, all values of m are considered.

If, in step S77, it is determined that the current value of the variable m is the maximum value M, the method proceeds to step S79. In step S79 a decision is made as to whether to accept the result of carrying out method 70. For example, it is possible that while method 70 is being carried out, communication conditions have changed substantially, such that it may be necessary to either abandon re-assignment entirely or "re-think" what spectrum change is required. For example, it may be that at the point of carrying out step S79 BS2 is no longer a prospective assignee of spectrum but instead a prospective assignor. If in step S79 it is decided that the result of carrying out method 70 should not be accepted, the method is exited. Following such exit, method 70 may be re-started or some other method may be followed.

If in step S79 it is decided that the result of carrying out method 70 should be accepted, the method proceeds to step S80 in which the currently-stored "best" values are adopted. That is, these values (including the corresponding value of m) will serve as the basis of the suggestion of desired spectrum sent from BS2 to BS1 in Method A. It will of course be appreciated that step S79 may be optional, i.e. such that step S80 follows on from step S77 without any decision as to whether to accept the result of method 70.

In this and the following flow diagrams involving comparisons between values using "<" and ">", and a consequent choice of paths, the skilled person will appreciate that where the values to be compared are equal, the method should default along one pathway or the other to avoid completion errors.

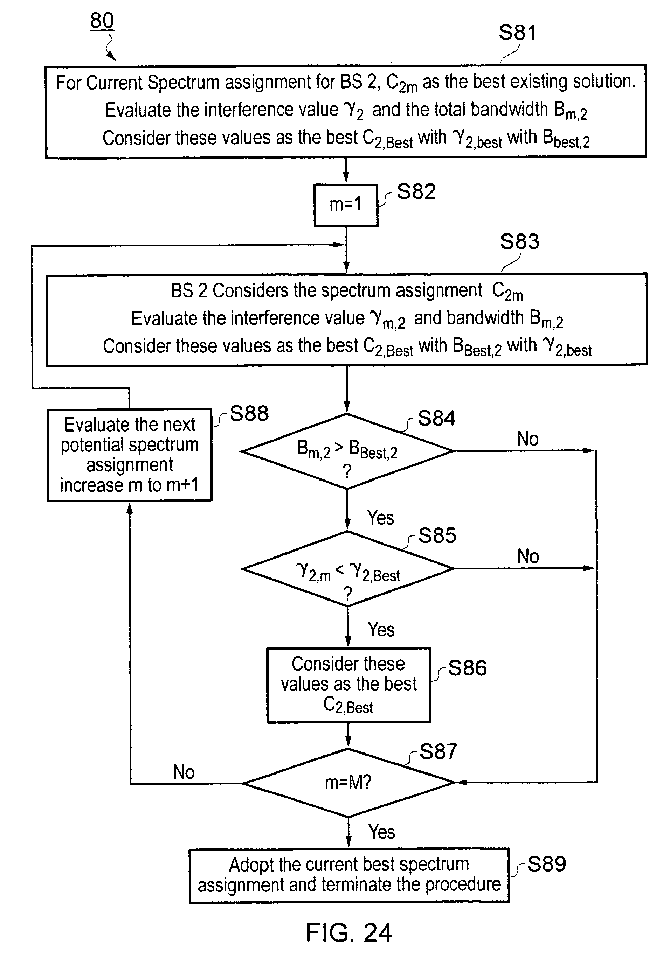

Figure 24 is a flow diagram of a method 80, being yet another example of a spectrum-selection operation. Method 80 comprises steps S81 to S80, and may be considered an alternative to method 70.

In step S81, the current values of received interference, inflicted interference, bandwidth and spectrum configuration are evaluated and stored as "best" values. In step S82, a variable m is preset to m=1.

In step S83, the expected received interference, inflicted interference, bandwidth and spectrum configuration are evaluated for the current value of m, i.e. for the spectrum configuration with that value of m. In step S84, the bandwidth evaluated in step S83 is compared against the corresponding "best" value. If the evaluated bandwidth is not greater than the corresponding "best" value, the method proceeds to step S87. If the evaluated bandwidth is greater than the corresponding "best" value, the method proceeds to step S85 in which the expected received interference evaluated in step S83 is compared against the corresponding "best" value. Similarly, if the evaluated expected received interference is not less than the corresponding "best" value, the method proceeds to step S87. If, however, the evaluated expected received interference is less than the corresponding "best" value, the method proceeds to step S86.

In step S86, it is considered that the values evaluated in step S83 are better than the "best" values. Therefore, the values evaluated in step S83 are set as the new "best" values. The method then proceeds to step S87.

In step S87, it is determined whether the current value of the variable m is the maximum value M. If this is not the case, the value of m is incremented in step S88 and then the method returns to step S83.

If, in step S87, it is determined that the current value of the variable m is the maximum value M, the method proceeds to step S89. In step S89, the currently-stored "best" values are adopted. That is, these values (including the corresponding value of m) will serve as the basis of the suggestion of desired spectrum sent from BS2 to BS1 in Method A.

Of course, although expected inflicted interference values are evaluated in method 80, it will appreciated that this is not essential, since those values have no effect on the operation of method 80.

As mentioned above, as a result of a spectrum-selection operation (examples of which have been explained above), BS2 then informs BS1 of its suggestion of the desired spectrum configuration to be adopted. BS1 then performs a spectrum-evaluation operation to evaluate the suggested spectrum and decide whether or not to approve the re-assignment. Figure 25 is a flow diagram of a method 90, being an example of such a spectrum-evaluation operation. Method 90 comprises steps S91 to S95.

Method 90 takes account of the current state of BS1, so that BS1 can determine whether the proposed re-assignment of spectrum is likely to improve that state, or not. In step S91, the current values of received interference and inflicted are evaluated and stored as "best" values, so that any other values can be compared against those "best" values to check that an improvement in conditions is likely to occur. Such stored values may be the current values, or recent best values.

In step S92, the suggestion of spectrum $C_{2,m}$ (assuming the value of m is the value chosen by BS2) for re-assignment made by BS2 is considered, and the expected received interference for BS1 given the suggested re-assignment is evaluated, i.e. for the spectrum configuration with the suggested value of m. In step S93, the expected received interference for BS1 evaluated in step S92 is compared against the corresponding "best" value of step S91. If the evaluated expected received interference is less than the corresponding "best" value, the method proceeds to step S94. If, however, the evaluated expected received interference is not less than the corresponding "best" value, the method proceeds to step S95. In step S94 the proposed re-assignment is approved, and in step S95 the proposed re-assignment is disapproved.

It will of course be appreciated that although interference inflicted by BS1 is considered in step S91, it is not essential, since inflicted interference has no bearing on the execution of method 90.

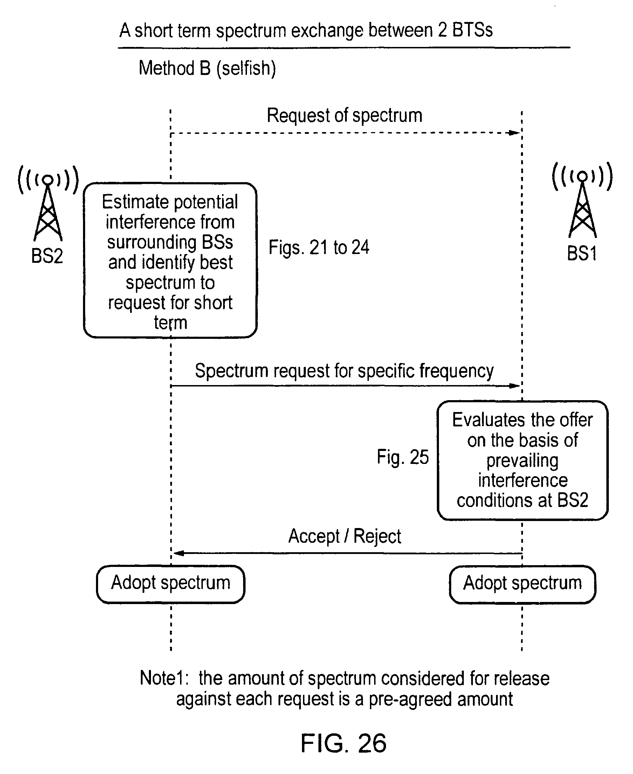

Figure 26 is a schematic diagram representing Method B, which may form part of an embodiment of the present invention. Figure 26 indicates the communications between BS1 and BS2, and the actions performed at those BSs during operation of Method B.

Method B, Selfish Approach

In Method B, BS2 informs BS1 that it has a requirement for extra spectrum, in the form of a spectrum request. For example, BS2 may have an overload of traffic at that time, or may be expecting an overload at the time of the proposed re-assignment. Effectively, BS2 may temporarily have, or be expecting to have, a shortage of available spectrum. Such a need for spectrum may be an urgent need for spectrum, or a high level of need for spectrum, and embodiments of the present invention may extend to indicating the level of importance of such a request for spectrum.

Having notified BS1 of such a requirement, BS2 performs a spectrum-selection operation to identify a spectrum configuration that it would like to adopt. Examples of such an operation have already been described above with reference to Figures 21 to 24 and accordingly further such description is omitted. As a result of the spectrum-selection operation, BS2 then informs BS1 of its suggestion of the desired spectrum configuration.

BS1 then performs a spectrum-evaluation operation to evaluate the suggested spectrum configuration and decide whether or not to approve the re-assignment. Such an operation has already been described above with reference to Figure 25. Following the spectrum-evaluation operation, BS1 then informs BS2 of whether or not it has approved the suggested spectrum re-assignment.

If BS1 approves the suggested re-assignment, that re-assignment occurs and BS1 and BS2 adopt their respective spectra taking account of the re-assignment. Accordingly, it will be appreciated that Method B is essentially similar to Method A, except that it is initiated by a request from BS2 for spectrum, rather than by an offer from BS1 of spectrum.

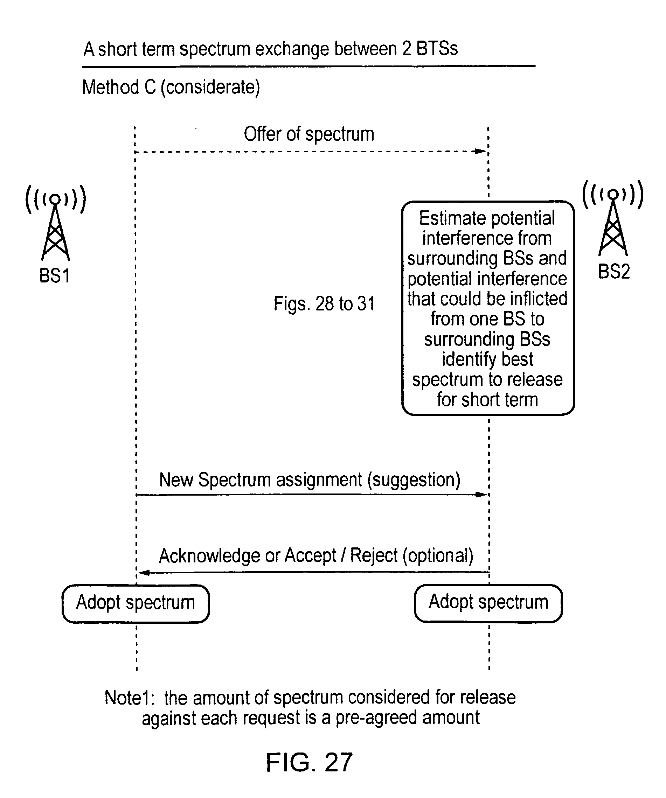

Figure 27 is a schematic diagram representing Method C, which may form part of an embodiment of the present invention. Figure 27 indicates the communications between BS1 and BS2, and the actions performed at those BSs during operation of Method C.

Method C, Considerate Approach

Method C is closely similar to Method A in that it relates to an offer from BS1 to BS2 of available spectrum. The main difference between Method C and Method A, is that in Method C inflicted interference is taken into account as well as received interference. As a result, Method C may be considered a "considerate" approach, whereas Method A may be considered a "selfish" approach. In fact, it will be appreciated that Methods C and D are "considerate" versions of "selfish" Methods A and B, respectively. Accordingly, Methods A and B may be most appropriate for Methods 1 and 2, and Methods C and D may be most appropriate for Methods 3 and 4. However, any combination of Methods A to D in Methods 1 to 4 may be used, to create "hybrid" approaches.

In Method C, BS1 informs BS2 that it has a portion of spectrum that is available for re-assignment. For example, BS1 may not have enough traffic load at that time, or may not be expecting enough traffic load at the time of the proposed re-assignment, to justify retaining all of its currently-assigned spectrum. Effectively, BS1 may temporarily have, or be expecting to have, available redundant spectrum.

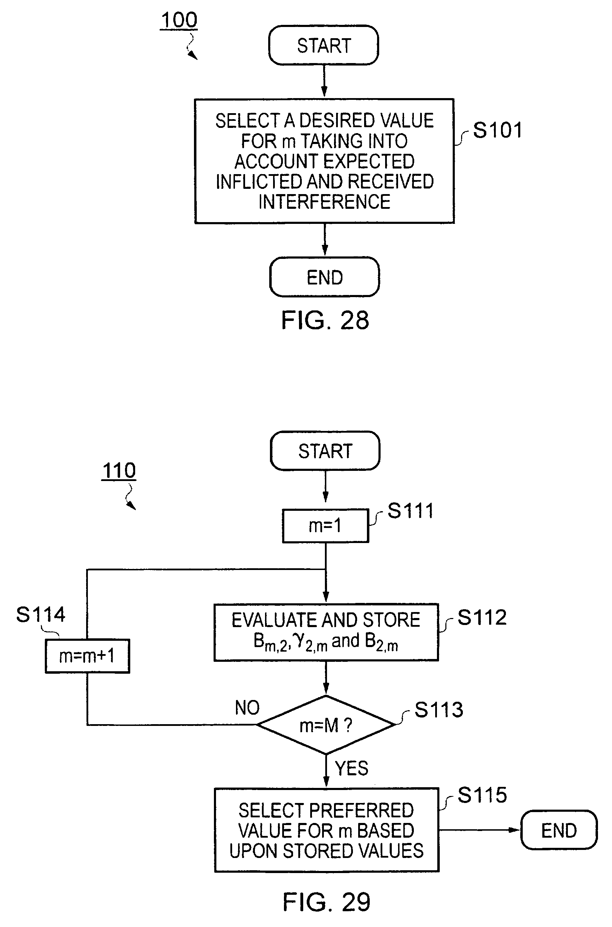

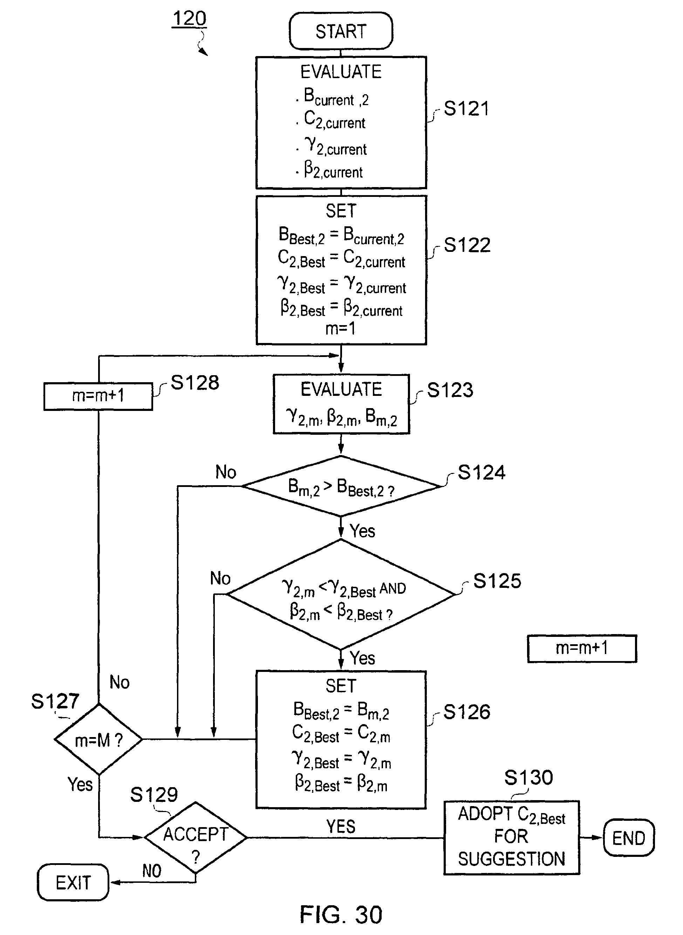

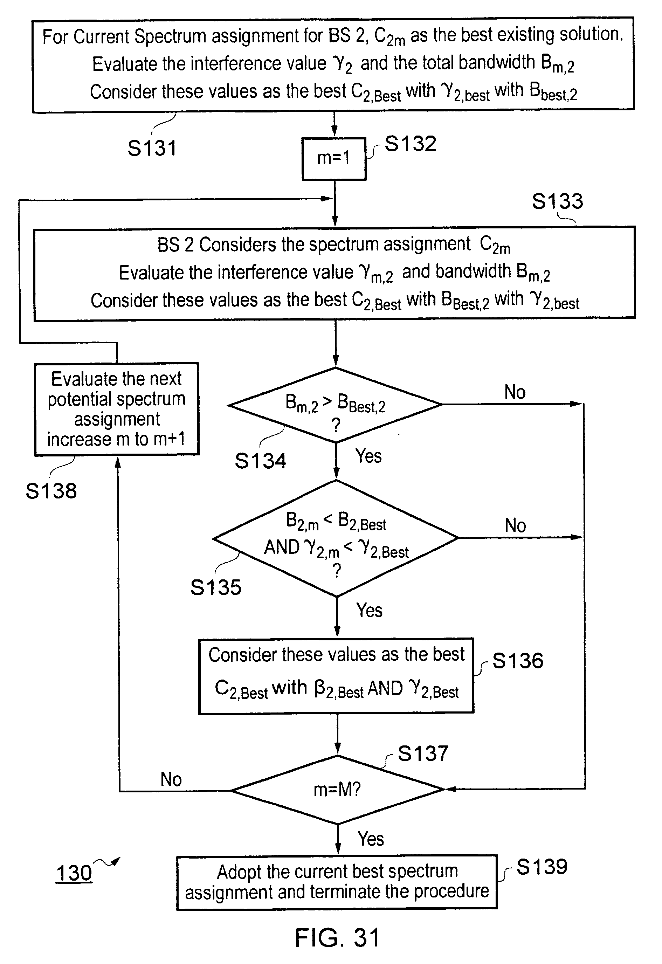

In response, BS2 performs a spectrum-selection operation to identify a spectrum configuration that it would like to adopt. Spectrum-selection operations suitable for use in Method C may be considered to be "considerate" versions of the so-called "selfish" spectrum-selection operations of Figures 21 to 24. Examples of spectrum-selection operations suitable for Method C are shown in Figures 28 to 31. As a result of the spectrum-selection operation, BS2 then informs BS1 of its suggestion of the desired spectrum configuration.

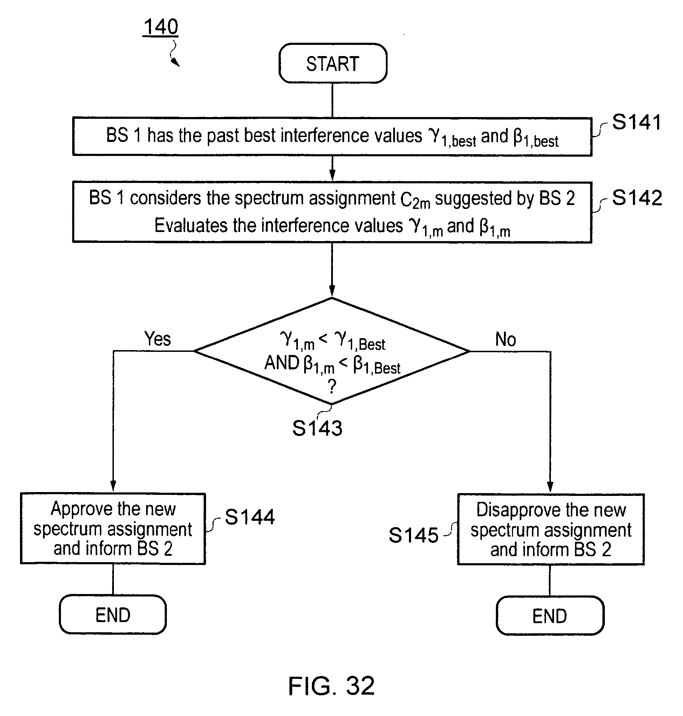

BS1 then preferably performs a spectrum-evaluation operation to evaluate the suggested spectrum and decide whether or not to approve the re-assignment. A spectrum-evaluation operation suitable for use in Method C may be considered to be a "considerate" version of the so-called "selfish" spectrum-evaluation operation of Figure 25. An example of a spectrum-evaluation operation suitable for Method C is shown in Figure 32. Following the spectrum-evaluation operation, BS1 then informs BS2 of whether or not it has approved the suggested spectrum re-assignment.

If BS1 approves the suggested re-assignment, that re-assignment occurs and BS1 and BS2 adopt their respective spectra taking account of the re-assignment.

As shown in Figure 27, it is possible that BS1 would not carry out a spectrum-evaluation operation to evaluate the spectrum configuration suggested by BS2, and decide whether or not to approve the re-assignment. Instead, it is possible that BS1 would simply acknowledge the suggestion of BS2, following which the re-assignment would occur. That is, it is possible that BS1 automatically accepts the suggestion of BS2. Such automatic acceptance may usefully be employed in Method C (and also in Method D) given that the method is "considerate" and accordingly, as will be appreciated below, that BS2 has taken into account inflicted interference. In this way, it is possible to avoid carrying out a spectrum-evaluation operation. Of course, such automatic acceptance could be employed in Methods A and B, similarly to avoid carrying out a spectrum-evaluation operation.

Figures 28 to 31 are flow diagrams of methods 100, 110, 120 and 130, being examples of spectrum-selection operations for use in Method C as mentioned above. Methods 100, 110, 120, and 130 are closely similar to methods 50, 60, 70 and 80, respectively, except that inflicted interference is considered as well as received interference. Accordingly, the detailed description of methods 50, 60, 70 and 80 applies analogously to methods 100, 110, 120 and 130, and therefore a detailed description of methods 100, 110, 120 and 130 is omitted. It is of course possible that methods 50, 60, 70 and 80 could be adapted to consider inflicted interference instead of received interference.

Similarly, Figure 32 is a flow diagram of a method 140, being an example of a spectrum-evaluation operation for use in Method C as mentioned above. Method 140 is closely similar to method 90, except that inflicted interference is considered as well as received interference. Accordingly, the detailed description of method 90 applies analogously to method 140, and therefore a detailed description of method 140 is omitted. It is of course possible that method 90 could be adapted to consider inflicted interference instead of received interference.

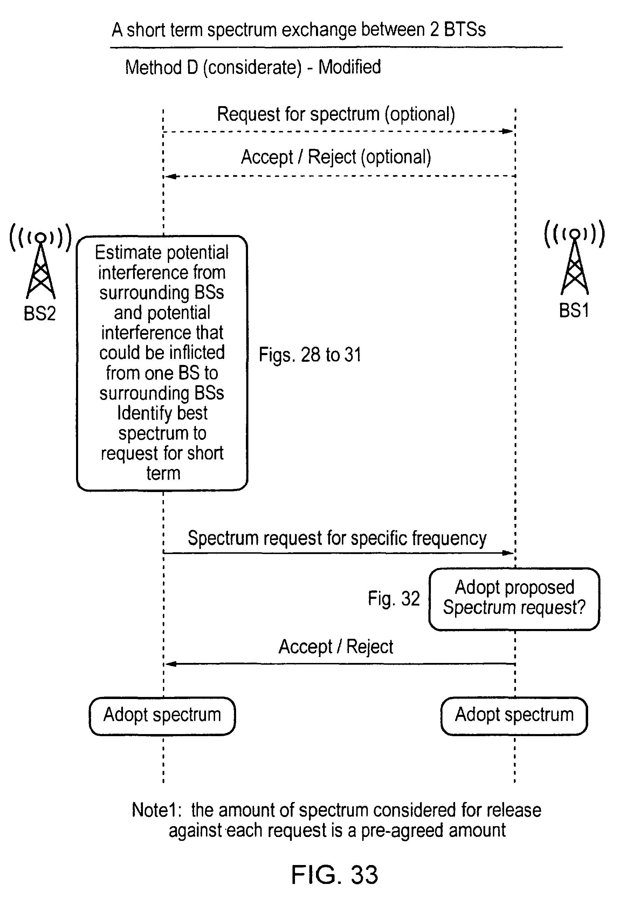

Figure 33 is a schematic diagram representing Method D, which may form part of an embodiment of the present invention. Figure 33 indicates the communications between BS1 and BS2, and the actions performed at those BSs during operation of Method D.

Method D, Considerate Approach

Method D is closely similar to Method B in that it relates to a request from BS2 to BS1 for extra spectrum. The main difference between Method D and Method B, is that in Method D inflicted interference is taken into account as well as received interference. As a result, Method D may be considered a "considerate" approach, whereas Method B may be considered a "selfish" approach.

In Method D, BS2 informs BS1 that it has a requirement for extra spectrum, in the form of a spectrum request. BS2 may have an overload of traffic at that time, or may be expecting an overload at the time of the proposed re-assignment. Effectively, BS2 may temporarily have, or be expecting to have, a shortage of available spectrum. Such a need for spectrum may be an urgent need for spectrum, or a high level of need for spectrum, and embodiments of the present invention may extend to indicating the level of importance of such a request for spectrum. The request is not essential, and neither is it in Method B, as the process could be triggered in another way.

Such a request may be responded to by BS1 in the form of an acknowledgement, or an initial acceptance or rejection of BS2's application for re-assignment (as shown in Figure 33). This may be useful when, for example no spectrum-evaluation operation is performed, as suggested above with reference to Method C.

Having notified BS1 of such a requirement, BS2 performs a spectrum-selection operation to identify a spectrum configuration that it would like to adopt. Examples of such an operation have already been described above with reference to Figures 28 to 31, and accordingly further such description is omitted. As a result of the spectrum-selection operation, BS2 then informs BS1 of its suggestion of the desired spectrum configuration.

BS1 then optionally performs a spectrum-evaluation operation to evaluate the suggested spectrum configuration and decide whether or not to approve the re-assignment. Such an operation has already been described above with reference to Figure 32. Following the spectrum-evaluation operation, BS1 then informs BS2 of whether or not it has approved the suggested spectrum re-assignment.

If BS1 approves the suggested re-assignment, that re-assignment occurs and BS1 and BS2 adopt their respective spectra taking account of the re-assignment. Accordingly, it will be appreciated that Method D is essentially similar to Method C, except that it is initiated by a request from BS2 for spectrum, rather than by an offer from BS1 of spectrum.

Figures 21 to 24 and 28 to 31 show spectrum-selection operations and Figures 25 and 32 show spectrum-evaluation operations. Any such spectrum-selection operation and any such spectrum-evaluation operation may be used in Methods A to D, for example leading to hybrid "considerate/selfish" methods.

Looking back to Figure 1, either of BS1 and BS2 may inform a GW or the CN or another BS of the result of spectrum negotiations. For example, information regarding whether re-assignment has been agreed and what spectrum is being assigned (and/or for how long) may be communicated across the network for processing elsewhere. A central record of re-assignments may for example be created.

In the above Methods A to D (and similarly in Methods 1 to 4 generally), it will be appreciated that the advantage of "selfish" approaches over "considerate" approaches is that information about the interference inflicted on other base stations is not required, leading to less signalling overhead or less complexity. "Considerate" approaches may be more advantageous than "selfish" approaches because they are more likely to lead to an overall improved network performance, for example in terms of fairness of performance between different BSs (which may belong to different operators).

**Interference Measurements**

In the Methods A to D (and in Methods 1 to 4 generally), interference values (being indicators of expected interference) are evaluated and considered in order to select a spectrum configuration for re-assignment and also in order to decide whether to approve the re-assignment. It is envisaged that such values need not be evaluated each time the method is executed, and may for example be evaluated in advance and pre-stored. For example, Methods A to D may, instead of evaluating such values, access the values from a stored look-up table. Such values may be stored locally within the relevant BS, or may be stored remotely in an external apparatus.

The present invention extends to approaches to obtain interference values for use in methods embodying the present invention, for example in Methods A to D described above. A number of such approaches will now be described to enable a better understanding of the present invention. These approaches will be described with Methods A to D in mind, but it will be appreciated that they may be adapted for use more generally in Methods 1 to 4.

The first to fifth approaches mentioned below relate to interference inflicted by one BS on another such BS. The sixth and seventh approaches relate to interference inflicted by UEs served by one BS on another BS. Both types of interference are important and are therefore considered separately.

First Approach:

As a first approach, before making the system of BSs (i.e. the N BSs including BS1 and BS2 as mentioned above with reference to equation (1)) operational, a number of measurements/estimations are performed for each BS assuming isolated operation (i.e. an absence of other causes of interference). These measurements/estimations are carried out such that if any specific BS switches on and starts to transmit using a particular spectrum configuration C, thereby having a change in transmission power (dP) in that spectrum configuration C, the expected resultant change in interference (dl) inflicted on any target BS of the system (or cluster, as appropriate) is known. Each BS then establishes a table of parameters so that for each possible spectrum configuration C and transmission power P, the expected interference inflicted on each other BS of the system is known.

Second Approach:

A second approach is envisaged, which is similar to the first approach. Each BS causes an initial measurement to be carried out, employing a particular spectrum configuration C and a default transmission power level P, so that it can determine how much interference rise it causes in any other target base station when it transmits in that particular spectrum configuration C with the default power P. The base interference rises in the other BSs are stored in the BS concerned. Each BS is also aware of the average propagation conditions between itself and each other BS (represented by $\eta$ in the above equations). Each BS then, for each change of power (dP) and each different assignment C, estimates the potential change in interference (dl) expected at each other BS. This second approach accordingly generates a table of parameters similar to that generated in the first approach, but using the initial measurement to estimate the other required parameters.

Third Approach:

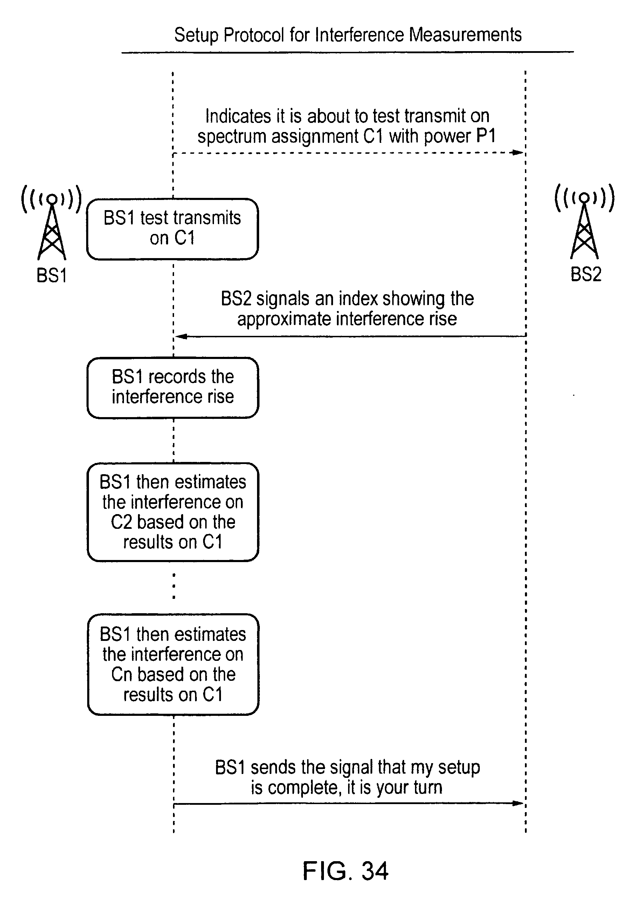

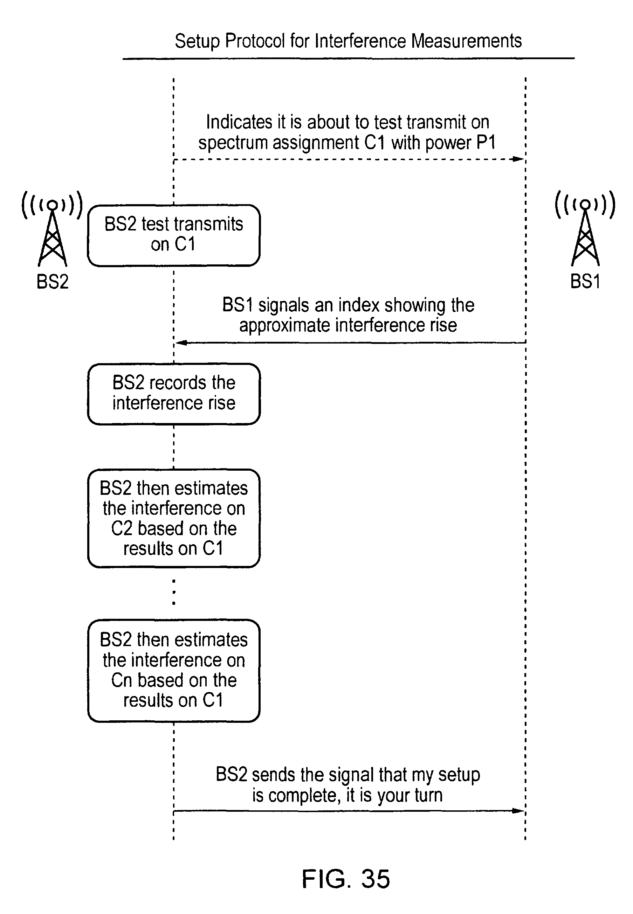

A third approach is envisaged which corresponds to one possible way of implementing the above-described second approach. It is assumed that the radio-channel fading conditions remain substantially unchanged when a BS changes from transmitting with one spectrum configuration (e.g. *C1*) to another spectrum configuration (e.g.*C2*). With this in mind, Figures 34 and 35 show possible actions and communications that could be carried out by BS1 and BS2 in the third approach.

In Figure 34, BS1 initially indicates to BS2 that it is about to enter a test phase and test transmit using spectrum configuration C1 with power P1. As indicated by the dashed arrow in Figure 34, this initial indication is not essential, as both BS1 and BS2 may carry out the third approach in response to an external trigger or at a pre-determined test time.

BS1 then test transmits using spectrum configuration C1 with power P1 and (although not shown in Figure 34) BS2 takes a measure of the interference rise as a result of the test transmission from BS1. BS2 then signals to BS1 an index representing the approximate interference rise, and BS1 makes a record thereof.

As indicated in Figure 34, BS1 then estimates the interference expected to be suffered by BS2 as a result of transmission using each of spectrum assignments C2, C3, ...Cn. BS1 then signals to BS2 that it has completed its test phase, and that BS2 may carry out its own test phase.

Figure 35 represents the same sequence of actions and communications as shown in Figure 34, except that BS2 enters the test phase and transmits, and BS1 takes the interference measurement and signals an index back to BS2. Accordingly, duplicate description is omitted. Nevertheless, it can be appreciated that in this way a number of BSs can enter test phases one by one so as to gather information regarding expected levels of interference for different spectrum configurations C (and, although not shown in Figures 34 and 35, for different power levels P as will become apparent with reference to the fourth approach described below). It will be appreciated that in each test phase, the transmitting BS could receive interference indexes from a plurality of different BSs each taking their own measurements. In this way, each BS can collect information about a plurality of other BSs in its test phase, and complete a full set of values for those other BSs by estimation in the same way as shown in Figures 34 and 35.

Fourth Approach:

A fourth approach is envisaged which corresponds to one possible way of improving upon the third approach described above. In the third approach, the test transmission is made using power P1 and spectrum configuration C1, and thus the estimated values for assignments C2 to Cn correspond to transmissions using power P1. The fourth approach addresses the issue of changing transmission powers P as well as changing spectrum assignments C.

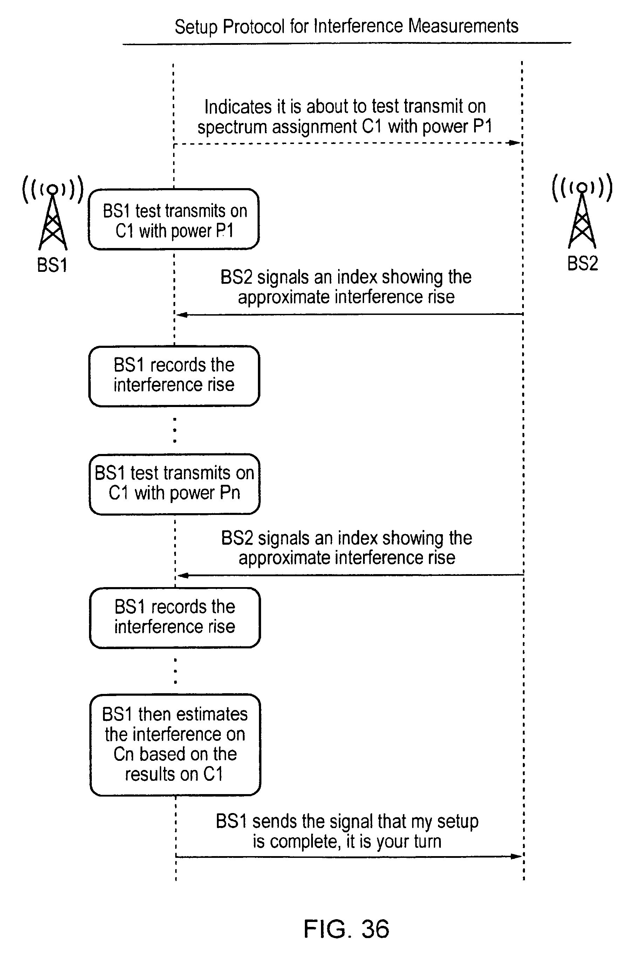

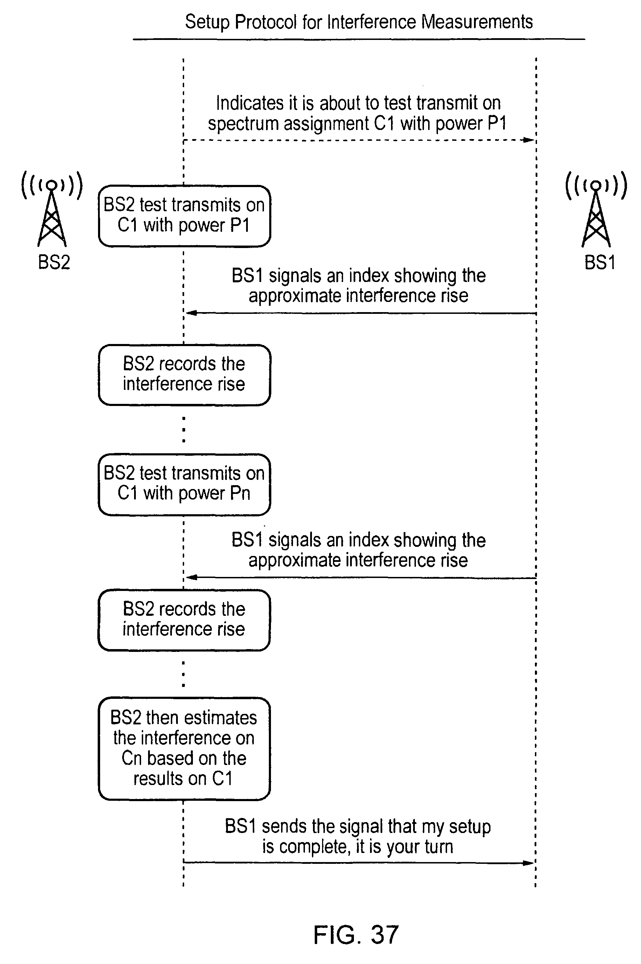

Again, it is assumed that the radio channel fading conditions remain substantially unchanged when a BS changes from transmitting with one spectrum configuration (e.g. *C1*) to another spectrum configuration (e.g.*C2)*. With this in mind, Figures 36 and 37 show possible actions and communications that could be carried out by BS1 and BS2 in the fourth approach.

In Figure 36, BS1 initially indicates to BS2 that it is about to enter a test phase and test transmit using spectrum configuration C1 with power P1. Again, as indicated by the dashed arrow in Figure 36, this initial indication is not essential, as both BS1 and BS2 may carry out the fourth approach in response to an external trigger or at a pre-determined test time.

BS1 then test transmits (as in the third approach) using spectrum configuration C1 with power P1 and (although not shown in Figure 36) BS2 takes a measure of the interference rise as a result of the test transmission from BS1. BS2 then signals to BS1 an index representing the approximate interference rise, and BS1 makes a record thereof. Unlike in the third approach, in the fourth approach BS1 then test transmits again using spectrum configuration C1 with power P2 and receives for recordal a further index from BS2, and so on and so forth until BS1 has a record of the interference expected to be suffered by BS2 when it transmits using spectrum configuration C1 with any power from P1 to Pn.

BS1 then estimates the interference expected to be suffered by BS2 as a result of transmission using each of spectrum assignments C2, C3, ...Cn, when combined with each of the power levels P2, P3...Pn. BS1 then signals to BS2 that it has completed its test phase, and that BS2 may carry out its own test phase.

Of course, although Cn and Pn suggest that the number of different spectrum assignments C and power levels P are the same, this need not be so. Further, although it may be desirable to obtain estimations of every possible combination of C and P, it may be more desirable in terms of processing time to only obtain estimations for a number of "likely" combinations, or to only generate estimations when they are required (i.e. on the fly).

Figure 37 represents the same sequence of actions and communications as shown in Figure 36, except that BS2 enters the test phase and transmits, and BS1 takes the interference measurements and signals indexes back to BS2. Accordingly, duplicate description is omitted. Nevertheless, it can be appreciated that in this way a number of BSs can enter test phases one by one so as to gather information regarding expected levels of interference for different spectrum configurations C. It will be appreciated that in each test phase, the transmitting BS could receive interference indexes from a plurality of different BSs each taking their own measurements. In this way, each BS can collect information about a plurality of other BSs in its test phase, and complete a full set of values for those other BSs by estimation in the same way as shown in Figures 36 and 37.

Fifth Approach:

A fifth approach is envisaged which is analogous to the third and fourth approaches, but which considers the scenario in which the radio-channel fading conditions are substantially changeable when a BS changes from transmitting with one spectrum configuration (e.g. *C1*) to another spectrum configuration (e.g.*C2)*, and/or when it changes from one transmission power (e.g. P1) to another transmission power (e.g. P2).

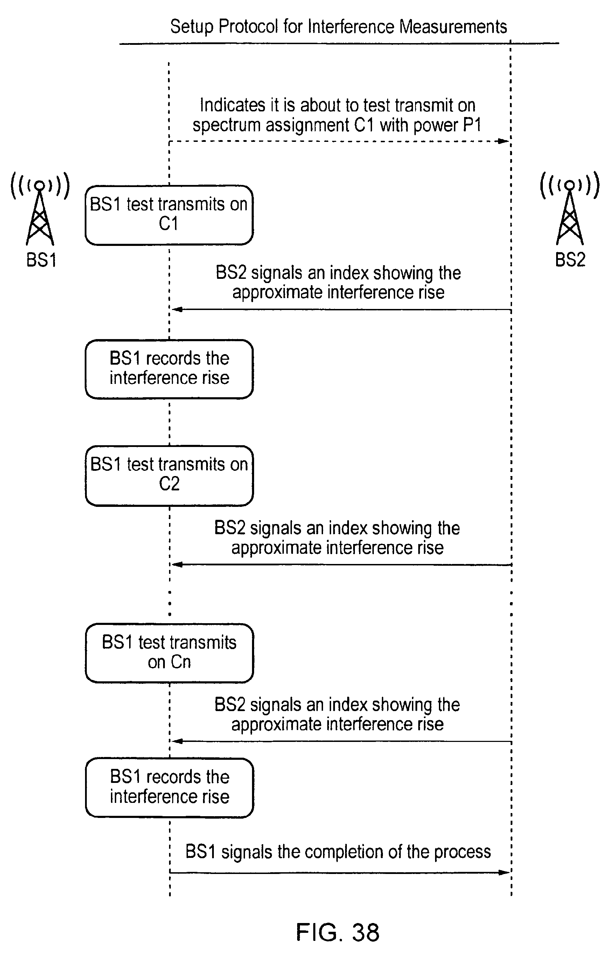

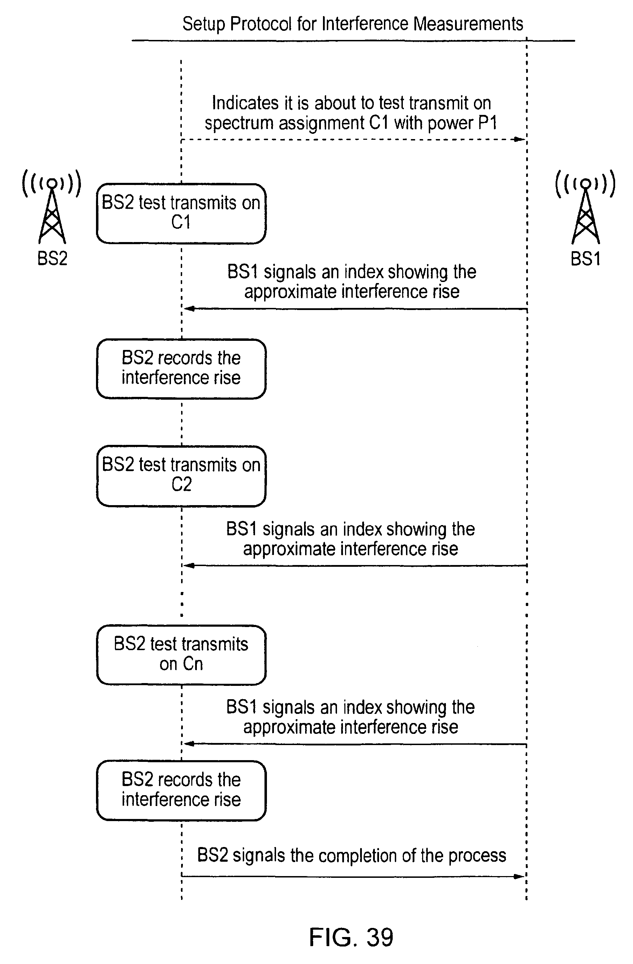

The fifth approach is therefore based more on individual measurements and feedback than on estimations as in the third and fourth approaches. In the fifth approach, when the radio-channel fading is not similar for the potential spectrum assignments C and/or transmission powers P, individual measurement is performed for each potential channel (spectrum) assignment C (and/or for each potential transmission power P). With this in mind, Figures 38 and 39 show possible actions and communications that could be carried out by BS1 and BS2 in the fifth approach.

In Figure 38, BS1 initially indicates to BS2 that it is about to enter a test phase and test transmit using spectrum configuration C1 with power P1. Again, as indicated by the dashed arrow in Figure 38, this initial indication is not essential, as both BS1 and BS2 may carry out the fifth approach in response to an external trigger or at a predetermined test time.

BS1 then test transmits (as in the third approach) using spectrum configuration C1 with power P1 and (although not shown in Figure 38) BS2 takes a measure of the interference rise as a result of the test transmission from BS1. BS2 then signals to BS1 an index representing the approximate interference rise, and BS1 makes a record thereof. Unlike in the third approach, in the fifth approach BS1 then test transmits again using spectrum configuration C2 with power P1 and receives for recordal a further index from BS2, and so on and so forth until BS1 has a record of the interference expected to be suffered by BS2 when it transmits using spectrum configuration C1 to Cn with power from P1. Accordingly, no estimation is carried out at BS1, and instead its values are obtained by individual measurements.

BS1 then signals to BS2 that it has completed its test phase, and that BS2 may carry out its own test phase. Figure 39 represents the same sequence of actions and communications as shown in Figure 38, except that BS2 enters the test phase and transmits, and BS1 takes the interference measurements and signals indexes back to BS2. Accordingly, duplicate description is omitted.

Of course, although Figures 38 and 39 essentially correspond to the fifth-approach version of Figures 34 and 35 (the third approach), it would be similarly possible to carry out a fifth-approach version of Figures 36 and 37 (the fourth approach) by carrying out measurements at different power levels P and using different spectrum assignments C.

As mentioned above, the following sixth and seventh approaches are proposed to measure the interference inflicted from UEs served by one BS on other BS.

Sixth Approach:

A sixth approach is envisaged which takes into account UEs. Such an approach is suitable to be carried out before the network (including the BSs and UEs) becomes fully operational, i.e. as part of a network setup/configuration/ initialisation process (similarly to the first approach described above).

In the sixth approach, before making the system or network fully operational, some measurement/estimation is performed assuming isolated operation. The aim is to discover, for a group of UEs served by a particular BS and starting to transmit, thereby having a change in transmission power (dP) in a possible spectrum configuration C, what the expected change in interference (dI) at a target BS will be. As a result of the sixth approach (similarly to the first to fifth approaches) the particular BS establishes a table of parameters representing the expected interference inflicted at target BSs as a result of its served UEs transmitting with (or within) any specific spectrum configuration C with any specific transmission power P or modulation and coding scheme S.

In order to gain useful results with acceptable complexity, the geographical area served by the particular BS (known as a cell) is divided into a number of component regions by a grid, and different numbers of UEs are considered in the different regions, for example including a maximum expected number of UEs (transceivers) per grid region or per cell.

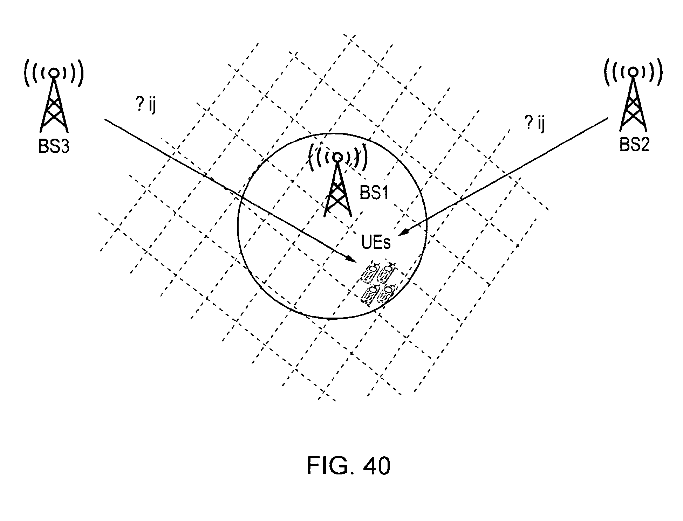

In order to carry out the sixth approach, a multi-stage process is envisaged. Figures 40 to 42 are schematic diagrams showing an example geographical layout of three BSs, namely BS1, BS2, and BS3, for use in understanding the sixth approach. In Figures 40 to 42, BS1 is considered to be the BS in charge, i.e. the BS in whose cell the UEs are present and therefore the BS gaining information about the effect its served UEs may have on other BSs. Those "other" BSs in Figures 40 to 42 are BS2 and BS3. As can be seen, the cell of BS1 is divided up into a number of component grid regions by a grid.

Before the network becomes live and fully operational, a number of UEs (from only one to the maximum expected number of UEs) is allocated within a specific grid region of the cell of BS1 (the BS in charge). BS1 is aware of the most probable or practical modulation and coding scheme S the UEs within the grid regions are most likely to be assigned for transmission purposes. BS1 (the BS in charge in this example) informs the other BSs, BS2 and BS3, that some test transmissions are about to be carried out.

BS1 divides the possible spectrum configurations C into a number of sub-bands, and then informs the UEs in the current grid region of interest which sub-band of which spectrum configuration C, and which modulation and coding scheme S, they are about to transmit with.

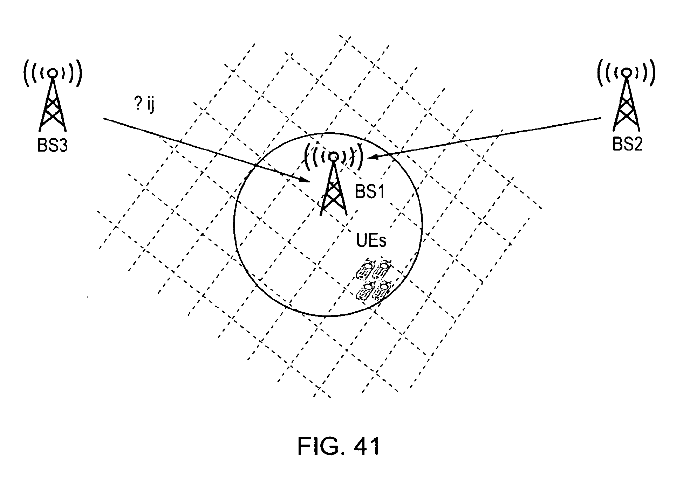

As indicated in Figure 40, BS1 then requests the UEs in the grid region of interest (in this case four UEs are shown in a particular grid region) to sweep the specified spectrum configuration C starting from the first sub-band. The other BSs, in this case BS2 and BS3, then measure the associated interference rise in each sweep attempt and then report their findings back to BS1, as shown in Figure 41. BS1 then makes a record of the various interference rises.

The above process could of course be repeated for different numbers of UEs, different grid regions, different spectrum assignments C, different transmission powers P, and different modulation and coding schemes S. The above process could also be repeated with different BSs being the BS in charge. Moreover, the first to fifth approaches could be adapted for use in the present sixth approach. As another level of complexity, the mobility of UEs may also be taken into account, and measurements may be taken when different numbers of UEs move from one grid region to another at different speeds. In one variation, the mobile UEs may be configured to transmit when they are all allocated in the same grid region (or grid cell).

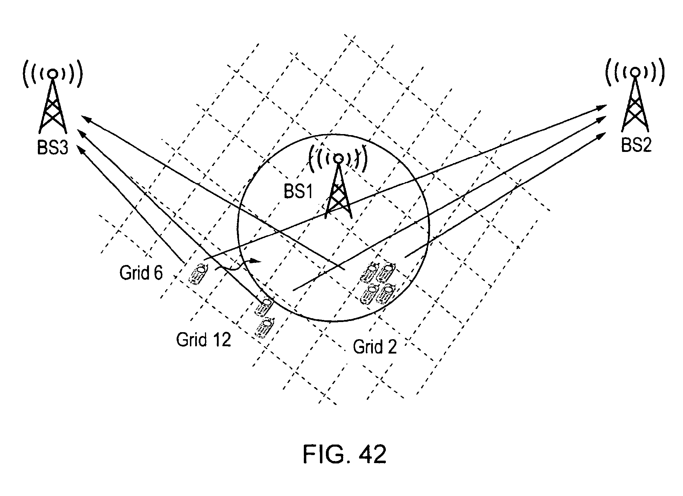

When the network becomes operational, and before ST spectrum assignments are carried out, a BS considering such assignments may access the recorded information to determine the interference being (and/or expected to be being) caused on other BSs. Figure 42 is an example of a possible such scenario.

As shown in Figure 42, four UEs are currently in grid region 2 (i.e. G2), one UE is moving in grid region 6 (G6), and two more UEs are allocated in grid region 12 (G12). BS1 is the BS considering spectrum assignment and would look at the transmission parameters and the spectrum configuration under consideration and would come up with the best combination of the stored measurements from all these grid regions (G2, G6 and G12) to come up with the best estimation of expected interference on BS2 and BS3 based upon the current spectrum configuration and/or a prospective spectrum configuration following re-assignment. For example, BS1 would look at the result of measurements relating to G2 to determine the relevant expected interference level when only four UEs are in G2, and would similarly look at other results to determine the relevant expected interference level when one moving UE is present in G6 and two UEs are allocated in G12. BS1 could then, in the present example, sum the results for the three grid regions to come up with an estimation for the superposition of interferences which would be inflicted on BS2 and BS3 as a result of the current and/or prospective spectrum configuration C.

Seventh approach:

A seventh approach is envisaged which, like the sixth approach, takes into account UEs. Such an approach is directed at being suitable to be carried out while the network (including the BSs and UEs) is fully operational. This may be advantageous if it is not desirable to adopt the measurement scheme of the sixth approach, which is performed before the network becomes fully operational.

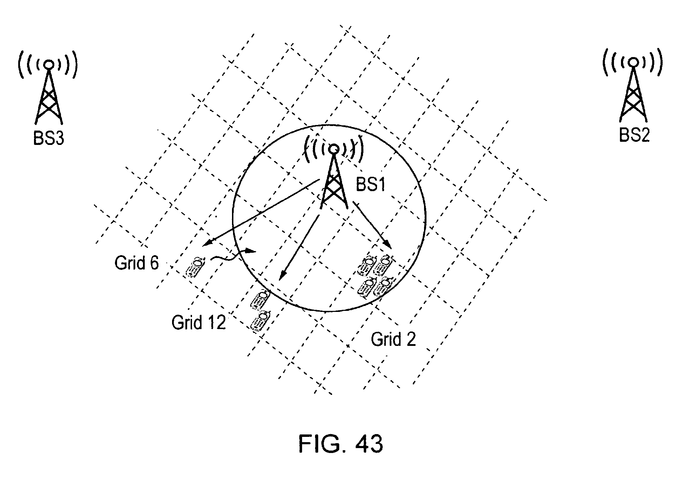

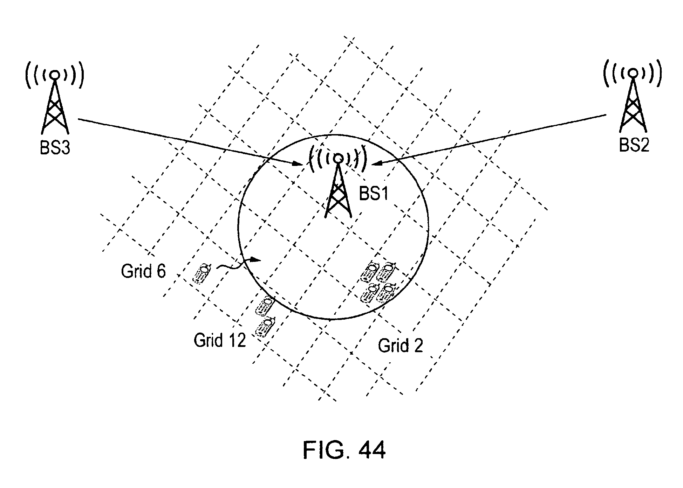

The seventh approach can be understood by reference to Figures 43 and 44. Again, BS1, BS2 and BS3 are considered, with BS1 being the BS having UEs in its cell and being the BS considering a prospective re-assignment of spectrum.

Before an ST assignment is fully considered (ideally immediately beforehand), BS1 considers whether the potential spectrum assignment involves adding an extra amount of spectrum to the current amount of assigned spectrum (i.e. whether BS1 is due to gain or lose spectrum). BS1 then identifies which sub-channel(s) would be allocated to which UEs within that extra potential spectrum after the proposed ST spectrum assignment has been successfully completed.

BS1 then informs the other BSs (in this example, BS2 and BS3) that test transmissions are about to be made within the extra potential spectrum in order to cause those other BSs (BS2 and BS3) to go into a measurement and listening mode. BS1 then instructs the UEs in its cell to transmit test transmissions within specified sub-channels of the extra potential spectrum, with an assigned (or their current) modulation and coding scheme, and with an assigned power, as shown in Figure 43. BS1 need not decode the information transmitted by the UEs within that extra potential spectrum.

BS2 and BS3, having been informed of the test transmissions, measure the interference rise as a result of the test transmissions and inform BS1 of the results of their measurements, as shown in Figure 44. In this way, BS1 can effectively assess the potential effect of its prospective re-assignment of spectrum on BS2 and BS3.

Of course, before the prospective ST assignment is carried out, BS1 may attempt carry out the seventh approach several times, for example for different prospective re-assignments of spectrum (i.e. to understand the possible effects of other potential spectrum assignments and allocations of spectrum sub-chunks or sub-channels), and record the further related interference values.

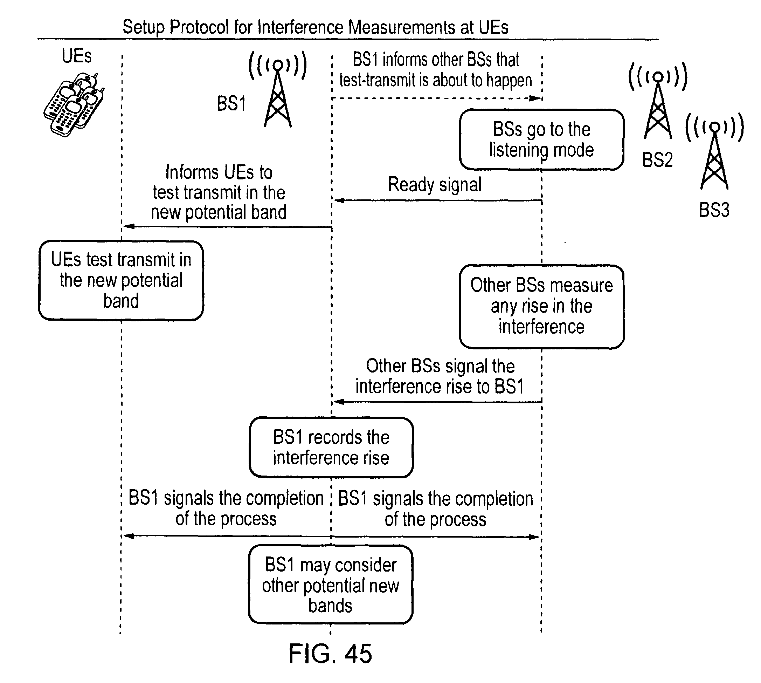

Figure 45 is a schematic diagram useful for summarising the possible communications between BSs and actions at the different BSs in the seventh approach. It is noted that signalling is required to carry out this seventh approach (and also in similar ways in the first to sixth approaches described above), however it is submitted that the required signalling is negligible if the period of ST spectrum assignment is in the region of a couple of hundred milliseconds, or even in the region of a second.

It will be appreciated that any combination of the above seven approaches may be combined with any of Methods A to D for use in embodiments of the present invention.

Accounting processes

As already mentioned, it is envisaged that the present invention may extend to embodiments in which an account of spectrum re-assignments is made. Such an account may be useful for purely technical reasons, for example to identify trends in re-assignments. Such trends may be useful for streamlining the various methods and approaches of embodiments of the present invention, for example so that un-required, or uncommonly required, values and measurements and estimations are not involved unless necessary. This can have a beneficial effect of reduced processing time, reduced power consumption, and/or reduced required storage capacity. Further, in this way the signalling overhead related to the present invention can be reduced or even minimised.

A further benefit of such accounting can be that availability or utilisation of spectrum for some snapshots (groups) of spectrum negotiations (spectrum re-assignments) can be improved, as well as the associated experienced interference. Such a study of previous re-assignments can lead to an improvement in spectrum utilisation without necessarily increasing interference suffered.

A further possible use of such accounting may be to enable operators (operating different BSs) to trade in spectrum, and therefore to gain some financial benefit from spectrum re-assignments. Such trade can be automated by means of such an accounting process, for example by setting a number of parameters by which such trade may be governed.

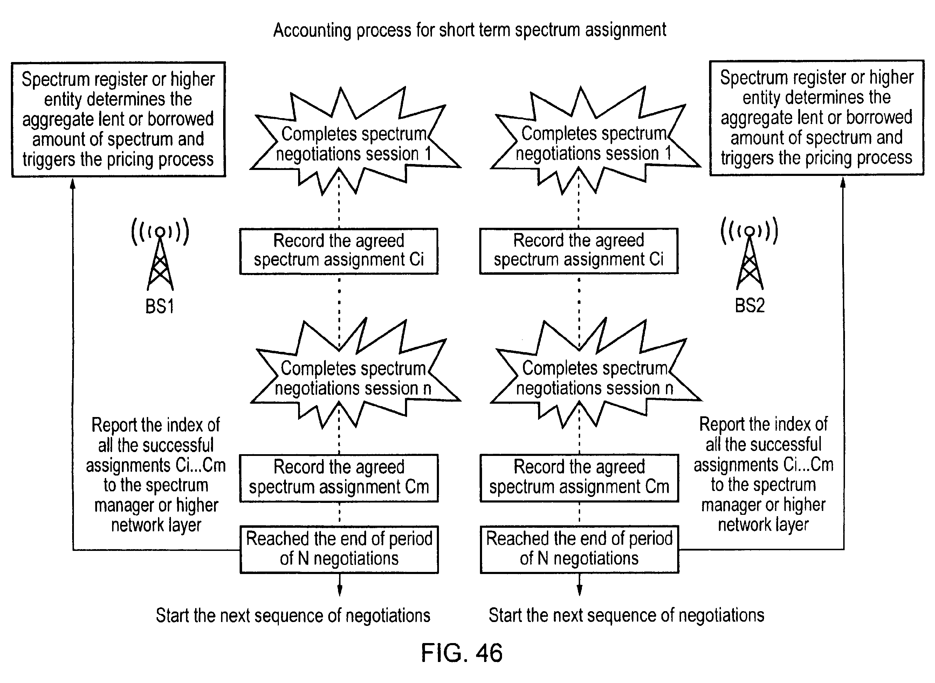

Figure 46 is a schematic diagram representing one possible accounting process that may be employed by embodiments of the present invention. As can be seen, the hypothetical BS1 and BS2 (which could be any pair of BSs in Methods 1 to 4) conduct a series of N negotiations, i.e. N re-assignments of spectrum between one another. The spectrum re-assigned after each such negotiation, or after the series of N negotiations, is recorded and reported back to a spectrum register. Such a spectrum register may be stored within the BSs, or within an external apparatus such as a higher network entity.

Each BS may have its own associated spectrum register, or a single shared register may be maintained. In the case that different operators operate the BSs, it may be beneficial for each BS to have its own spectrum register. Based on the register(s), it is possible to assess the aggregate amount of spectrum lent or borrowed, and therefore to control transfers of money between the two operators.

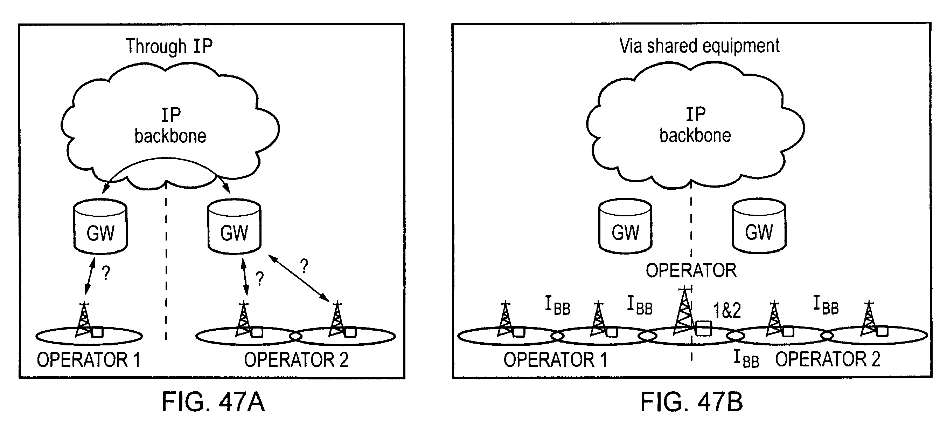

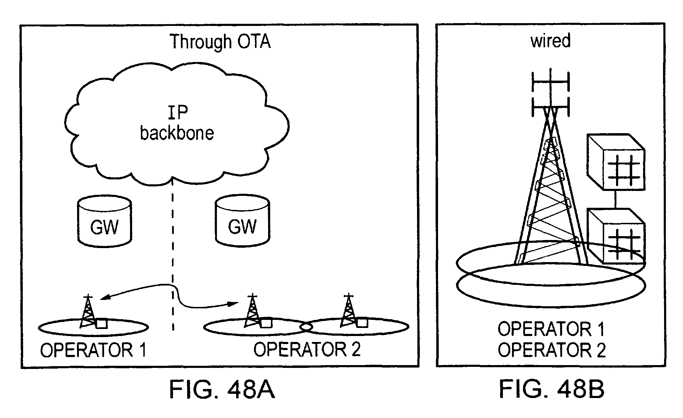

As mentioned above, BSs may communicate with one another in a number of different ways. Figures 47 and 48 are schematic diagrams useful for understanding a few such possible ways. In Figure 47(A), BSs are able to communicate with one another via their respective GWs (assuming they belong to different RANs), and thus via an IP network known as an IP backbone. In Figure 47(B), BSs belonging to different RANs are able to communicate with one another via shared equipment, for example via a shared intermediate BS or other radio transceiver. In Figure 48(A), BSs are able to communicate with one another using Over The Air (OTA) communications, for example using radio or microwave links. In Figure 48(B), BSs are able to communicate with one another using wired links, which may be most useful when they are in close proximity with one another, for example effectively co-located.

Performance Evaluation, Simulation Results

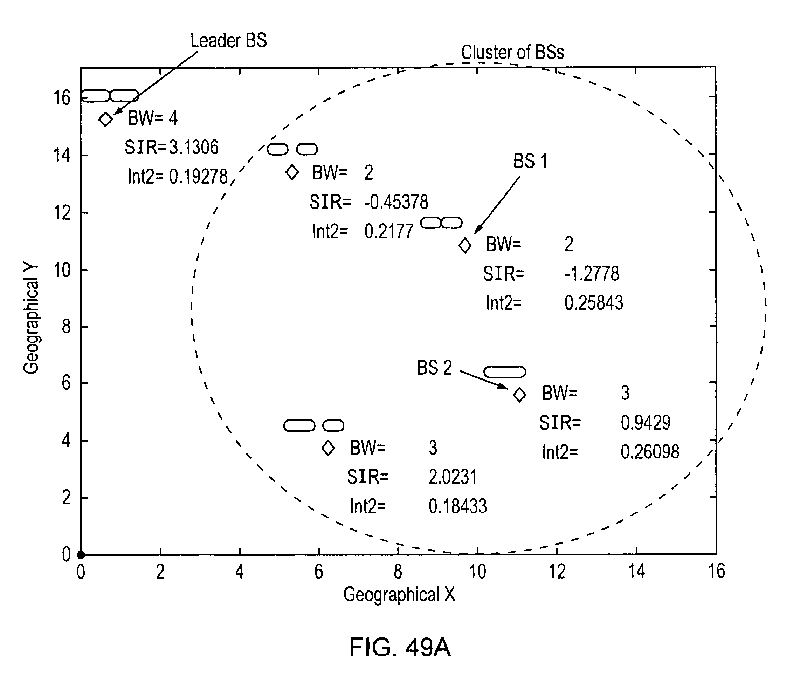

It order to appreciate possible advantages of embodiments of the present invention, particularly in relation to Methods 1 to 4, a number of simulations have been performed, and results of those simulations are presented in Figures 49A to 51B. For those simulations, it is assumed that the BSs employ Method 3 described above.

It is assumed that the BSs start from a potential spectrum assignment and perform a ST spectrum assignment, and that the BSs are aware of the interference they inflict on others and the interference they receive from others. The negotiations are thus assumed to be non-selfish and considerate, in accordance with Method 3. It is assumed that one leader primary BS is present, also in accordance with Method 3, and that the other BSs all belong to the secondary system.

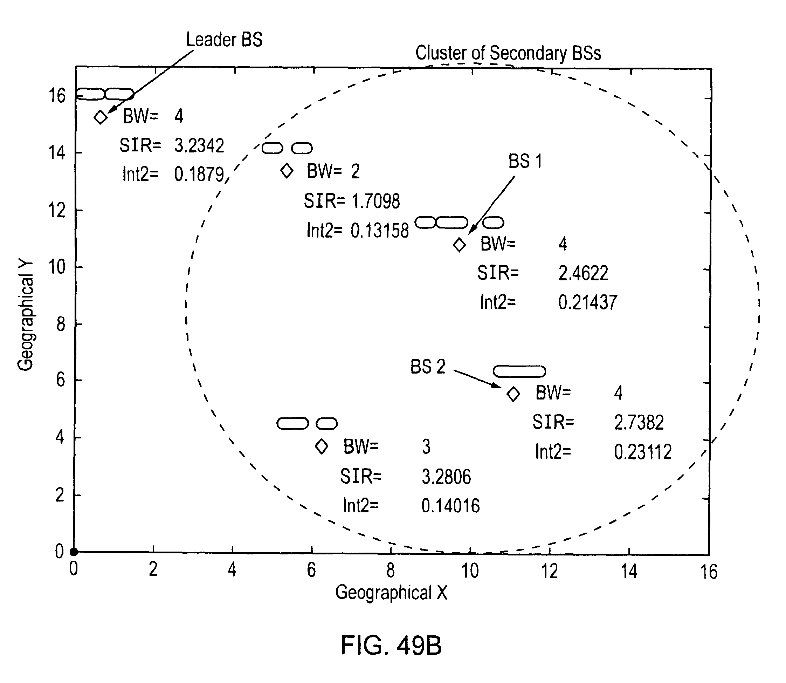

Three different simulations are shown (corresponding to Figures 49 to 51, respectively), each having simulation results before spectrum re-assignment (Figures 49A, 50A, and 51A) and after re-assignment (Figures 49B, 50B, and 51B). Accordingly, the spectrum configurations of the BSs change as a result of the re-assignments. The results shown in these Figures are snap-shots showing the experienced SIR and interference values inflicted on the other BSs (Int2) before and after the re-assignments, and the bandwidth BW amounts used by those BSs. For the benefit of simplicity, is assumed that the entire available bandwidth is divided into 8 spectrum units for the purpose of such re-assignments. Each BS may use some or all of its allocated bandwidth at any time.

Looking now at Figures 49 to 51, each snapshot graphically shows the spectrum currently used by each BS (which may the same as or less than its allocated spectrum) by a row of blobs each corresponding to one of the spectrum units. Only the leader and secondary BSs are depicted in these figures. It is noted that the numbering of the BSs in Figures 49 to 51 is not necessarily the same as that in Method 3. A value for the used bandwidth BW (from 0 to 8), and values for the experienced SIR and inflicted interference Int2 are also shown.

Looking at the entries for a particular BS, it is worth noting that the white spaces (in the overall spectrum assignments for that BS) may be controlled in time by its own RAN and spectrum-allocation policy. This enables an independent exploitation of spectrum availability feasible, especially in border cells. Adaptive channel coding rates for a data packet and radio node have been considered to enable the radio nodes to adjust their transmission rates and consequently the target SIR values. The BER requirements selected for the simulations is $10^{-3}$, and the use of a Reed-Muller channel code RM(1,m) is assumed. The coding rates and the corresponding SIR target requirements used for the simulations are shown below in Table 1.

Table 1: Code Rates of Reed-Muller Code RM (1,m) and Corresponding SIR Requirements for Target BER

| m | Code Rate | SIR (dB) |
|---|---|---|
| 2 | 0.75 | 6 |
| 3 | 0.5 | 5.15 |
| 4 | 0.3125 | 4.6 |
| 5 | 0.1875 | 4.1 |
| 6 | 0.1094 | 3.75 |
| 7 | 0.0625 | 3.45 |
| 8 | 0.0352 | 3.2 |
| 9 | 0.0195 | 3.1 |
| 10 | 0.0107 | 2.8 |

Turning now to the individual simulations, in the re-assignment from Figure 49A to Figure 49B, it can be seen that the white space (i.e. the non-used spectrum) has been exploited by at least two BSs where their BW has increased from Figure 49A to 49B (BS 1 sees an improvement from 2 spectrum units to 4 units, and BS2 from 3 spectrum units to 4 spectrum units). The SIR has been improved for all the negotiating BSs and the leader BS. It can be seen that the interference that the BSs inflict on each other (i.e. Int2) has also improved for all of the BSs.

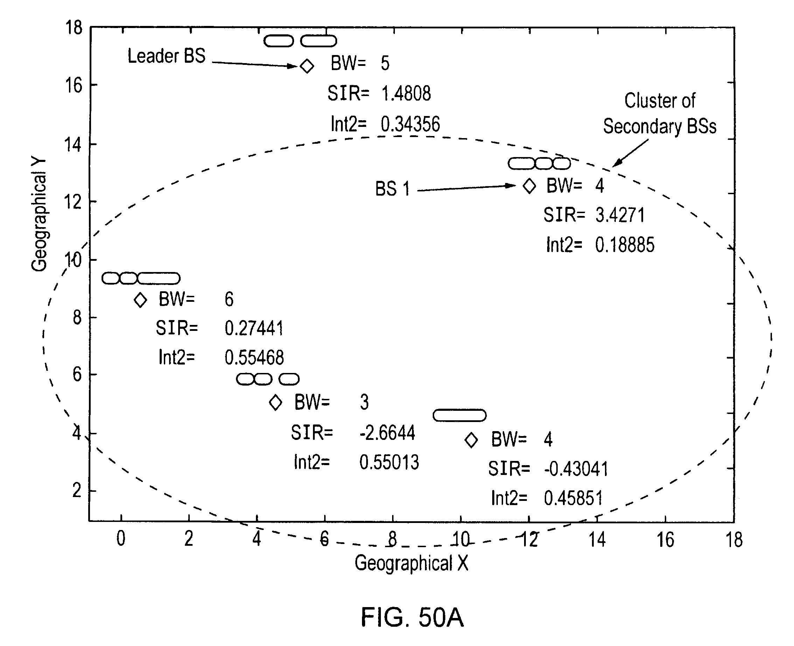

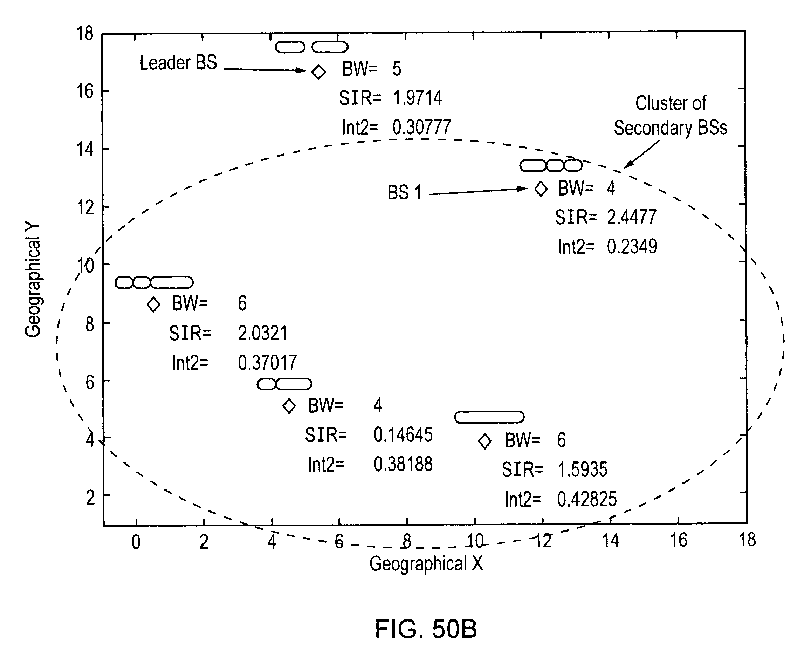

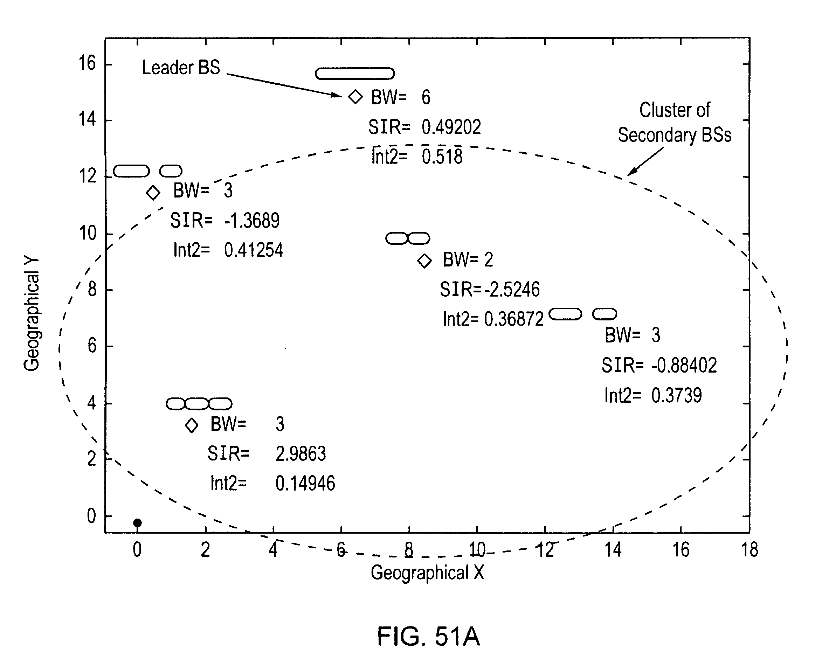

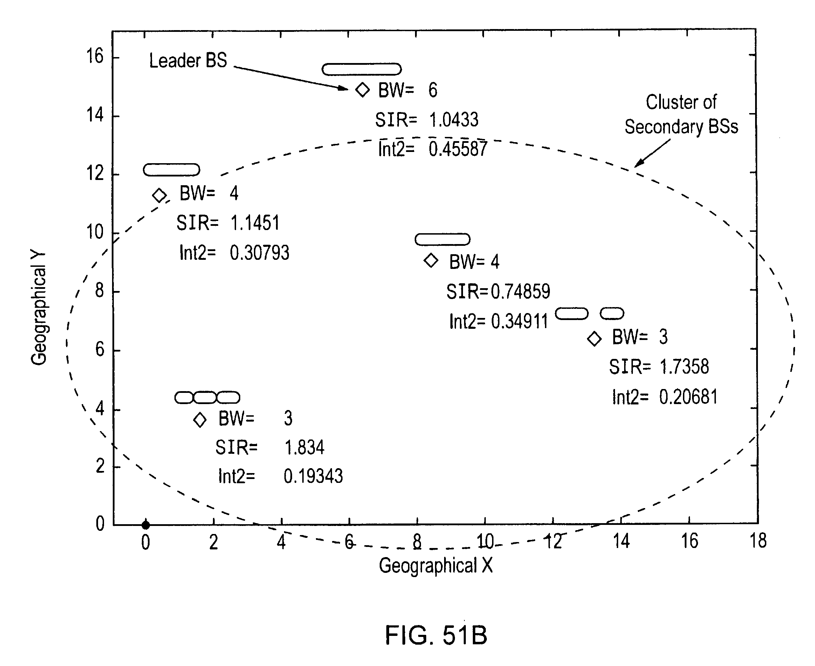

In the re-assignment from Figure 50A to Figure 50B, it can be seen that BS 1 is the only BS that has suffered a reduced SIR as a result of the assignment. All of the other secondary BSs (i.e. apart from BS1) and the leader BS have managed to improve their interference profile Int2, while two BSs have managed to improve their available bandwidth BW. Similar advantages are presented in Figure 51.

In general, the simulations show BSs can progressively exploit the white spaces available to other BSs. This is why the bandwidth BW used by the BSs does not reduce as a result of the re-assignments.

Please note that the presented SIR results can be mapped to relevant throughput results by employing Table 1.

The above embodiments introduce the concept of a leader BS, and the concept of multiple leader BSs and their sequential task arrangements. The proposed methods for semi-centralized cluster-wide spectrum negotiations between primary and secondary systems are neither fully centralized and nor fully distributed. The proposed embodiments introduce a mechanism in which a single leader per cluster may conduct or control selfish/considerate short-term spectrum negotiations and assignments for its cluster of primary and secondary base stations.

The proposed embodiments address problems with both classes of decentralised and distributed solutions, by providing semi-centralized cluster-wide spectrum negotiations and assignment for clusters of primary and secondary base stations to take advantage of both centralised and distributed approaches to a degree while avoiding the disadvantages of both. Centralised negotiations suffer from high signalling overhead and high complexity of information gathering from all the involved distributed elements. On the other hand, distributed negotiations, despite providing a lower signalling overhead, can result in a collision of interests as decisions are made locally without being aware of their impact on other spectrum users.

The proposed methods provide a sequential protocol which amounts to a safe way to converge to a better arrangement of spectrum on a short-term basis. Fully-centralized control, based on higher-entity control, is avoided as the decisions are made by leaders of clusters without the need for signaling to higher layers. These methods respect the priority of the primary system over the secondary system. It is possible to jointly improve the spectrum utilization and interference level in a mobile wireless network, and effectively link the local need for (or use of) spectrum to the traffic patterns in the BSs. It is also possible to improve QoS, overall network coverage, throughput and reduce potential call backlog. The proposed methods further improve the revenue potential for the lending party by enabling it to make radio resource available when needed in peak times. In this way, radio resource is not wasted and may be employed in an efficient way.

In the above embodiments, focus has been made on clusters or groups of BSs, and in particular on re-assignments of spectrum between BSs of such clusters. Further, such embodiments have assumed that primary/secondary relationships exist and that, in particular, clusters of BSs include a cluster leader. However, the present invention extends to re-assignments of spectrum between different clusters, i.e. inter-cluster re-assignments. Furthermore, the present invention extends to systems in which there are no predetermined primary/secondary relationships, such that no particular BS of a cluster is more likely than the other BSs of that cluster to be the cluster leader

Due to transmission power and relative location of BSs, it is not always possible to perform isolated and exclusive spectrum negotiations to access the spectrum on an exclusive basis between two BSs as their decision on spectrum allocation might affect the decision by other BSs. Sometimes, simply more than two parties are interested in spectrum negations.

Selection of a spectrum configuration for re-assignment purposes (for example, selecting a desired spectrum configuration out of a number of possible configurations), in a way that benefits a system as a whole, is a particularly difficult task when no priority (primary/secondary relationships) exists between the involved parties in a spectrum sharing process, and when central decision-making is unavailable. For example, in a network comprising multiple radios (e.g. BSs), any decision by one BS may impact on other BSs or radio entities. In a notable example, a chain effect is possible without some overall control which can lead to a decision made in a cell located at one edge of a network (cellular environment) impacting on a cell located on a distant other edge of the network. The potential collisions of interests between BSs of such a system can be difficult to avoid without some form of overall control, and scenarios can exist where multiple BSs attempt to occupy same chunk (or other allocation) of spectrum. This can essentially occur because BSs in the system act in a manner in which they are generally unaware of each other and of any centralized control acting to avoid the collisions. Involving a centralized control means, e.g. acting as a higher-layer authority, on the other hand can lead to excessive and frequent overhead signaling to control the overall interference level in the network.

The present invention extends to ways of overcoming these shortcomings, by introducing efficient mechanisms to enable a fair and efficient access to a common pool of spectrum. This is particularly considered in a non-priority, inter-cluster setting.

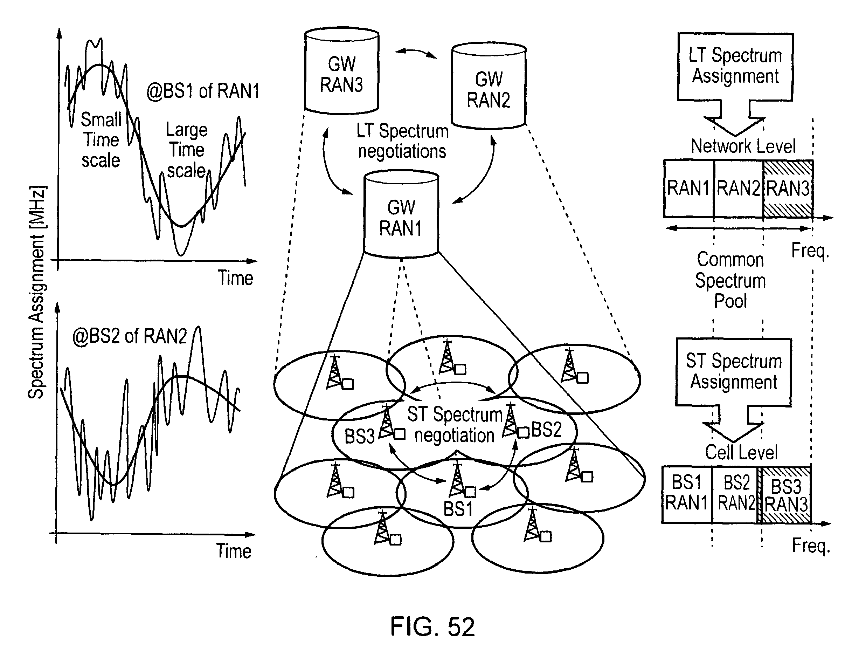

Figure 52 is useful for understanding a potential scenario where BS1 from Radio Access Network 1 (RAN1), BS2 from RAN2 and BS 3 from RAN3 are engaged in ST spectrum negotiations. It is assumed that the spectrum chunk (or other allocation) being exchanged is part of a shared common pool of spectrum. It is also the assumption that unlike the dedicated channel, for example as explained with reference to Figure 5, none of the RANs has a priority in using the common pool.

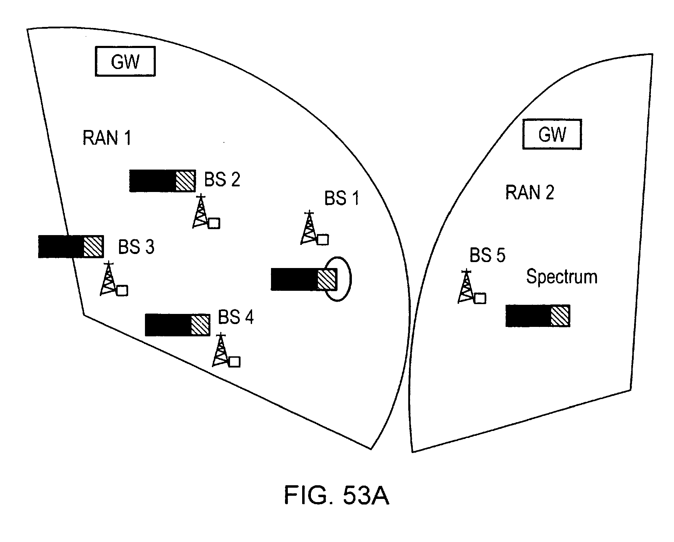

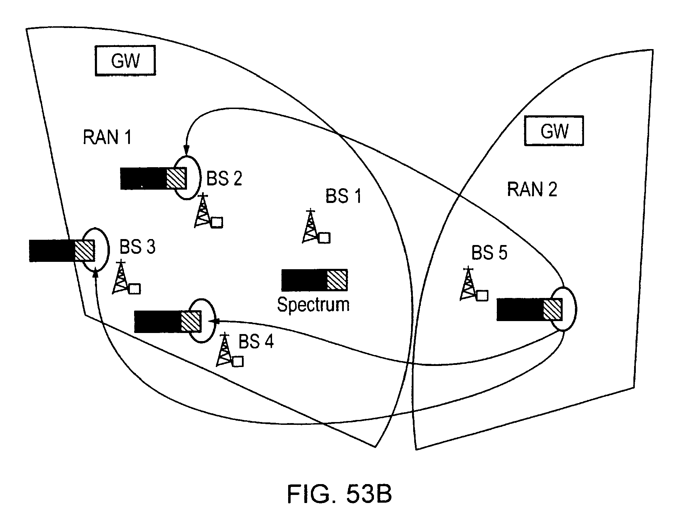

The problem is that as shown in Figures 53A and 53B, any short-term decision to assign spectrum to another BS, if done without some consideration of other network entities, might conflict with the interests of the overall network. For example, if a spectrum chunk which is not being used by BS1 of RAN1 (for example the chunk circled in Figure 53A) is assigned to BS5 of RAN2, this could lead to interference being inflicted on BS2, BS3 and BS4 of RAN1, as indicated in Figure 53B. The RANs in Figures 53A and 53B have no priority over each other, and, despite the assignment from BS1 to BS5, BSs 2 to 4 in RAN1 may still transmit in the assigned bandwidth despite there being a potential exclusion zone between RANs 1 and 2. Therefore, in such a situation where RAN2 is not a primary system and has no priority over RAN1, it is desirable to manage inter-RAN, or inter-cluster ST spectrum assignment to address such a problem.

A number of possible techniques for use in embodiments of the present invention, for example in combination with any of Methods 1 to 4 or A to D, will now be described which address the inter-cluster non-priority situation for spectrum re-assignment. It is assumed that one or a series of negotiations might happen in each technique, similarly to the series of negotiations in Methods 1 to 4. It will also be assumed that, during each negotiation and ST spectrum assignment, one BS acts as a leader and forms a cluster with the engaged and interested BSs from its own RAN. In this way, clusters such as those shown in Figures 11A and 11B can be formed on a temporary basis. The formation of clusters may be based on the concept of including in the cluster the BSs that are most likely to be affected by the decision made by the leader BS concerned. For example, in Figures 53A and 53B, the cluster members for BS 1 are BS2, BS3 and BS4. Each leader BS is assigned with specific BSs from other RANs which might show interest in its spectrum and engage in negotiations.

Regarding the stage of starting or triggering such inter-cluster or inter-RAN negotiations, the following possibilities may be implemented:

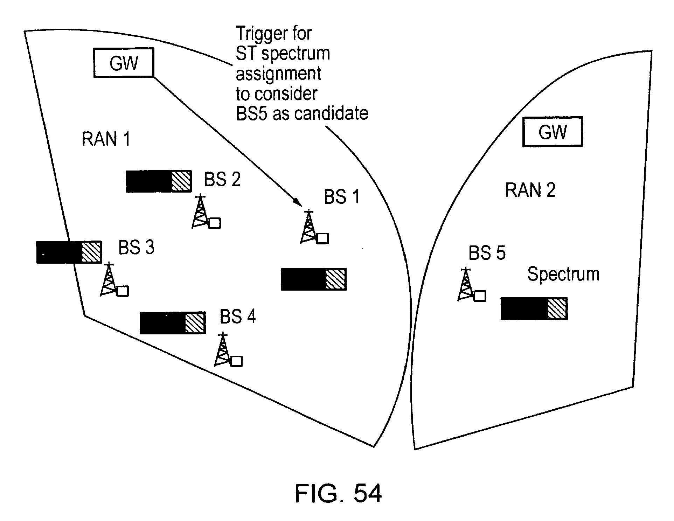

First possibility: With reference to Figure 54, a GW may, as a result of long term (LT) negotiations and LT spectrum assignment, send a specific signal to the leader BS (BS1 ) to request it consider a potential negotiation with another BS from another RAN.

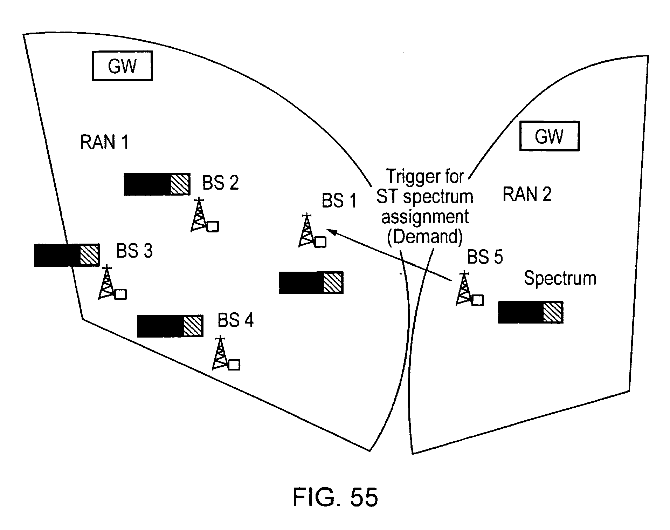

Second possibility: With reference to Figure 55, a particular BS (BS5) in a different RAN to that to the leader BS (BS1) may experience heavy traffic load and therefore desire an increase in communication spectrum. In that case, BS5 may request BS1 to consider ST spectrum negotiations and potential assignments.

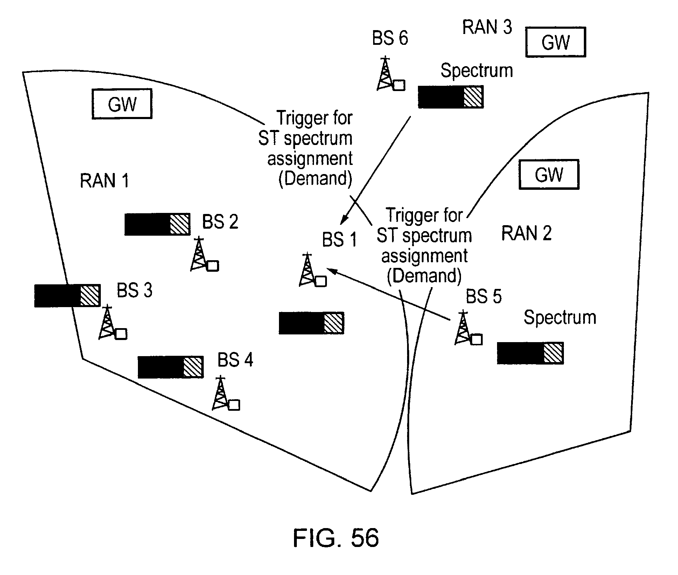

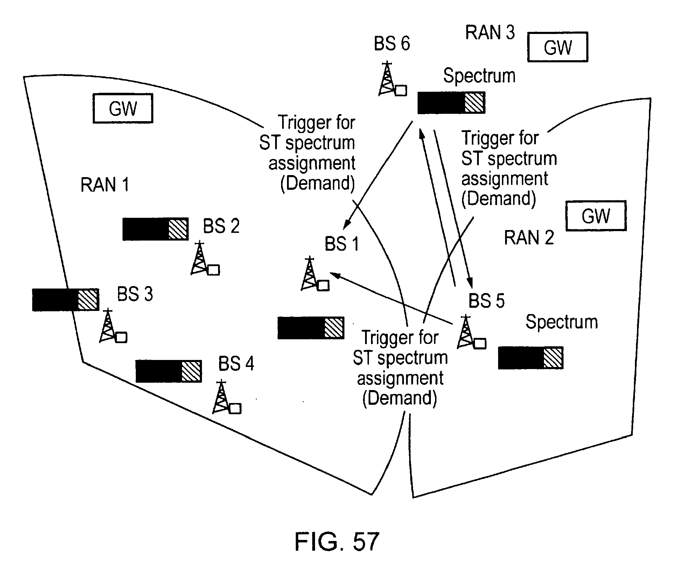

Third possibility: With reference to Figures 56 and 57, the leader BS in one RAN may receive requests for ST spectrum negotiations and potential assignments from BSs in more than one other RAN.

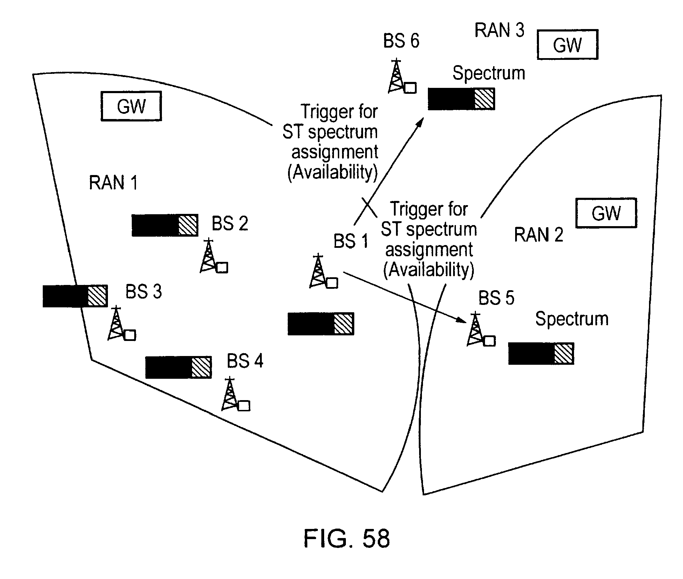

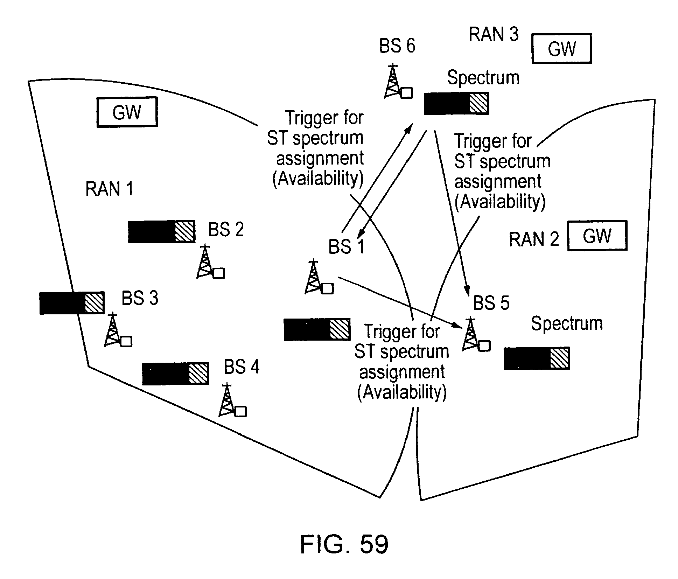

Fourth possibility: With reference to Figures 58 and 59, the leader BS in the cluster (RAN) concerned may itself signal the availability of spectrum to BSs in other RANs, thereby itself triggering ST spectrum negotiations and potential assignments.

Regarding the stage of responding to such triggers, the following possibilities may be implemented:

Possibility 1: In this possibility, as shown as an example in Figures 54 and 55, the leader BS of RAN 1 is involved with one demanding BS.

It is assumed that, for BS1, N cluster members have been assigned. It is further assumed that, for the specified candidate chunk of spectrum of interest (the circled chunk in Figure 53A), the interference that each BS (BS i, i=1....N) receives can be expressed as

$$\gamma_i, \quad i = 1 \cdots N \qquad \qquad (10)$$

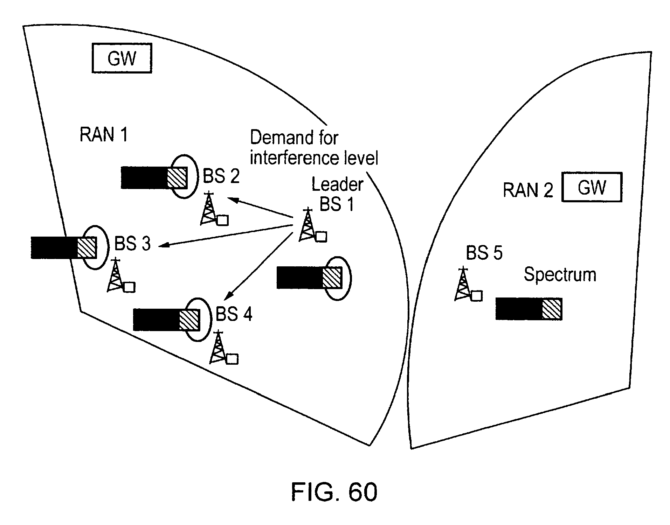

In this possibility, the leader BS (BS1) of the cluster concerned asks all the BS members of its cluster to send their current interference value on the spectrum chunk of interest. This is indicated in Figure 60, with the spectrum chunk of interest circled.

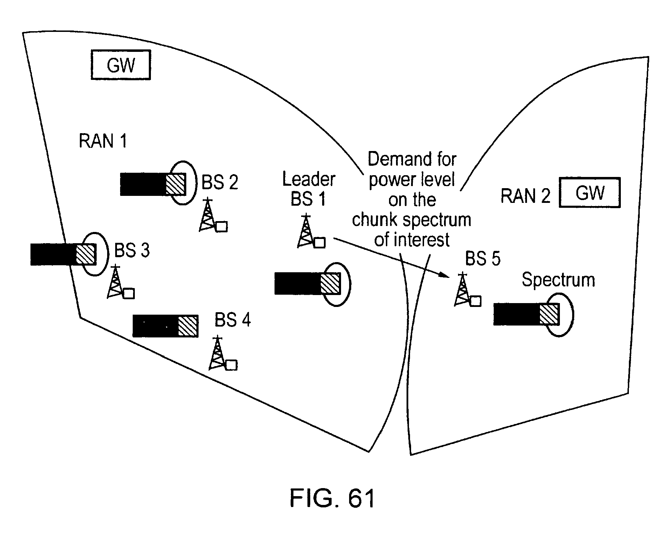

In the next step, the cluster leader BS (BS1) asks the demanding BS (BS5) from the other RAN or cluster to let it know about its potential power level P for the spectrum chunk of interest as shown in Figure 61 (again, the chunk of interest is shown circled).

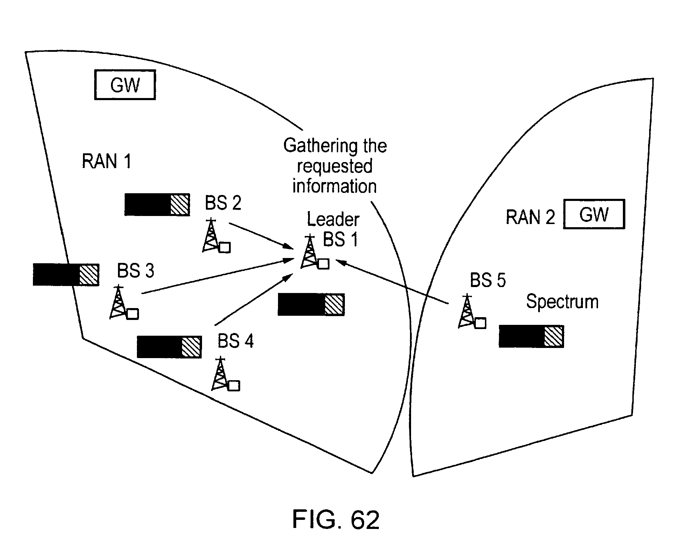

In the next step, all the involved BSs (BS2, BS3, BS4 and BS5) provide the requested information to the leader BS (BS1), as shown in Figure 62.

It is assumed that the interference from BS i (in this case, BS5) engaged in negotiations with the leader BS (BS1) on BS j of the same cluster as that leader BS (BS1) is

$$I_{ij} = f(\eta_{ij}, p_i) \qquad (11)$$

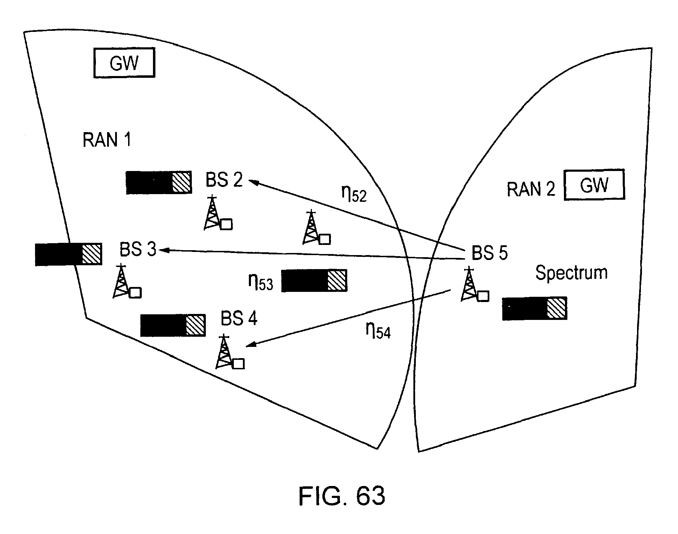

where $p_i$ is the transmission power from the BS i and $\eta_{ij}$ is the transmission gain from BS i to the BS j , as shown in Figure 63.

The leader BS (BS1) then determines the total potential inflicted interference relating to that specific chunk based on the received information, as follows:

$$\beta_i = \sum_{j=1, i \neq j}^{N} I_{ij} \qquad (12)$$

where N is the number of BSs within the cluster excluding the leader.

It is assumed that the total traffic load handled by the leader BS is:

$$T = \sum_{k=1}^{K} d_k \qquad (13)$$

where $d_k$ is the amount of data currently residing in the $k^{th}$ buffer.

The leader BS (BS1) is assigned with two thresholds. The first threshold A indicates the maximum amount of tolerable interference by other cluster members from each individual BS. The second threshold C indicates the threshold for the traffic load being handled by the leader BS.

The leader BS will grant the requested spectrum chunk if :

$$\beta_i < A \text{ and } T < C \qquad (14)$$

where $\beta_i$ is the level of interference in chunk of interest.

It is of course possible to capture the impact of BSs beyond the cluster of interest, in an analogous manner. In that case, the complexity of signalling would be higher than in the present possibility.

Possibility 2: In a different scenario, to avoid some of the signalling introduced in possibility 1, the leader BS first examines the traffic load handled by it currently.

If the following relationship is satisfied, i.e. if

$$T < C \qquad (15)$$

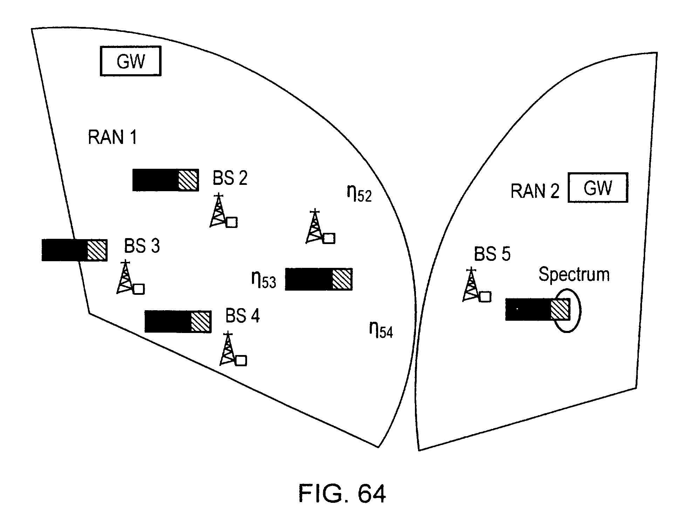

the leader BS (BS1) decides that the spectrum chunk is available for the trade, the leader BS then temporarily assigns the spectrum chunk of interest to the negotiating BS (BS5) and asks that BS to transmit on a temporarily basis as shown in Figure 64 (in which the transferred chunk is circled for BS5) while the leader BS stops any transmission on that specific chunk.

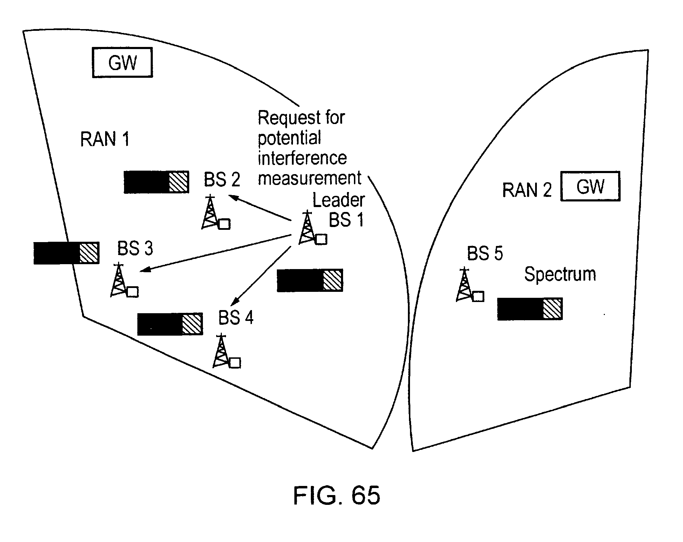

The leader BS (BS1 then asks the other BSs (BS2, BS3 and BS4) in its cluster to be prepared for a potential measurement on the interference they receive on the chunk of interest, as shown in Figure 65.

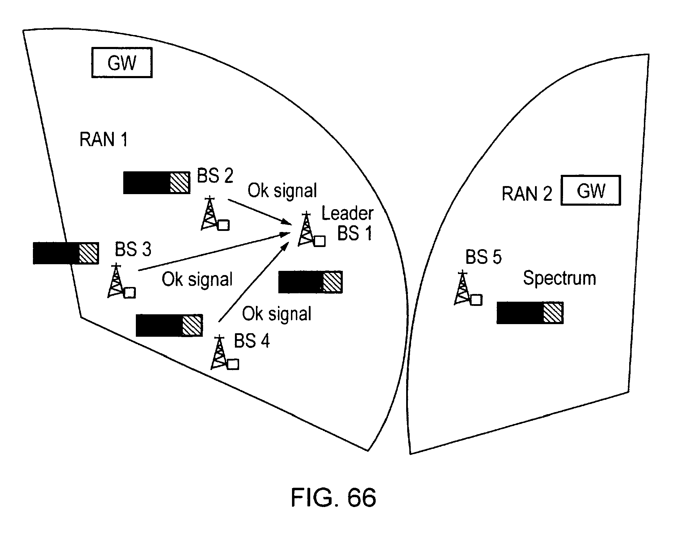

The cluster members (BS2, BS3 and BS4) then (ideally immediately) send an OK/not OK signal if they are happy or unhappy with the level of interference they receive within that specific chunk of spectrum, as shown in Figure 66.

If all the received signals from the cluster members are "OK", then the leader BS will assume that the current spectrum assignment is valid (i.e, acceptable). If only one of the signals is "not OK", the leader BS would assume that the current spectrum assignment is not valid and regain its transferred spectrum so as to resume the original spectrum configuration. Of course, it would be possible for the leader BS to allow a predetermined number of cluster members to signal a "not OK" state and still allow the current spectrum assignment to be maintained, for example if a larger number of cluster members signal an "OK" state.

Possibility 3: When there is more than one negotiating and interested BS from another, or more than one other, RAN negotiating with the leader BS, the leader BS may perform the sequences explained in possibility 1 or 2 once for each such negotiating BS and may grant the chunk of spectrum to the negotiating BS that will inflict the minimum level of interference on its cluster.

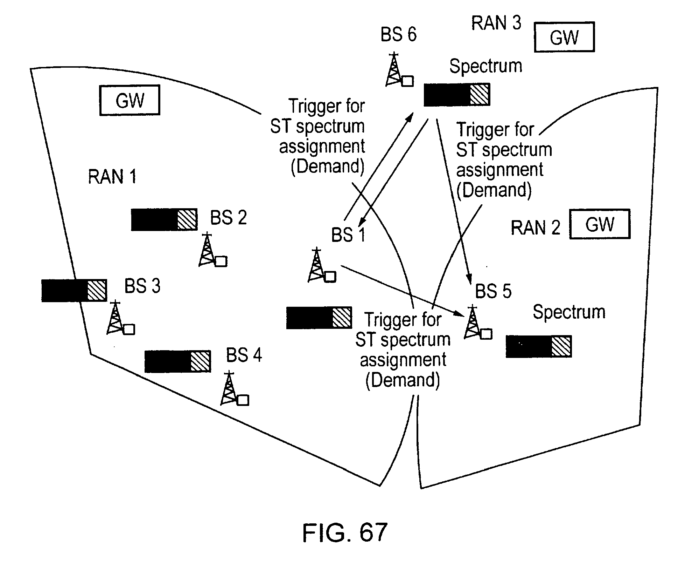

Possibility 4: This possibility may be considered to be a further consideration of possibility 3. When, as shown in Figure 67, more than one potential negotiation is possible, there is no central entity to decide the order in which the negotiations should be performed. One possible way of resolving this difficulty is as follows.

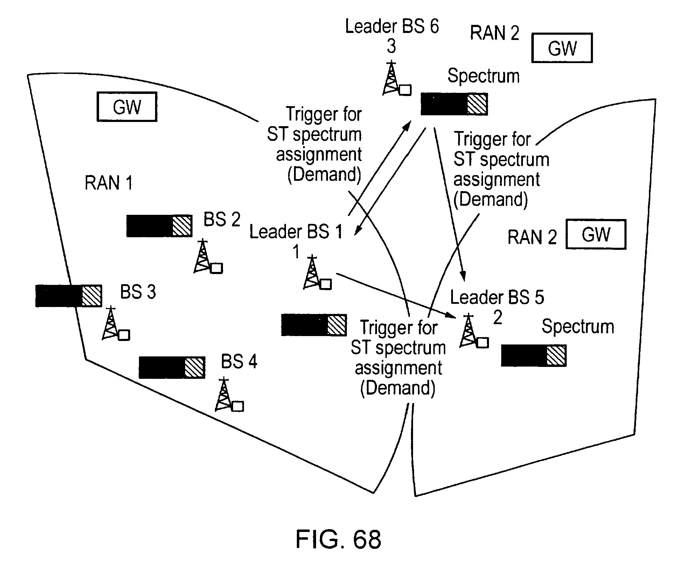

It is assumed that each BS has a negotiation identification number that it is assigned (either during manufacture or during a configuration phase of operation). The negotiations may then be performed in identification number order. The numbers may be sequential numbers. As shown in Figure 68, the leader BS of RAN2 has negotiation identification number 3.

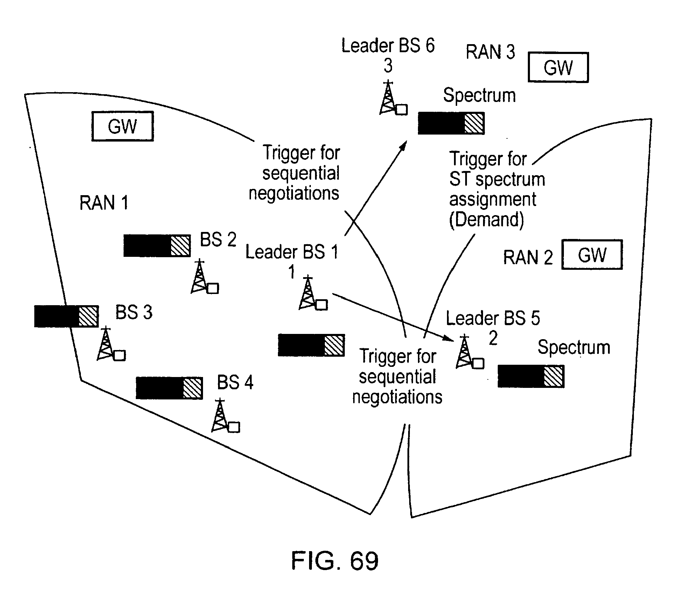

If any leader BS in any RAN receives one or more spectrum request while transmitting one or more spectrum request itself, it will automatically send a trigger alerting the BSs concerned that a sequential negotiation phase is necessary. This may occur if any two leader BSs get into spectrum negotiations at the same time. For example, in Figure 69, BS 1 (the leader BS of RAN1) has already triggered the sequential negotiation phase.

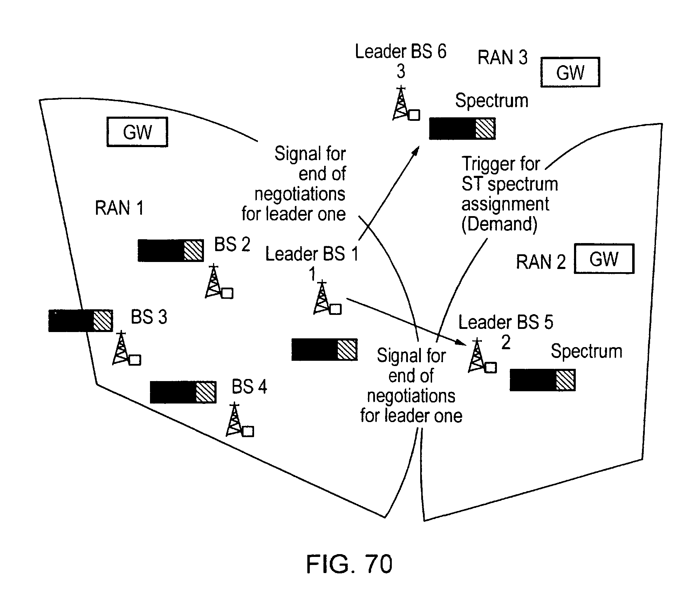

After sending that trigger signal, the leader BS having (for example) the lowest negotiation identification number may start the spectrum assignment and negotiation process, for example as described above in respect of one of possibilities 1 to 3. In Figure 69, this leader BS is BS1, having identification number 1. The identification numbers could be assigned to the BSs concerned when the sequential negotiation phase is initiated (for example by the BS initiating that phase), as a sequential series of identification numbers. In this way, the BSs would not need to compare their identification numbers to determine the order of play. As shown in Figure 70, one the first leader BS (BS1) has finished its negotiations, it may send a signal to alert the other leader BSs so that the next leader BS (in this case, BS5) may take its turn, and so on and so forth.

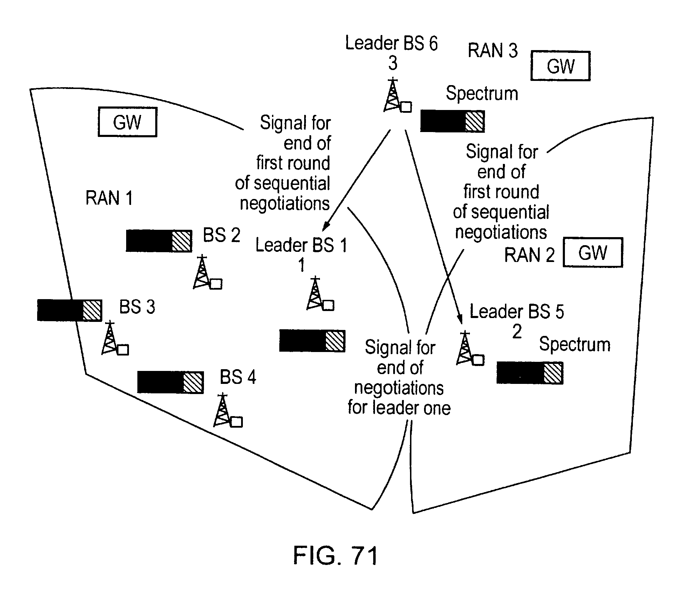

After all of the leader BSs have completed their respective turns to lead negotiations, as shown in Figure 71, the last such leader BS (in this case, BS6) may send a signal to alert the other leader BSs that one round of such sequential spectrum assignments and negotiations has been completed. This could mean that there is now an opportunity for a leader BS to enter into negotiations and assignments as per (for example) possibilities 1 to 3, or that there is an opportunity for another round of sequential spectrum assignments. To maintain a degree of fairness over the negotiation and short-term spectrum assignment process, the sequence order of negotiations (i.e. dictated by the identification numbers) may be rotated or changed from time to time, or for every such sequence. In that way, if leader BS1 currently has identification number 1, it may for the next round or sequence of negotiations have (for example) identification number 2.

Performance Evaluation, Simulation Results

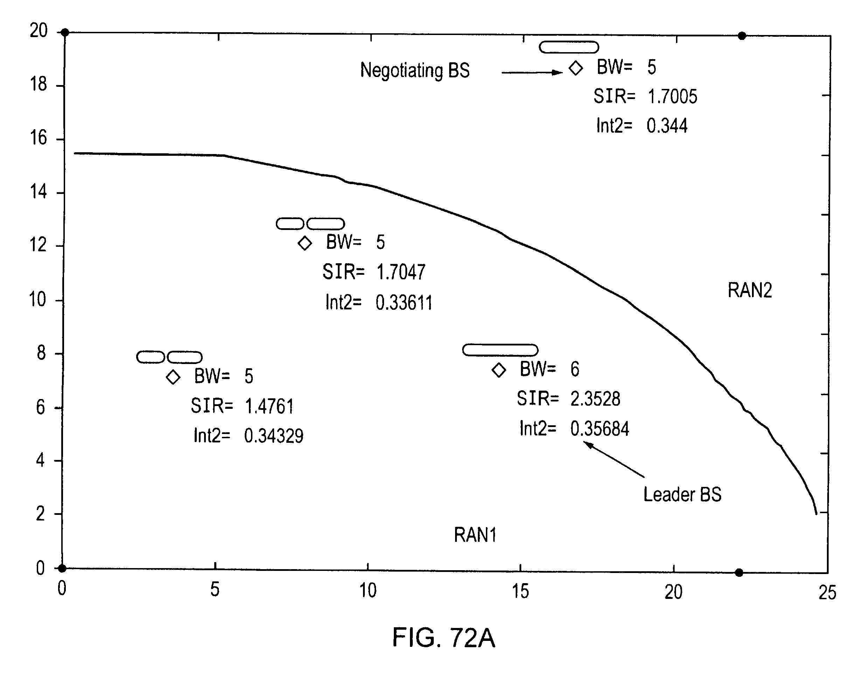

[It order to appreciate possible advantages of embodiments of the present invention, particularly regarding the above Possibilities 1 to 4, a number of simulations have been performed, and results of those simulations are presented in Figures 72A to 73B. For those simulations, it is assumed that the BSs employ Possibility 2 described above.

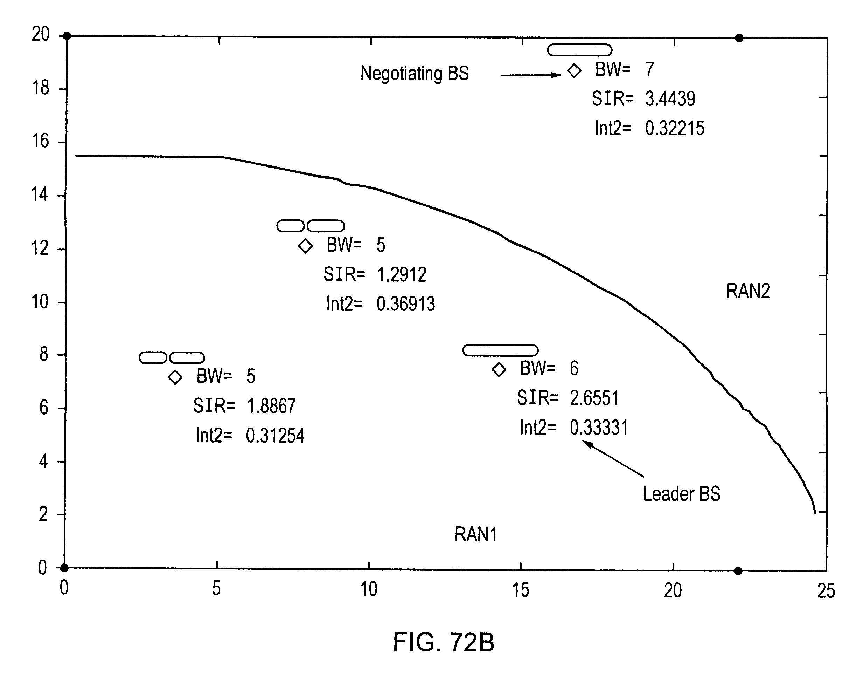

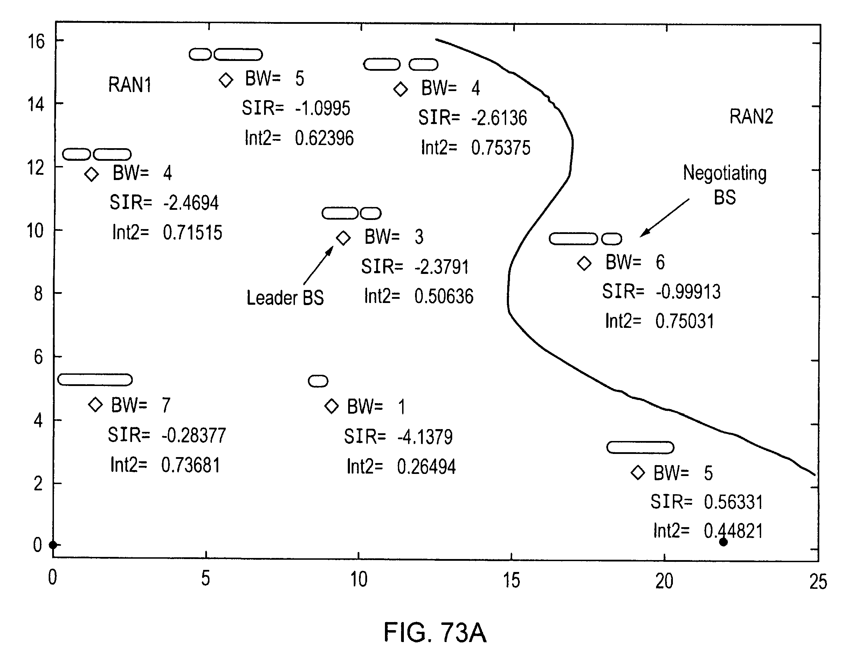

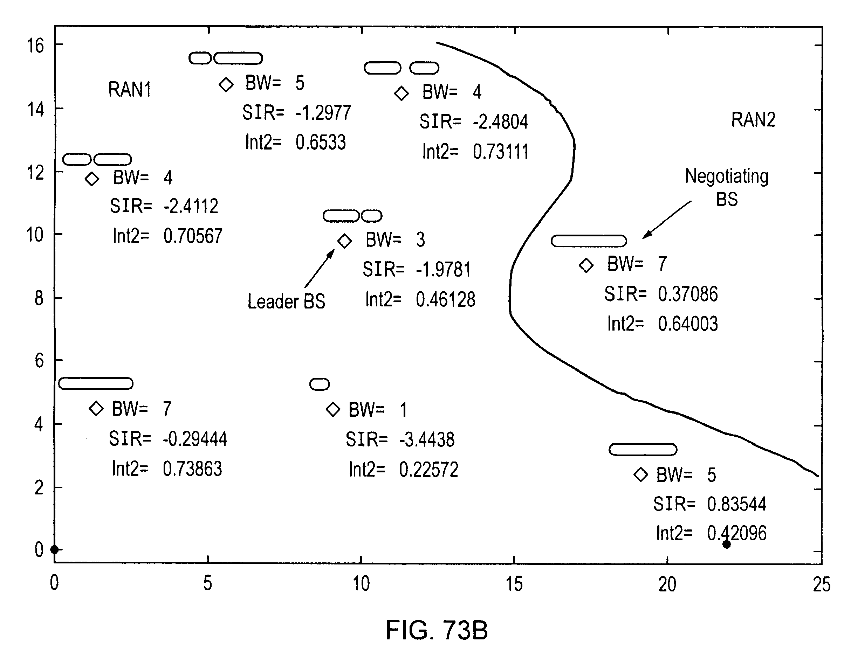

In Figures 72A and 72B, two RANs are considered, namely RAN1 and RAN2. In the main cluster (RAN1) it is assumed that there are three BSs, of which one is the leader BS. The negotiating BS belongs to RAN2. Only the leader BS, its cluster and the negotiating BS from RAN2 are depicted. In Figures 73A and 73B, a similar scenario is considered, except the cluster of RAN1 has more BSs.

It is assumed that the BSs start from a potential spectrum assignment and perform a ST spectrum assignment, and that the BSs are aware of the interference they inflict on others and the interference they receive from others.

Two different simulations are shown (corresponding to Figures 72 and 73, respectively), each having simulation results before spectrum re-assignment (Figures 72A, and 73A) and after re-assignment (Figures 72B, and 73B). Accordingly, the spectrum configurations of the BSs change as a result of the re-assignments. The results shown in these Figures are snap-shots showing the experienced SIR and interference values inflicted on the other BSs (Int2) before and after the re-assignments, and the bandwidth BW amounts used by those BSs. For the benefit of simplicity, is assumed that the entire available bandwidth is divided into 8 spectrum units for the purpose of such re-assignments. Each BS may use some or all of its allocated bandwidth at any time.

Looking now at Figures 72 and 73, each snapshot graphically shows the spectrum currently used by each BS (which may the same as or less than its allocated spectrum) by a row of blobs each corresponding to one of the spectrum units. A value for the used bandwidth BW (from 0 to 8), and values for the experienced SIR and inflicted interference Int2 are also shown.

Adaptive channel coding rates for a data packet and radio node have been considered to enable the radio nodes to adjust their transmission rates and consequently the target SIR values. The BER requirements selected for the simulations is $10^{-3}$, and the use of a Reed-Muller channel code RM(1,m) is assumed. The coding rates and the corresponding SIR target requirements used for the simulations are shown below in Table 2 (which, incidentally, is identical to Table 1 above and is reproduced here for ease of access).

Table 2: Code Rates of Reed-Muller Code RM (1,m) and Corresponding SIR Requirements for Target BER

| m | Code Rate | SIR (dB) |
|---|-----------|----------|
| 2 | 0.75 | 6 |
| 3 | 0.5 | 5.15 |
| 4 | 0.3125 | 4.6 |
| 5 | 0.1875 | 4.1 |
| 6 | 0.1094 | 3.75 |
| 7 | 0.0625 | 3.45 |
| 8 | 0.0352 | 3.2 |
| 9 | 0.0195 | 3.1 |
| 10 | 0.0107 | 2.8 |

In Figures 72A and 72B it can be observed that the leader BS from RAN1 has released a chunk of spectrum to the negotiating BS from RAN2. As a result, one of the non-leader BSs in the cluster has suffered a drop in SIR, whilst the other one has enjoyed a better SIR. The spectrum transfer has gone ahead since the overall inflicted interference on the cluster member suffering a drop in SIR has been below a threshold.

As mentioned above, Figures 73A and 73B show a situation where more BSs are involved in RAN1's negotiating cluster, than in Figures 72A and 72B. The effects on the various BSs can be appreciated from the values provided in those Figures.

The proposed embodiments may avoid a central entity for spectrum negotiations despite having no priority between the involved apparatuses or systems. The processes and methods outlined in embodiments of the present invention realize cluster-wide negotiations on an inter-RAN and intra-RAN basis with no priority between RANs, and by reducing a need for a higher layer entity or deciding authority. Negotiation protocols involving multiple RANs are considered, including sequential negotiations. The proposed "negotiation identification number" (negotiation sequential number) is useful for realising distributed sequential negotiations, and the rotating or changing of these numbers is useful for maintaining a degree of fairness.

In the proposed methods, signaling between the BSs is provided to demand interference levels, and to enable a leader BS to generally gather necessary information for it to decide upon proposed re-assignments of spectrum. Such information includes potential interference levels and power levels. Signaling for controlling sequential negotiations is also provided.

Centralised negotiations suffer from the problem that more signalling overhead is involved, and that more complexity of information gathering from all the involved distributed elements is involved. Distributed negotiation involve a lower signalling overhead, but the decisions on spectrum assignment may result in collisions of interest as the decisions are made locally without taking into account the impact on other spectrum users. This is a particular problem in a system with no system of priority between the involved radio networks or apparatuses. The embodiments disclosed herein challenge both classes of solutions by proposing semi-centralized cluster-wide spectrum negotiations and assignment for the negotiations between RANs when no priority exists between the RANs.

The proposals disclosed herein aim to reduce potential collisions of interest in a non-prioritised negotiation between multiple RANs, with no need for a permanent central higher-layer authority to make decisions. The proposals step away from fully centralized control based on higher-entity control, because the decisions are made by cluster leaders (BSs) without the need for signaling to higher layers.

The proposed mechanism for sequential negotiations and the use of the proposed "negotiation sequential numbers", for spectrum negotiations when multiple RANs are involved, help to realise distributed sequential negotiations. They also help to realise multiple spectrum negotiations for efficient and fair short-term spectrum assignments.

The proposals jointly improve the spectrum utilization and interference level in a mobile wireless network, whilst improving the QoS, the overall network coverage, the throughput and whilst reducing call blocking. Revenue can also be improved for spectrum borrowing/lending parties by making sure that radio resource is available and utilized when needed at peak times.

In any of the above aspects, the various features may be implemented in hardware, or as software modules running on one or more processors. Features of one aspect may be applied to any of the other aspects.

**Claims**

1.  A spectrum-assignment method for use in a wireless communication system (20), wherein the system (20) comprises at least a group of communication apparatuses (22), and wherein each such communication apparatus (22) has a portion of communication spectrum pre-assigned to it for communication, and wherein one of the communication apparatuses (22) of the group is a temporary leader of the group, the method comprising:

    selecting one of the communication apparatuses (22) of the group to be the temporary leader; and
    on a dynamic basis and within the temporary leader of the group, controlling re-assignments of said spectrum by approving or not proposed re-assignments, the re-assignments being between communication apparatuses (22) of the system and involving at least one said communication apparatus (22) of the group in dependence upon spectrum requirements of those communication apparatuses (22); the method further comprising:

    at another communication apparatus of the group other than the leader:

        considering potential spectrum re-assignments; and
        when the another communication apparatus is due to gain an extra amount of the communication spectrum as a result of one of the potential spectrum reassignments, informing other communication apparatuses that test transmissions are about to be made, and instructing user equipments served by the another communication apparatus to transmit test transmissions within the extra amount of the communication spectrum; wherein
        instructing test transmission includes assigning a modulation and coding scheme, and a power, for each test transmission;

    at the other communication apparatuses:

        having been informed of the test transmissions, measuring the interference rise as a result of each test transmission, and informing the another communication apparatus of the measurement;

    at the another communication apparatus:

        as one of the proposed re-assignments, informing the temporary leader of a spectrum re-assignment from among the potential spectrum re-assignments in dependence upon the measurements.

2.  A spectrum-assignment method as claimed in claim 1, wherein such control comprises at least determining allowability of said re-assignments.

3.  A spectrum-assignment method as claimed in claim 2, comprising changing which one of the communication apparatuses (22) of the group is the temporary leader of the group from time to time.

4.  A spectrum-assignment method as claimed in any preceding claim, wherein said re-assignments comprise a series of re-assignments, each such re-assignment being between the temporary leader of the group and another communication apparatus (22) of the group.

5.  A spectrum-assignment method as claimed in claim 4, comprising controlling said series of re-assignments in a predetermined sequence.

6.  A spectrum-assignment method as claimed in any preceding claim, comprising carrying out at least one such re-assignment in response to a trigger.

7.  A spectrum-assignment method as claimed in any preceding claim, wherein the system (20) comprises at least two said groups, and wherein the method comprises carrying out such control for one group at a time in a predetermined sequence.

8.  A spectrum-assignment method as claimed in any preceding claim, wherein the wireless communication system (20) further comprises at least one communication apparatus (22) not part of the or one said group, and said re-assignments comprise external re-assignments between the temporary leader of the or one said group and the at least one communication apparatus (22) not part of that group.

9. A wireless communication system (20), comprising:

at least a group of communication apparatuses (22), each such communication apparatus (22) having a portion of communication spectrum pre-assigned to it for communication, and one of the communication apparatuses (22) of the group being selected to be a temporary leader of the group; and
control means disposed within the temporary leader of the group and operable, on a dynamic basis, to control re-assignments of said spectrum by approving or not proposed re-assignments, the re-assignments being between communication apparatuses (22) of the system and involving at least one said communication apparatus (22) of the group in dependence upon spectrum requirements of those communication apparatuses (22); another communication apparatus of the group other than the leader being operable to consider potential spectrum re-assignments, and, when the another communication apparatus is due to gain an extra amount of the communication spectrum as a result of one of the potential spectrum re-assignments, it is operable to inform other communication apparatuses that test transmissions are about to be made, and to instruct user equipments it serves to transmit test transmissions within the extra amount of the communication spectrum, wherein instructing test transmissions includes assigning a modulation and coding scheme, and a power for each test transmission;
the other communication apparatuses, having been informed of the test transmissions, are operable to measure the interference rise resulting from each test transmission, and to inform the another communication apparatus of the measurement; and
the another communication apparatus is configured to inform the temporary leader of a spectrum re-assignment, as one of the proposed re-assignments, from among the potential spectrum re-assignments in dependence upon the measurements.

**Patentansprüche**

1. Spektrumzuweisungsverfahren zur Verwendung in einem drahtlosen Kommunikationssystem (20), wobei das System (20) mindestens eine Gruppe von Kommunikationsvorrichtungen (22) umfasst und wobei jede derartige Kommunikationsvorrichtung (22) über einen Anteil des Kommunikationsspektrums verfügt, der ihr zuvor für die Kommunikation zugewiesen wurde, und wobei eine der Kommunikationsvorrichtungen (22) der Gruppe ein temporärer Führer der Gruppe ist, wobei das Verfahren umfasst:

Auswählen einer der Kommunikationsvorrichtungen (22) der Gruppe, der temporäre Führer zu sein, und
Steuern von Neuzuweisungen des Spektrums auf einer dynamischen Basis und innerhalb des temporären Führer der Gruppe, indem die vorgeschlagenen Neuzuweisungen gebilligt oder nicht gebilligt werden, wobei die Neuzuweisungen zwischen den Kommunikationsvorrichtungen (22) des Systems sind und mindestens eine der Kommunikationsvorrichtungen (22) der Gruppe in Abhängigkeit von den Spektrumanforderungen dieser Kommunikationsvorrichtungen (22) einbeziehen, wobei das Verfahren ferner umfasst, dass:

bei einer weiteren Kommunikationsvorrichtung der Gruppe mit Ausnahme des Führers:

potenzielle Spektrum-Neuzuweisungen in Betracht gezogen werden und
wenn der weiteren Kommunikationsvorrichtung eine zusätzliche Menge des Kommunikationsspektrums im Ergebnis einer der potenziellen Spektrum-Neuzuweisungen zusteht, andere Kommunikationsvorrichtungen davon in Kenntnis gesetzt werden, dass Testübertragungen bevorstehen, und Nutzereinrichtungen, die durch die weitere Kommunikationsvorrichtung bedient werden, angewiesen werden, die Testübertragungen innerhalb der zusätzlichen Menge des Kommunikationsspektrums zu übertragen, wobei
das Anweisen der Testübertragung ein Zuweisen eines Modulations- und Codierungsschemas und einer Leistung für jede Testübertragung umfasst,

bei den anderen Kommunikationsvorrichtungen:

der Anstieg der Störbeeinflussung im Ergebnis einer jeden Testübertragung gemessen wird, nachdem sie über die Testübertragungen informiert worden sind, und die weitere Kommunikationsvorrichtung über die Messung informiert wird;

bei der weiteren Kommunikationsvorrichtung:

der temporäre Führer in Abhängigkeit von den Messungen über eine Spektrum-Neuzuweisung als eine der vorgeschlagenen Neuzuweisungen unter den potenziellen Spektrum-Neuzuweisungen informiert wird.

**2.** Spektrumzuweisungsverfahren nach Anspruch 1, wobei eine derartige Steuerung mindestens ein Bestimmen der Zulässigkeit der Neuzuweisungen umfasst.

**3.** Spektrumzuweisungsverfahren nach Anspruch 2, wobei enthalten ist, dass von Zeit zu Zeit verändert wird, welche von den Kommunikationsvorrichtungen (22) der Gruppe der temporäre Führer ist.

**4.** Spektrumzuweisungsverfahren nach einem der vorhergehenden Ansprüche, wobei die Neuzuweisungen eine Reihe von Neuzuweisungen umfassen, wobei jede derartige Neuzuweisung zwischen dem temporären Führer der Gruppe und der weiteren Kommunikationsvorrichtung (22) der Gruppe erfolgt.

**5.** Spektrumzuweisungsverfahren nach Anspruch 4, ein Steuern der Reihe von Neuzuweisungen in einer vorgegebenen Abfolge umfassend.

**6.** Spektrumzuweisungsverfahren nach einem der vorhergehenden Ansprüche, ein Ausführen mindestens einer derartigen Neuzuweisung in Reaktion auf ein Auslösesignal umfassend.

**7.** Spektrumzuweisungsverfahren nach einem der vorhergehenden Ansprüche, wobei das System (20) mindestens zwei der Gruppen enthält und wobei das Verfahren ein Ausführen einer derartigen Steuerung für eine Gruppe nach der anderen in einer vorgegebenen Abfolge umfasst.

**8.** Spektrumzuweisungsverfahren nach einem der vorhergehenden Ansprüche, wobei das drahtlose Kommunikationssystem (20) ferner mindestens eine Kommunikationsvorrichtung (22) umfasst, die nicht ein Teil der Gruppe oder einer der Gruppen ist, und wobei die Neuzuweisungen externe Neuzuweisungen zwischen dem temporären Führer der Gruppe oder einer der Gruppen und der mindestens einen Kommunikationsvorrichtung (22) umfassen, die nicht ein Teil dieser Gruppe ist.

**9.** Drahtloses Kommunikationssystem (20) mit:

mindestens einer Gruppe von Kommunikationsvorrichtungen (22), wobei eine jede derartige Kommunikationsvorrichtung (22) über einen Anteil des Kommunikationsspektrums verfügt, der ihr zuvor für die Kommunikation zugewiesen wurde, und wobei eine der Kommunikationsvorrichtungen (22) der Gruppe ausgewählt ist, ein temporärer Führer der Gruppe zu sein,
Steuermitteln, die innerhalb des temporären Führers der Gruppe angeordnet und betriebsfähig sind, die Neuzuweisungen des Spektrums auf einer dynamischen Basis zu steuern, indem die vorgeschlagenen Neuzuweisungen gebilligt oder nicht gebilligt werden, wobei die Neuzuweisungen zwischen den Kommunikationsvorrichtungen (22) des Systems erfolgen und mindestens eine der Kommunikationsvorrichtungen (22) der Gruppe in Abhängigkeit von den Spektrumanforderungen dieser Kommunikationsvorrichtungen (22) einbeziehen,
wobei eine weitere Kommunikationsvorrichtung der Gruppe mit Ausnahme des Führers betriebsfähig ist, potenzielle Spektrum-Neuzuweisungen in Betracht zu ziehen, und wenn der weiteren Kommunikationsvorrichtung eine zusätzliche Menge des Kommunikationsspektrums im Ergebnis einer der potenziellen Spektrum-Neuzuweisungen zusteht, sie betriebsfähig ist, andere Kommunikationsvorrichtungen davon in Kenntnis zu setzen, dass Testübertragungen bevorstehen, und Nutzereinrichtungen, die sie bedient, anzuweisen, die Testübertragungen innerhalb der zusätzlichen Menge des Kommunikationsspektrums zu übertragen, wobei das Anweisen der Testübertragungen ein Zuweisen eines Modulations- und Codierungsschemas und einer Leistung für jede Testübertragung umfasst,
wobei die anderen Kommunikationsvorrichtungen, die über die Testübertragungen informiert wurden, betriebsfähig sind, den Anstieg der Störbeeinflussung im Ergebnis einer jeden Testübertragung zu messen und die weitere Kommunikationsvorrichtung über die Messung zu informieren, und
wobei die weitere Kommunikationsvorrichtung eingerichtet ist, den temporären Führer in Abhängigkeit von den Messungen über eine Spektrum-Neuzuweisung als eine der vorgeschlagenen Neuzuweisungen unter den potenziellen Spektrum-Neuzuweisungen zu informieren.

**Revendications**

1. Procédé d'attribution de spectre à utiliser dans un système de communication sans fil (20), dans lequel le système (20) comprend au moins un groupe d'appareils de communication (22), et dans lequel chacun de ces appareils de communication (22) a une partie de spectre de communication qui lui est pré-attribuée pour ses communications, et dans lequel l'un des appareils de communication (22) du groupe est un leader temporaire du groupe, le procédé comprenant :

   sélectionner l'un des appareils de communication (22) du groupe pour être le leader temporaire ; et
   de façon dynamique et au sein du leader temporaire du groupe, commander les réattributions dudit spectre par approbation ou non des réattributions proposées, les réattributions se faisant entre des appareils de communication (22) du système et impliquant au moins l'un desdits appareils de communication (22) du groupe en fonction des besoins en spectre de ces appareils de communication (22) ; le procédé comprenant en outre :

      au sein d'un autre appareil de communication du groupe, différent du leader :

         considérer les réattributions de spectre potentielles ; et
         lorsque l'autre appareil de communication doit obtenir une quantité supplémentaire du spectre de communication en conséquence de l'une des réattributions de spectre potentielles, informer d'autres appareils de communication que des transmissions tests sont sur le point d'être effectuées, et donner l'instruction aux équipements utilisateurs desservis par l'autre appareil de communication de réaliser des transmissions tests dans la quantité de spectre de communication supplémentaire ;
         où l'instruction de réaliser des transmissions tests comprend l'attribution d'un schéma de modulation et de codage, et d'une puissance, pour chaque transmission test ;

      au sein des autres appareils de communication :

         ayant été informés des transmissions tests, mesurer l'augmentation de brouillage résultant de chaque transmission test, et informer l'autre appareil de communication de la mesure ;

      au sein de l'autre appareil de communication :

         informer le leader temporaire d'une réattribution de spectre, en tant que l'une des réattributions proposées, parmi les réattributions de spectre potentielles, en fonction des mesures.

2. Procédé d'attribution de spectre selon la revendication 1, dans lequel cette commande comprend au moins le fait de déterminer la disponibilité desdites réattributions.

3. Procédé d'attribution de spectre selon la revendication 2, comprenant le fait de changer de temps en temps celui des appareils de communication (22) du groupe qui est le leader temporaire du groupe.

4. Procédé d'attribution de spectre selon l'une quelconque des revendications précédentes, dans lequel lesdites réattributions comprennent une série de réattributions, chacune de ces réattributions se faisant entre le leader temporaire du groupe et un autre appareil de communication (22) du groupe.

5. Procédé d'attribution de spectre selon la revendication 4, comprenant le fait de commander ladite série de réattributions selon une séquence prédéterminée.

6. Procédé d'attribution de spectre selon l'une quelconque des revendications précédentes, comprenant le fait d'exécuter au moins l'une de ces réattributions en réponse à un déclenchement.

7. Procédé d'attribution de spectre selon l'une quelconque des revendications précédentes, dans lequel le système (20) comprend au moins deux dits groupes, et dans lequel le procédé comprend le fait d'exécuter cette commande pour un seul groupe à un certain instant d'une séquence prédéterminée.

8. Procédé d'attribution de spectre selon l'une quelconque des revendications précédentes, dans lequel le système de communication sans fil (20) comprend en outre au moins un appareil de communication (22) qui ne fait pas partie du ou d'un dit groupe, et lesdites réattributions comprennent des réattributions externes entre le leader temporaire du ou d'un dit groupe et l'au moins un appareil de communication (22) qui ne fait pas partie de ce groupe.

9.  Système de communication sans fil (20) comprenant :

au moins un groupe d'appareils de communication (22), chacun de ces appareils de communication (22) ayant une partie de spectre de communication qui lui est pré-attribuée pour ses communications, et l'un des appareils de communication (22) du groupe étant sélectionné pour être un leader temporaire du groupe ; et

des moyens de commande se trouvant dans le leader temporaire du groupe et apte à commander, de façon dynamique, les réattributions dudit spectre par approbation ou non des réattributions proposées, les réattributions se faisant entre des appareils de communication (22) du système et impliquant au moins l'un desdits appareils de communication (22) du groupe en fonction des besoins en spectre de ces appareils de communication (22) ;

un autre appareil de communication du groupe, différent du leader, étant apte à considérer les réattributions de spectre potentielles, et, lorsque l'autre appareil de communication doit obtenir une quantité supplémentaire du spectre de communication en conséquence de l'une des réattributions de spectre potentielles, il est apte à informer d'autres appareils de communication que des transmissions tests sont sur le point d'être effectuées, et à donner l'instruction aux équipements utilisateurs qu'il dessert de réaliser des transmissions tests dans la quantité de spectre de communication supplémentaire, où l'instruction de réaliser des transmissions tests comprend l'attribution d'un schéma de modulation et de codage, et d'une puissance, pour chaque transmission test ;

les autres appareils de communication, ayant été informés des transmissions tests, sont aptes à mesurer l'augmentation de brouillage résultant de chaque transmission test, et à informer l'autre appareil de communication de la mesure ; et

l'autre appareil de communication est configuré pour informer le leader temporaire d'une réattribution de spectre, en tant que l'une des réattributions proposées, parmi les réattributions de spectre potentielles, en fonction des mesures.

FIG. 1

FIG. 2

Dedicated Bandwidth

| Operator 1 RAN 1 | Operator 2 RAN 2 | Operator 3 RAN 3 |

Guard Band

| Operator 1 RAN 1 | Operator 2 RAN 2 | Operator 3 RAN 3 | | |

Dedicated Bandwidth

Shared Bandwidth

## FIG. 3

FIG. 4

Guard Band

| Operator 1 RAN 1 | Operator 2 RAN 2 | Operator 3 RAN 3 |
|---|---|---|

| Operator 1 RAN 1 | Operator 2 RAN 2 |
|---|---|

Dedicated Bandwidth

Extra Shared Bandwidth

LT Assignment (First Run)

Guard Band

| Operator 1 RAN 1 | Operator 2 RAN 2 | Operator 3 RAN 3 |
|---|---|---|

| Operator 3 RAN 3 | Operator 2 RAN 2 |
|---|---|

Dedicated Bandwidth

Extra Shared Bandwidth

LT Assignment (Second Run)

Guard Band

| Operator 1 RAN 1 | Operator 2 RAN 2 | Operator 3 RAN 3 |
|---|---|---|

| Operator 3 RAN 3 | Operator 2 RAN 2 |
|---|---|

Dedicated Bandwidth

Extra Shared Bandwidth

FIG. 5

FIG. 6

Available Spectrum at UL/DL

Sub-Channel Definition

White
Space

Channel Allocation/
Resource Partitioning

White
Space

BS 2

BS 3

BS 1

BS 4

FIG. 7A

Base Station

White
Space

Channel Allocation/
Resource Partitioning

White
Space

UE 2

UE 3

UE 1

UE 4

FIG. 7B

Spectrum Co-existence and Sharing
On hours or couple of days basis

STAGE 1

- - - - - - - - - - - - - - - - - - -

LT Spectrum Assignment
On one minute or couple
of minutes basis

STAGE 2

- - - - - - - - - - - - - - - - - -

ST Spectrum Assignment
On one second or couple
of seconds basis

STAGE 3

- - - - - - - - - - - - - - - - -

Channel Allocation/Radio Resource Partitioning
On 10ms or couple
of 10ms basis

STAGE 4

FIG. 8

FIG. 9

FIG. 10

FIG. 11A

FIG. 11B

GW 1

BS 1

BS 2

BS 3

BS 5

BS 4

Primary System (e.g. RAN)

Long Term Spectrum
Assignment
Gateway-To-Gateway
Negotiations

GW 2

Short Term Spectrum
Assignment
BS-To-BS
Negotiations

BS 6

BS 8

BS 9

BS 7

BS 10

Secondary System (e.g. RAN)

FIG. 12

EP 2 073 587 B1

**M1-3B**

BS1 measures current level of its own interference

**M1-4B**

BS1 measures current level of its own interference

METHOD 1 - SELFISH

First Period of Short Term Spectrum Assignment Spectrum Negotiations First Cluster

BS3 informs BS1 of its decision | BS1 informs BS3 that it has approved or not

BS4 informs BS1 of its decision | BS1 informs BS4 that it has approved or not

**M1-2**

**M1-1**

Interested BSs send their request to the cluster leaders

Cluster leaders BS1 and BS2 decide which BSs are allowed to participate in ST spectrum assignment process and inform them

BS3 determines the best spectrum assignment with max bandwidth and minimum interference on itself

**M1-4A**

**M1-3A**

BS4 determines the best spectrum assignment with max bandwidth and minimum interference on itself

Next cluster

**M1-5B**

BS2 measures current level of its own interference

**M1-6B**

BS2 measures current level of its own interference

**M1-7B**

BS2 measures current level of its own interference

BS5 informs BS2 of its decision | BS1 informs BS5 that it has approved or not

BS6 informs BS2 of its decision | BS1 informs BS6 that it has approved or not

BS4 informs BS2 of its decision | BS2 informs BS4 that it has approved or not

Next period of short term spectrum assignment

**M1-5A**

BS5 determines the best spectrum assignment with max bandwidth and minimum interference on itself

**M1-6A**

BS6 determines the best spectrum assignment with max bandwidth and minimum interference on itself

**M1-7A**

BS4 determines the best spectrum assignment with max bandwidth and minimum interference on itself

Transmissions

Progress in time

FIG. 13

METHOD 2 - SELFISH

First Period of Short Term Spectrum
Assignment Spectrum Negotiations First
Cluster

**M2-3B**

BS1 measures
current level of its
own interference

**M2-4B**

BS1 measures
current level of its
own interference

BS3 informs
BS1 of its
decision

BS1 informs
BS3 that it
has approved
or not

BS4 informs
BS1 of its
decision

BS1 informs
BS4 that it
has approved
or not

**M2-2**

Cluster leader BS1
decides which BSs
are allowed to
participate in ST
spectrum
assignment process
and information

**M2-1**

Interested BSs
send their
request to the
cluster leader

BS3 determines
the best spectrum
assignment with
max bandwidth
and minimum
interference on
itself

**M2-4A**

**M2-3A**

BS4 determines
the best spectrum
assignment with
max bandwidth
and minimum
interference on
itself

**M2-5B**

BS1 measures
current level of its
own interference

**M2-6B**

BS1 measures
current level of its
own interference

**M2-7B**

BS1 measures
current level of its
own interference

BS5
informs
BS1 of its
decision

BS2 informs
BS5 that it
has approved
or not

BS6
informs
BS1 of its
decision

BS2 informs
BS6 that it
has approved
or not

BS2
informs
BS1 of its
decision

BS1 informs
BS2 that it
has approved
or not

**M2-5A**

BS5 determines
the best spectrum
assignment with
max bandwidth
and minimum
interference on
itself

**M2-6A**

BS6 determines
the best spectrum
assignment with
max bandwidth
and minimum
interference on
itself

**M2-7A**

BS2 determines
the best spectrum
assignment with
max bandwidth
and minimum
interference on
itself

Next period
of short
term
spectrum
assignment

Transmissions

Progress in time

FIG. 14

## M3-3B
BS1 measures current level of its own interference and that of BSs in primary system

## M3-4B
BS1 measures current level of its own interference and that of BSs in primary system

METHOD 3 - CONSIDERATE

First Period of Short Term Spectrum Assignment Spectrum Negotiations First Cluster

BS3 informs BS1 of its decision

BS1 informs BS3 that it has approved or not

BS4 informs BS1 of its decision

BS1 informs BS4 that it has approved or not

## M3-2
Cluster leaders BS1 and BS2 decide which BSs are allowed to participate in ST spectrum assignment process and informs them

## M3-1
Interested BSs send their request to the cluster leaders

BS3 determines the best spectrum assignment with max bandwidth and minimum interference on itself and others

M3-4A

BS4 determines the best spectrum assignment with max bandwidth and minimum interference on itself and others

M3-3A

Progress in time

Next cluster

## M3-5B
BS2 measures current level of its own interference

## M3-6B
BS2 measures current level of its own interference

## M3-7B
BS2 measures current level of its own interference

BS5 informs BS2 of its decision

BS2 informs BS5 that it has approved or not

BS6 informs BS2 of its decision

BS2 informs BS6 that it has approved or not

BS4 informs BS2 of its decision

BS2 informs BS4 that it has approved or not

## M3-5A
BS5 determines the best spectrum assignment with max bandwidth and minimum interference on itself and others

## M3-6A
BS6 determines the best spectrum assignment with max bandwidth and minimum interference on itself and others

## M3-7A
BS4 determines the best spectrum assignment with max bandwidth and minimum interference on itself and others

Next period of short term spectrum assignment

Transmissions

Progress in time

## FIG. 15

FIG. 16

Secondary BS BS2

Bilateral Negotiation protocol

Round Robin fashion of Bilateral Negotiations, Time separated

Cluster Leader

BS6 Secondary BS

BS3 Secondary BS

BS1

BS5 Secondary BS

BS4 Secondary BS

FIG. 17

EP 2 073 587 B1

| | |
|---|---|
| Long-Term Spectrum assignment | long timescale (minutes) |
| Inter-RAN Handover/Load balancing | long timescale (seconds) |
| Intra-RAN Handover | medium timescale (500ms-1second) |
| Short-Term Spectrum assignment<br>Partitioning between overlapping operators | medium timescale (200-500ms) |
| Inter-cell Resource Partitioning<br>- Partitioning between cells and RECs<br>- Inter-cell Interference avoidance<br>- Inter-cell load balancing | short timescale (100ms) |
| Intra-cell Resource Partitioning<br>- Partitioning between adaptive and non-adaptive resoures<br>--------------------------------------------------<br>- Partitioning in a REC between BS and RNs | minimum timescale (superframe) |

Major Impact

FIG. 18

Process of creating the spectrum assignment possibilities

FIG. 19

A short term spectrum exchange between 2 BTSs

- Protocol and decision method for fast spectrum exchange between Base Stations

Method A (selfish)

Offer of spectrum

Estimate potential interference from surrounding BSs and identify best spectrum to obtain for short term

Figs. 21 to 24

BS1

BS2

Spectrum release suggestion
(identified spectrum, time)

Evaluates the suggestion on the basis of prevailing interference conditions at BS1

Fig. 25

Accept / Reject

Adopt spectrum

Adopt spectrum

Note1: the amount of spectrum considered for release against each request is a pre-agreed amount

FIG. 20

50

```
      START
        │
        ▼
┌─────────────────────┐
│ SELECT A DESIRED VALUE │  ⌐ S51
│ FOR m TAKING INTO     │
│ ACCOUNT EXPECTED      │
│ RECEIVED INTERFACE    │
└─────────────────────┘
        │
        ▼
      END
```

FIG. 21

60

```
              START
                │
                ▼
            ┌───────┐
            │  m=1  │  ⌐ S61
            └───────┘
                │
                ▼
 ┌──────────────────────────┐
 │  EVALUATE AND STORE       │ ⌐ S62
 │  B_{m,2} and γ_{2,m}       │
 └──────────────────────────┘
                │
                ▼
    NO      ◇────────◇
  ◄─────────│ m=M ?  │  ⌐ S63
            ◇────────◇
                │ YES
                ▼
 ┌──────────────────────────┐
 │  SELECT PREFERRED         │ ⌐ S65
 │  VALUE FOR m BASED        │──────►  END
 │  UPON STORED VALUES       │
 └──────────────────────────┘
```

S64  ┌─────────┐
     │ m=m+1   │
     └─────────┘

FIG. 22

FIG. 23

FIG. 24

90

START

BS 1 has the past best interference values $\gamma_{1,best}$ and $\beta_{1,best}$ — S91

BS 1 considers the spectrum assignment $C_{2m}$ suggested by BS 2
Evaluates the interference values $\gamma_{1,m}$ — S92

$\gamma_{1,m} < \gamma_{1,Best}$ ?

S93

Yes

No

Approve the new spectrum assignment and inform BS 2 — S94

S95 — Disapprove the new spectrum assignment and inform BS 2

END

END

FIG. 25

A short term spectrum exchange between 2 BTSs

Method B (selfish)

Note1: the amount of spectrum considered for release
against each request is a pre-agreed amount

FIG. 26

A short term spectrum exchange between 2 BTSs

Method C (considerate)

```
                         Offer of spectrum
BS1   - - - - - - - - - - - - - - - - - - - - - - - - - ->   BS2

                                          ┌──────────────────────┐
                                          │ Estimate potential   │
                                          │ interference from    │
              Figs. 28 to 31              │ surrounding BSs and  │
                                          │ potential interference│
                                          │ that could be inflicted│
                                          │ from one BS to       │
                                          │ surrounding BSs      │
                                          │ identify best        │
                                          │ spectrum to release  │
                                          │ for short term       │
                                          └──────────────────────┘

        New Spectrum assignment (suggestion)
      ─────────────────────────────────────────────>

        Acknowledge or Accept / Reject (optional)
      <─────────────────────────────────────────────
 ┌─────────────────┐                    ┌─────────────────┐
 │ Adopt spectrum  │                    │ Adopt spectrum  │
 └─────────────────┘                    └─────────────────┘
```

Note1: the amount of spectrum considered for release
against each request is a pre-agreed amount

FIG. 27

100

START

SELECT A DESIRED VALUE
FOR m TAKING INTO
ACCOUNT EXPECTED
INFLICTED AND RECEIVED
INTERFERENCE ⟩ S101

END

FIG. 28

110

START

m=1 ⟩ S111

S114

m=m+1

EVALUATE AND STORE
$B_{m,2}, \gamma_{2,m}$ and $B_{2,m}$ ⟩ S112

NO ◇ m=M ? ⟩ S113

YES

SELECT PREFERRED
VALUE FOR m BASED
UPON STORED VALUES ⟩ S115

END

FIG. 29

FIG. 30

For Current Spectrum assignment for BS 2, $C_{2m}$ as the best existing solution.
Evaluate the interference value $\gamma_2$ and the total bandwidth $B_{m,2}$
Consider these values as the best $C_{2,Best}$ with $\gamma_{2,best}$ with $B_{best,2}$

S131

$m=1$  S132

S133

BS 2 Considers the spectrum assignment $C_{2m}$
Evaluate the interference value $\gamma_{m,2}$ and bandwidth $B_{m,2}$
Consider these values as the best $C_{2,Best}$ with $B_{Best,2}$ with $\gamma_{2,best}$

Evaluate the next potential spectrum assignment increase m to m+1

S138

$B_{m,2} > B_{Best,2}$ ? — No

S134 — Yes

$B_{2,m} < B_{2,Best}$ AND $\gamma_{2,m} < \gamma_{2,Best}$ ? — No

S135 — Yes

Consider these values as the best $C_{2,Best}$ with $\beta_{2,Best}$ AND $\gamma_{2,Best}$  S136

S137

m=M? — No

Yes

130

Adopt the current best spectrum assignment and terminate the procedure  S139

FIG. 31

_140_

START

BS 1 has the past best interference values $\gamma_{1,best}$ and $\beta_{1,best}$ — S141

BS 1 considers the spectrum assignment $C_{2m}$ suggested by BS 2 — S142
Evaluates the interference values $\gamma_{1,m}$ and $\beta_{1,m}$

Yes $\qquad$ $\gamma_{1,m} < \gamma_{1,Best}$ $\qquad$ No
AND $\beta_{1,m} < \beta_{1,Best}$
?

S143

Approve the new
spectrum assignment — S144
and inform BS 2

S145 — Disapprove the new
spectrum assignment
and inform BS 2

END

END

FIG. 32

A short term spectrum exchange between 2 BTSs

Method D (considerate) - Modified

Request for spectrum (optional)

Accept / Reject (optional)

BS2

Estimate potential interference from surrounding BSs and potential interference that could be inflicted from one BS to surrounding BSs Identify best spectrum to request for short term

Figs. 28 to 31

BS1

Spectrum request for specific frequency

Fig. 32

Adopt proposed Spectrum request?

Accept / Reject

Adopt spectrum

Adopt spectrum

Note1: the amount of spectrum considered for release against each request is a pre-agreed amount

FIG. 33

Setup Protocol for Interference Measurements

Indicates it is about to test transmit on
spectrum assignment C1 with power P1

BS1

BS1 test transmits
on C1

BS2 signals an index showing the
approximate interference rise

BS1 records the
interference rise

BS1 then estimates
the interference on
C2 based on the
results on C1

BS1 then estimates
the interference on
Cn based on the
results on C1

BS1 sends the signal that my setup
is complete, it is your turn

BS2

FIG. 34

Setup Protocol for Interference Measurements

Indicates it is about to test transmit on
spectrum assignment C1 with power P1

BS2

BS2 test transmits
on C1

BS1

BS1 signals an index showing the
approximate interference rise

BS2 records the
interference rise

BS2 then estimates
the interference on
C2 based on the
results on C1

BS2 then estimates
the interference on
Cn based on the
results on C1

BS2 sends the signal that my setup
is complete, it is your turn

FIG. 35

Setup Protocol for Interference Measurements

Indicates it is about to test transmit on
spectrum assignment C1 with power P1

BS1

BS1 test transmits on
C1 with power P1

BS2

BS2 signals an index showing the
approximate interference rise

BS1 records the
interference rise

⋮

BS1 test transmits on
C1 with power Pn

BS2 signals an index showing the
approximate interference rise

BS1 records the
interference rise

⋮

BS1 then estimates
the interference on
Cn based on the
results on C1

BS1 sends the signal that my setup
is complete, it is your turn

FIG. 36

## Setup Protocol for Interference Measurements

Indicates it is about to test transmit on
spectrum assignment C1 with power P1

BS2

BS1

BS2 test transmits on
C1 with power P1

BS1 signals an index showing the
approximate interference rise

BS2 records the
interference rise

BS2 test transmits on
C1 with power Pn

BS1 signals an index showing the
approximate interference rise

BS2 records the
interference rise

BS2 then estimates
the interference on
Cn based on the
results on C1

BS1 sends the signal that my setup
is complete, it is your turn

FIG. 37

Setup Protocol for Interference Measurements

Indicates it is about to test transmit on
spectrum assignment C1 with power P1

BS1

BS1 test transmits on
C1

BS2 signals an index showing the
approximate interference rise

BS1 records the
interference rise

BS1 test transmits on
C2

BS2 signals an index showing the
approximate interference rise

BS1 test transmits
on Cn

BS2 signals an index showing the
approximate interference rise

BS1 records the
interference rise

BS1 signals the completion of the process

BS2

FIG. 38

Setup Protocol for Interference Measurements

Indicates it is about to test transmit on
spectrum assignment C1 with power P1

BS2 test transmits on
C1

BS2

BS1 signals an index showing the
approximate interference rise

BS1

BS2 records the
interference rise

BS2 test transmits on
C2

BS1 signals an index showing the
approximate interference rise

BS2 test transmits
on Cn

BS1 signals an index showing the
approximate interference rise

BS2 records the
interference rise

BS2 signals the completion of the process

FIG. 39

FIG. 40

FIG. 41

FIG. 42

FIG. 43

FIG. 44

Setup Protocol for Interference Measurements at UEs

UEs

BS1

BS2

BS3

BS1 informs other BSs that test-transmit is about to happen

BSs go to the listening mode

Ready signal

Informs UEs to test transmit in the new potential band

UEs test transmit in the new potential band

Other BSs measure any rise in the interference

Other BSs signal the interference rise to BS1

BS1 records the interference rise

BS1 signals the completion of the process

BS1 signals the completion of the process

BS1 may consider other potential new bands

FIG. 45

Accounting process for short term spectrum assignment

| Spectrum register or higher entity determines the aggregate lent or borrowed amount of spectrum and triggers the pricing process |

Completes spectrum negotiations session 1

Completes spectrum negotiations session 1

| Spectrum register or higher entity determines the aggregate lent or borrowed amount of spectrum and triggers the pricing process |

$((( \varphi )))$

BS1

| Record the agreed spectrum assignment Ci |

| Record the agreed spectrum assignment Ci |

$((( \varphi )))$

BS2

Completes spectrum negotiations session n

Completes spectrum negotiations session n

Report the index of all the successful assignments Ci...Cm to the spectrum manager or higher network layer

| Record the agreed spectrum assignment Cm |

| Record the agreed spectrum assignment Cm |

Report the index of all the successful assignments Ci...Cm to the spectrum manager or higher network layer

| Reached the end of period of N negotiations |

| Reached the end of period of N negotiations |

Start the next sequence of negotiations

Start the next sequence of negotiations

FIG. 46

FIG. 47A

FIG. 47B

EP 2 073 587 B1

FIG. 48A

FIG. 48B

FIG. 49A

EP 2 073 587 B1

FIG. 49B

EP 2 073 587 B1

FIG. 50A

FIG. 50B

FIG. 51A

FIG. 51B

FIG. 52

FIG. 53A

FIG. 53B

FIG. 54

FIG. 55

FIG. 56

FIG. 57

FIG. 58

FIG. 59

FIG. 60

GW

RAN 1

BS 2

Leader
BS 1

Demand for
power level
on the
chunk spectrum
of interest

RAN 2    GW

BS 3

BS 5

Spectrum

BS 4

FIG. 61

FIG. 62

FIG. 63

FIG. 64

GW

RAN 1

Request for
potential
interference
BS 2    measurement
Leader
BS 1

BS 3

BS 4

RAN 2    GW

BS 5
Spectrum

FIG. 65

FIG. 66

FIG. 67

Leader BS 6
3                    RAN 2        GW

Spectrum

GW                    Trigger for            Trigger for
                      ST spectrum           ST spectrum
RAN 1                 assignment            assignment
                      (Demand)              (Demand)
            BS 2
                   Leader BS 1                         RAN 2        GW
                         1
     BS 3

                                    Leader BS 5
                                        2
            BS 4              Trigger for              Spectrum
                             ST spectrum
                             assignment
                             (Demand)

FIG. 68

FIG. 69

FIG. 70

FIG. 71

FIG. 72A

EP 2 073 587 B1

FIG. 72B

EP 2 073 587 B1

FIG. 73A

FIG. 73B

EP 2 073 587 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1732338 A1

- EP 1257092 A1

### Non-patent literature cited in the description

- **LILI CAO et al.** Distributed spectrum allocation via local bargaining. *SENSOR AND AD HOC COMMUNICATIONS AND NETWORKS, 2005. IEEE SECON 2005. 2005 SECOND ANNUAL IEEE COMMUNICATIONS SOCIETY CONFERENCE ON SANTA CLARA,* 26 September 2005, ISBN 978-0-7803-9011-9, 475-486